(19) Europäisches Patentamt
European Patent Office
Office européen des brevets

(11) EP 3 291 005 A1

(12) EUROPEAN PATENT APPLICATION
published in accordance with Art. 153(4) EPC

(43) Date of publication:
**07.03.2018 Bulletin 2018/10**

(21) Application number: **16789538.2**

(22) Date of filing: **27.04.2016**

(51) Int Cl.:
***G03B 35/00*** *(2006.01)* ***B41J 2/01*** *(2006.01)*
***B41M 5/00*** *(2006.01)* ***B41M 5/50*** *(2006.01)*
***B41M 5/52*** *(2006.01)*

(86) International application number:
**PCT/JP2016/063286**

(87) International publication number:
**WO 2016/178402 (10.11.2016 Gazette 2016/45)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **01.05.2015 JP 2015094423**

(71) Applicant: **FUJI-FILM Corporation**
**Minato-ku**
**Tokyo 106-8620 (JP)**

(72) Inventors:
- **MAKUTA, Toshiyuki**
  **Fujinomiya-shi**
  **Shizuoka 418-8666 (JP)**
- **CHE, Yanlong**
  **Fujinomiya-shi**
  **Shizuoka 418-8666 (JP)**
- **YOSHIDA, Masafumi**
  **Fujinomiya-shi**
  **Shizuoka 418-8666 (JP)**

(74) Representative: **Hoffmann Eitle**
**Patent- und Rechtsanwälte PartmbB**
**Arabellastraße 30**
**81925 München (DE)**

# (54) METHOD FOR MANUFACTURING LENTICULAR PRINTED MATTER AND LENTICULAR PRINTED MATTER

(57) Provided are a method of producing a lenticular printed material including: a step of forming a parallax picture, using a recording medium which includes a resin layer and a water-absorbing layer laminated on the resin layer, by applying aqueous ink which contains water and a colorant to the water-absorbing layer of the recording medium according to an ink jet system; and a step of bonding a lenticular lens onto a side of the water-absorbing layer where the parallax picture of the recording medium is formed, and a lenticular printed material produced by the method.

FIG. 1

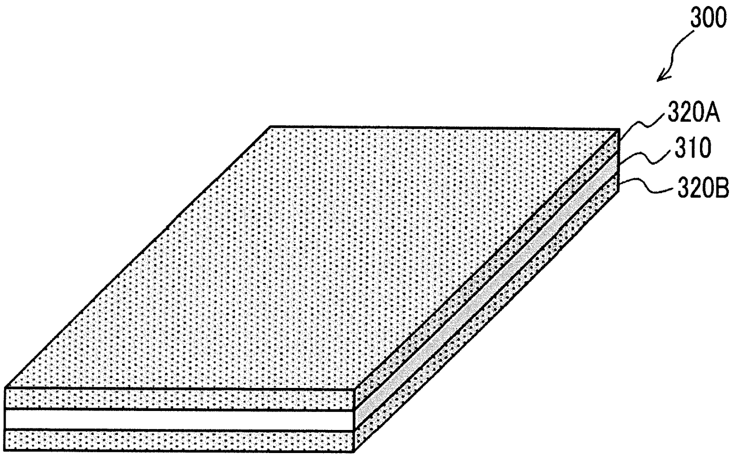


EP 3 291 005 A1

## Description

BACKGROUND OF THE INVENTION

1. Field of the Invention

The present invention relates to a method of producing a lenticular printed material; and a lenticular printed material.

2. Description of the Related Art

In the related art, a lenticular printed material obtained by combining a lenticular lens and a parallax picture (lenticular image) has been known as a printed material in which the display content is switched depending on a stereoscopic image and a viewing direction.

The lenticular printed material is produced by, for example, printing a parallax picture on paper and bonding a lenticular lens, formed by semicylindrical lenses being disposed in parallel, to the parallax picture or printing a parallax picture directly on a flat surface on the opposite side of a convex lens of the lenticular lens.

As printing of a parallax picture, offset printing has been typically used. However, in this case, a plate needs to be prepared and waste paper for color matching is generated.

In addition, a method of producing a lenticular printed material by forming a parallax picture according to an ink jet system has been suggested. In a case where a parallax picture is formed according to an ink jet system, preparation of a plate used for offset printing is unnecessary and generation of waste paper can be suppressed.

JP2010-237318A discloses a stereoscopic image printing device that forms a lenticular lens by superposing a transparent film used for forming a lenticular lens on paper on which a parallax picture is formed with 300 dots per inch (dpi) using four continuous ink jet heads, jetting ultraviolet curable ink onto the transparent film using the ink jet heads, and irradiating the transparent film with ultraviolet rays.

Further, for example, JP2009-58967A discloses a printing medium which includes a lenticular lens formed on a portion of one surface of a transparent base material; and paper such as ink jet paper on a surface (rear surface) on the opposite side of an extending portion of the base material which is not provided with a lenticular lens. Further, JP2009-58967A describes that a postcard whose image is changed depending on an angle can be prepared by applying ink to the rear surface of the extending portion of the printing medium to form a parallax picture and bending the image such that the image is disposed on the rear surface side (flat surface side) of the lenticular lens.

SUMMARY OF THE INVENTION

However, in a case where the method of forming a lenticular lens on a transparent film using an ultraviolet curable ink according to an ink jet method after the transparent film is laminated on paper on which a parallax picture has been formed according to the ink jet method as disclosed in JP2010-237318A is used, a special device for forming a lenticular lens becomes necessary, and thus a lenticular printed material cannot be easily produced.

Further, since the lenticular lens and paper are integrated with each other in advance in the case of the printing medium disclosed in JP2009-58967A, there is a restriction on positioning of the parallax picture and the lenticular lens in a case where the parallax picture is printed on paper at the extending portion and bent so that the parallax picture and the lenticular lens are bonded to each other, and a situation in which the positions of the parallax picture and the lenticular lens do not match is likely to occur. In addition, since the lenticular lens also passes through the inside of an ink jet device in a case where printing is performed on paper at the extending portion according to the ink jet method, there is a concern that the convex surface side of the lenticular lens is damaged.

An object of one embodiment of the present invention is to provide a method of producing a lenticular printed material which enables the lenticular printed material with high image quality and excellent switching of images to be easily produced; and a lenticular printed material produced by the method.

Specific means for achieving the above-described object includes the following aspects.

<1> A method of producing a lenticular printed material comprising: a step of forming a parallax picture, using a recording medium which includes a resin layer and a water-absorbing layer laminated on the resin layer, by applying aqueous ink which contains water and a colorant to the water-absorbing layer of the recording medium according to an ink jet system; and a step of bonding a lenticular lens onto a side of the water-absorbing layer of the recording medium where the parallax picture is formed.

<2> The method of producing a lenticular printed material according to <1>, further comprising: applying a treatment liquid which aggregates components in the aqueous ink to the water-absorbing layer of the recording medium before

the aqueous ink is applied thereto.

<3> The method of producing a lenticular printed material according to <1> or <2>, in which the aqueous ink contains particles.

<4> The method of producing a lenticular printed material according to any one of <1> to <3>, in which the aqueous ink is applied during the step of forming the parallax picture under conditions of a resolution of 1200 dpi or greater and a minimum liquid droplet size of 3 pl or less according to the ink jet system.

<5> The method of producing a lenticular printed material according to any one of <1> to <4>, in which the water-absorbing layer is a layer having voids.

<6> The method of producing a lenticular printed material according to any one of <1> to <5>, in which the water-absorbing layer is a layer containing particles.

<7> The method of producing a lenticular printed material according to any one of <1> to <6>, in which the ink jet system is a single pass system.

<8> A lenticular printed material which is produced by the method of producing a lenticular printed material according to any one of <1> to <7>.

<9> A lenticular printed material comprising: a recording medium which includes a resin layer and a water-absorbing layer laminated on the resin layer and on which a parallax picture is formed by applying aqueous ink containing water and a colorant to the water-absorbing layer of the recording medium according to an ink jet system; and a lenticular lens which is bonded onto a side of the water-absorbing layer of the recording medium where the parallax picture is formed.

<10> The lenticular printed material according to <9>, in which the water-absorbing layer is a layer having voids.

<11> The lenticular printed material according to <9> or <10>, in which the water-absorbing layer is a layer containing particles.

According to an aspect of the present invention, it is possible to provide a method of producing a lenticular printed material which enables the lenticular printed material with high image quality and excellent switching of images to be easily produced; and a lenticular printed material produced by the method.

BRIEF DESCRIPTION OF THE DRAWINGS

Fig. 1 is a view schematically illustrating an example of a structure of synthetic paper which can be used as a recording medium according to an embodiment of the present invention.

Fig. 2 is a view schematically illustrating an example of a structure of exclusive paper for ink jet which can be used as a recording medium according to an embodiment of the present invention.

Fig. 3 is a view schematically illustrating an example of an overall configuration of an ink jet recording device which can be used in an embodiment of the present invention.

Fig. 4 is a block diagram showing the schematic configuration of a control system of the ink jet recording device.

Fig. 5 is a bottom view illustrating an example of a main portion structure of a head.

Fig. 6 is an enlarged view illustrating a partially enlarged portion of the head illustrated in Fig. 5.

Fig. 7 is a view schematically illustrating a partially enlarged portion of a lenticular printed material produced in an example.

DESCRIPTION OF THE PREFERRED EMBODIMENTS

Hereinafter, an embodiment of the present invention will be described in detail with reference to the accompanying drawings. Further, the reference numerals in the following description may be omitted.

In the following description of the present specification, the concept of "(meth)acrylate" comprehensively includes both of "acrylate" and "methacrylate" and the concept of "(meth)acrylic acid" comprehensively includes both of "acrylic acid" and "methacrylic acid".

A method of producing a lenticular printed material according to an embodiment of the present invention includes a step of forming a parallax picture (hereinafter, also referred to as a "parallax picture forming step"), using a recording medium which includes a resin layer and a water-absorbing layer laminated on the resin layer, by applying aqueous ink (hereinafter, also simply referred to as "ink") which contains water and a colorant to the water-absorbing layer of the recording medium according to an ink jet system; and a step of bonding a lenticular lens (hereinafter, also referred to as a "bonding step") onto a side of the water-absorbing layer where the parallax picture of the recording medium is formed.

In a case where a parallax picture is formed on paper such as coated paper according to an ink jet system and then the parallax picture and a lenticular lens are bonded to each other, the paper is deformed because the paper

absorbs ink so that the position of the parallax picture is deviated from the position of the lenticular lens in some cases. In the lenticular printed material in which the position of the parallax picture is deviated from the position of the lenticular lens, switching (changing) of printed images is poor in a case of performing observation from a predetermined angle and images are unlikely to be displayed alone.

According to the embodiment of the present invention, a parallax picture is formed by applying aqueous ink that contains water and a colorant using a recording medium including a resin layer and a water-absorbing layer laminated on the resin layer according to an ink jet system. The moisture contained in the ink permeates into the water-absorbing layer in a case where the aqueous ink is applied to the water-absorbing layer of the recording medium, and the colorant is held by the water-absorbing layer. Since the moisture absorbed by the water-absorbing layer does not pass through the resin layer, the moisture does not permeate into original paper even in a case where the original paper (base paper) is disposed on a portion of a base material of the resin layer on the opposite side of the water-absorbing layer. Accordingly, deformation of the recording medium caused by the absorption of moisture is suppressed. As the result, the lenticular printed material in which the position of the parallax picture is unlikely to be deviated from the position of the lenticular lens in a case where the lenticular lens is bonded to the recording medium after the parallax picture has been formed and the switching of images is excellent is considered to be obtained.

Hereinafter, the parallax picture forming step and the bonding step according to the embodiment of the present invention, and constituent materials used in each step will be described in detail.

[Parallax picture forming step]

In the parallax picture forming step, a parallax picture is formed, using a recording medium which includes a resin layer and a water-absorbing layer laminated on the resin layer, by applying aqueous ink which contains water and a colorant to the water-absorbing layer of the recording medium according to an ink jet system.

<Recording medium>

The recording medium used in the embodiment of the present invention will be described. According to the present embodiment of the present invention, the recording medium which includes a resin layer and a water-absorbing layer laminated on the resin layer is used.

The resin layer of the recording medium used in the embodiment of the present invention is mainly formed of a resin and is not modified even in a case of being brought into contact with water contained in the aqueous ink. It is preferable that the resin layer is a layer that forms at least a part of the base material of the recording medium.

In addition, it is preferable that the water-absorbing layer has at least one of voids or particles so that a porous structure is formed in the layer. Further, the porous structure formed by the water-absorbing layer having voids means that fine holes are formed in a film or the like that forms the water-absorbing layer and the porous structure formed by the water-absorbing layer having particles means that gaps are formed between particles contained in the water-absorbing layer.

Specifically, synthetic paper having a structure in which the water-absorbing layer is laminated on a resin base material or exclusive paper for ink jet having a structure in which the water-absorbing layer is laminated on the resin layer of the base material formed of original paper and the resin layer can be suitably used as the recording medium.

(Synthetic paper)

Fig. 1 is a view schematically illustrating an example of the structure of synthetic paper which can be used as the recording medium according to the embodiment of the present invention. Synthetic paper 300 illustrated in Fig. 1 has a structure in which water-absorbing layers 320A and 320B are laminated on both surfaces of a resin base material 310.

- Resin base material -

The resin base material 310 is mainly formed of a resin, supports the water-absorbing layers, and functions as a layer maintaining the intensity as synthetic paper.

The resin forming the resin base material is not particularly limited as long as the water-absorbing layers can be supported by the resin base material, and examples thereof include a polyolefin resin such as polypropylene or polyethylene, a polyester resin such as polyethylene terephthalate (PET), a polycarbonate resin, a polyvinyl chloride resin, and a nylon resin.

The thickness of the resin base material is not limited, but can be set to be in a range of 50 $\mu$m to 500 $\mu$m from the viewpoints of having the strength as the support that supports the water-absorbing layers, weight reduction, productivity, and suppression of the production cost.

- Water-absorbing layers -

The water-absorbing layers 320A and 320B are paper-like layers which have a plurality of voids, absorb the moisture contained in the aqueous ink in a case where the aqueous ink for forming a parallax picture is applied, and hold the colorant contained in the aqueous ink. The water-absorbing layers may contain, for example, the same resin as the resin contained in the resin base material.

The method of producing the synthetic paper 300 having the structure illustrated in Fig. 1 is not particularly limited, but, for example, a water-absorbing layer having a plurality of voids can be formed according to a biaxially stretched film system. Specifically, a resin composition that contains a resin and inorganic particles is melted and extruded as a raw material for forming the resin base material and is longitudinally stretched to obtain a uniaxially stretched film for forming a resin base material. Further, a resin composition that contains a resin and inorganic particles is melted and extruded as a raw material for forming a water-absorbing layer, laminated on both surfaces of the uniaxially stretched film for forming a resin base material which has been longitudinally stretched to form a three-layered structure, and then cross-direction stretched. In this manner, the resin base material is made into a layer having excellent mechanical characteristics such as strength and rigidity by being stretched and aligned in the machine direction and the transverse direction. Further, the water-absorbing layer to be disposed on the front and rear surfaces of the recording medium is made into a paper-like layer that is stretched and aligned only in the transverse direction. Further, voids starting from inorganic particles are formed in each layer during the stretching step, and accordingly synthetic paper formed by water-absorbing layers having voids being laminated on both surfaces of the resin base material is obtained.

In the synthetic paper having such a structure, light is irregularly reflected due to the plurality of voids and high whiteness and opacity are obtained. Further, the formation of voids results in a decrease in specific gravity and contributes to weight reduction. In a case of the resin base material, voids having substantially uniform shapes are formed in the machine direction and the transverse direction because the resin base material is stretched in the machine direction and the transverse direction. Meanwhile, in a case of the water-absorbing layer, voids which are longer in the transverse direction than the voids formed in the resin base material are formed because the water-absorbing layer is stretched only in the transverse direction. In a case where the size of voids formed in the water-absorbing layer is greater than that of voids formed in the resin base material, the moisture is rapidly absorbed by the water-absorbing layer in a case where the aqueous ink is applied to the water-absorbing layer.

Examples of resins for forming the resin base material and the water-absorbing layer include a polyolefin resin such as polypropylene or polyethylene, a polyester resin such as polyethylene terephthalate (PET), a polycarbonate resin, a polyvinyl chloride resin, and a nylon resin. Further, examples of inorganic particles contained in each layer include white inorganic pigments such as light calcium carbonate, heavy calcium carbonate, kaolin, talc, calcium sulfate, barium sulfate, titanium dioxide, zinc oxide, zinc sulfide, zinc carbonate, satin white, aluminum silicate, diatomaceous earth, calcium silicate, magnesium silicate, synthetic amorphous silica, colloidal silica, colloidal alumina, pseudoboehmite, aluminum hydroxide, alumina, lithopone, zeolite, hydrated halloysite, magnesium carbonate, and magnesium hydroxide.

The thickness of the water-absorbing layer is not limited, but, for example, can be set to be in a range of 10 $\mu$m to 100 $\mu$m from the viewpoints of rapidly absorbing the moisture in a case where the aqueous ink is applied to the water-absorbing layer, and the weight reduction, the productivity, and suppression of the production cost. The thickness of the resin base material can be set to be in a range of 30 $\mu$m to 480 $\mu$m.

In the synthetic paper, the water-absorbing layer may be formed on both surfaces or laminated on only one surface of the resin base material.

Further, voids are not necessarily formed in the resin base material, and synthetic paper in which the water-absorbing layer is formed on at least one surface of the resin base material which does not have voids may be used. For example, in a case where the melting and extruding step and the stretching step are performed using a resin composition that does not contain inorganic particles as the raw material forming the resin base material in a case where synthetic paper having the structure illustrated in Fig. 1 is prepared according to a biaxially stretched film system, synthetic paper formed by the porous water-absorbing layer and the resin base material that does not have voids being laminated on each other can be produced.

According to the embodiment of the present invention, commercially available synthetic paper including a water-absorbing layer and a resin base material may be used as the recording medium.

Specific examples of the commercially available synthetic paper which can be used in the embodiment of the present invention include AQUAYUPO (registered trademark) LAR75, LAR95, YUPOJET (registered trademark) VJFP120, VJFP170, VJFP190, YUPOCOAT for printing (registered trademark) VIF70, VIF90, VIF120, VIF140, VIS90, VIS120, VSF90, VSF120, VSS90, VSS120, VIFW100, AND VIFW115 (all manufactured by YUPO CORPORATION).

Further, synthetic paper that includes a porous water-absorbing layer having voids as a surface layer, such as

TESLIN (registered trademark, manufactured by PPG Industries), PEPA (manufactured by UKC Holdings Corporation), or CRISPR (registered trademark, manufactured by TOYOBO CO., LTD.) can be also used.

(Exclusive paper for ink jet)

According to the embodiment of the present invention, exclusive paper for ink jet which has a structure in which a water-absorbing layer is laminated on a resin layer of a base material formed of original paper and a resin layer can be also used as the recording medium.

Fig. 2 schematically illustrates an example of the structure of the exclusive paper for ink jet which can be used as the recording medium according to the embodiment of the present invention. Exclusive paper 400 for ink jet illustrated in Fig. 2 has a layer structure including a base material 410 having resin layers 404 and 406 formed on both surfaces of original paper 402 and a water-absorbing layer 420 laminated on one surface side (on the resin layer 404) of the base material 410. The water-absorbing layer 420 contains a plurality of particles and a resin functioning as a binder, and a porous structure is formed by gaps between particles.

The moisture in the aqueous ink is absorbed by the water-absorbing layer during application of the aqueous ink to the water-absorbing layer side in a case where the recording medium is exclusive paper for ink jet having such a layer structure, the deformation of paper can be effectively suppressed because the moisture does not pass through the resin layer and thus does not reach the inner original paper.

Further, the resin layer is not necessarily provided on both surfaces of the original paper 402. The resin layer 404 may be disposed at least between the original paper 402 and the water-absorbing layer 420.

Hereinafter, the exclusive paper for ink jet which can be used as the recording medium in the embodiment of the present invention will be described in detail.

- Base material -

The base material 410 forming the exclusive paper for ink jet which can be used in the embodiment of the present invention is formed such that the surface on a side (in other words, one side or both sides of the original paper) where at least the water-absorbing layer 420 of the original paper 402 is formed is coated with a polyolefin resin layer.

The layer thickness of the polyolefin resin layer on a side where the water-absorbing layer is formed is preferably in a range of 20 μm to 60 μm and more preferably in a range of 35 μm to 60 μm. From the viewpoints of improving the productivity and reducing the cost, it is preferable that the layer thickness of the polyolefin resin layer is in the above-described range.

In the above-described range, an embodiment in which the layer thickness of the polyolefin resin layer on a side where the water-absorbing layer is formed is set to be in a range of 40 μm to 55 μm is preferable.

Examples of a method of providing the polyolefin resin layer on one or both surfaces of the original paper include melt extrusion, wet lamination, and dry lamination. Among these, melt extrusion is preferable. Specific examples of the melt extrusion method (also referred to as an extrusion coating method) include an extrusion lamination method of forming a resin film such that original paper is coated with the resin film at a nip point between a nip roll and a cooling roll using a polyolefin resin extruded from an extrusion die on the traveling original paper and laminating the resin film on the original paper by nipping and compression-bonding the resin film.

In a case where a polyolefin resin layer is formed by melt extrusion, it is desirable that a pre-treatment is performed on the original paper in order to strengthen adhesion between the original paper and the polyolefin resin layer before melt extrusion is performed on the original paper of the polyolefin resin layer.

Examples of the pre-treatment include an acid etching treatment using a chromic acid sulfate mixed solution, a flame treatment using gas flame, an ultraviolet irradiation treatment, a corona discharge treatment, a glow discharge treatment, and an anchor coat treatment such as alkyl titanate, and the pre-treatment can be freely selected from among these. Particularly from the viewpoint of convenience, a corona discharge treatment is preferable. In a case where a corona discharge treatment is performed, it is preferable that the treatment is performed such that the contact angle between the original paper and water is set to be 70° or less.

Examples of an anchor coat agent which can be used in the anchor coat treatment include an organic titanium-based anchor coat agent, an isocyanate-based (urethane-based) anchor coat agent, a polyethylene imine-based anchor coat agent, and a polybutadiene-based anchor coat agent. Specific examples of the organic titanium-based anchor coat agent include alkyl titanate such as tetraisopropyl titanate, tetrabutyl titanate, or tetrastearyl titanate; titanium acylate such as butoxy titanium stearate; and titanium chelate such as titanium acetyl acetonate. Further, examples of the isocyanate-based (urethane-based) anchor coat agent include toluene diisocyanate (TDI), diphenylmethane diisocyanate (MDI), hexamethylene diisocyanate (HMDI), xylylene diisocyanate (XDI), and isophorone diisocyanate (IPDI).

Particularly, in a case where a polyolefin layer is formed according to an extrusion lamination method, a polyolefin resin layer can be suitably formed by melting and extruding a polyolefin resin on original paper and passing the original

paper through a space between an elastic roll and a cooling roll with a nip pressure of 2 MPa or greater for lamination.

Fine pores (hereinafter, referred to as craters) are occasionally formed on the surface of the polyolefin resin layer formed on the original paper, but the appearance is impaired and the glossiness decreases in a case where the number of craters is large. The cause of generation of craters is considered to be affected by entrained air generated in a case where the cooling roll rotates so that the entrained air is accumulated in an area between the resin film and the cooling roll and, as a result, a concave depression is formed in the resin film. The craters are likely to be generated in a case where the nip pressure between the elastic roll and the cooling roll is small, the line speed during lamination is high, the thickness of the resin film is small, the jetting temperature of a resin from the extrusion die is low, and the surface roughness of the original paper is high.

The generation of craters is suppressed and the leveling with smoothness and excellent glossiness can be ensured by setting the nip pressure between the elastic roll and the cooling roll to be 2 MPa or greater. The nip pressure is preferably 3 MPa or greater and the upper limit of the nip pressure is desirably 8 MPa.

As the polyolefin resin layer provided on the original paper, for example, a homopolymer of $\alpha$-olefins such as polyethylene or polypropylene, a mixture of these various kinds of polymers, and a random copolymer of ethylene and vinyl alcohol are suitable.

As the polyethylene, for example, low density polyethylene (LDPE), high density polyethylene (HDPE), and linear low density polyethylene (L-LDPE) can be used alone or as a mixture. In a case of using polyethylene, the melt flow rate of polyethylene before being processed is measured in conformity with JIS 7201 and is preferably in a range of 1.2 g/10 min to 12 g/10 min.

In a case where a layer structure provided with a polyolefin resin layer containing polyolefin (for example, polyethylene), for example, a polyethylene resin layer is employed, it is preferable that the polyethylene resin layer on a side where the water-absorbing layer of the original paper is formed in a case where exclusive paper for ink jet is prepared is a resin layer obtained by adding rutile type or anatase type titanium oxide, a fluorescent brightening agent, or ultramarine to the polyethylene resin so that the opacity, the whiteness, and the hue are adjusted. The content of titanium oxide in the polyethylene resin layer is preferably in a range of 3% by mass to 20% by mass and more preferably in a range of 4% by mass to 13% by mass with respect to the mass of polyethylene.

Further, for the purpose of providing adhesiveness between the polyolefin resin layer and the water-absorbing layer used for recording an image, an undercoat layer can be provided on the polyolefin resin layer. As the undercoat layer, layers formed of aqueous polyester, gelatin, and polyvinyl alcohol (PVA) are preferable and the thickness of the undercoat layer is preferably in a range of 0.01 $\mu$m to 5 $\mu$m.

In a case where at least a portion of one surface or both surfaces on which the water-absorbing layer is formed is coated with polyolefin (for example, polyethylene), the original paper of exclusive paper for ink jet which can be used in the embodiment of the present invention can be used as glossy paper which has a polyolefin resin-coated paper (for example, a polyethylene-coated paper) as a support. Further, in a case where polyolefin such as polyethylene is laminated on original paper by being melted and extruded, the support can be used in the form in which a mat surface or a silk surface obtained by performing a so-called embossing treatment and using a typical photographic printing paper is formed.

In a case where the water-absorbing layer is formed on only one surface of the original paper of exclusive paper for ink jet according to the embodiment of the present invention, a back coat layer can be provided on a surface on a side opposite to the side where the water-absorbing layer is formed. The back coat layer can be formed by adding or containing a white pigment, an aqueous binder, and other components.

Examples of the white pigment which can be added to the back coat layer include white inorganic pigments such as light calcium carbonate, heavy calcium carbonate, kaolin, talc, calcium sulfate, barium sulfate, titanium dioxide, zinc oxide, zinc sulfide, zinc carbonate, satin white, aluminum silicate, diatomaceous earth, calcium silicate, magnesium silicate, synthetic amorphous silica, colloidal silica, colloidal alumina, pseudoboehmite, aluminum hydroxide, alumina, lithopone, zeolite, hydrated halloysite, magnesium carbonate, and magnesium hydroxide; and organic pigments such as a styrene-based plastic pigment, an acrylic plastic pigment, polyethylene, microcapsules, a urea resin, and a melamine resin.

Examples of the aqueous binder which can be added to the back coat layer include water-soluble polymers such as a styrene-maleate copolymer, a styrene-acrylate copolymer, polyvinyl alcohol, silanol-modified polyvinyl alcohol, starch, cationized starch, casein, gelatin, carboxymethyl cellulose, hydroxyethylene cellulose, and polyvinylpyrrolidone; and water-dispersible polymers such as styrene-butadiene latex and an acrylic emulsion.

Examples of other components which can be added to the back coat layer include an anti-foaming agent, a foam inhibitor, a dye, a fluorescent brightening agent, a preservative, and a water resistant additive.

- Water-absorbing layer -

Next, the water-absorbing layer that forms a surface of exclusive paper for ink jet, on which an image is formed, will be described in detail.

The exclusive paper for ink jet which can be used in the embodiment of the present invention includes the water-absorbing layer 420 on the resin layer 404 that forms the base material 410 and may include other layers as necessary.

The water-absorbing layer can be formed of a water-soluble resin and particles and can be preferably formed using a water-soluble resin, particles, a cross-linking agent capable of cross-linking a water-soluble resin, a mordant as necessary, and other components (a surfactant and the like).

In the present specification, the term "water-soluble" indicates a property in which a substance is dissolved in water at a certain concentration or greater. It is preferable that the term "water-soluble" indicates a property in which 5 g (more preferably 10 g or greater) or greater of a substance is dissolved in 100 g of water at 25°C.

The water-absorbing layer has a porous structure by containing particles and thus water absorption properties are improved. Particularly, in a case where the content of solid contents in particles of the water-absorbing layer is 50% by mass or greater and more preferably greater than 60% by mass, the porous structure can be excellent so that the water absorption properties can be further improved. Here, the content of solid contents in particles of the water-absorbing layer indicates the content calculated based on the components other than water in the composition that forms the water-absorbing layer.

The void volume of the water-absorbing layer is preferably in a range of 50% to 75% and more preferably in a range of 60% to 70%. In a case where the void volume of the water-absorbing layer is 50% or greater, the water absorption properties in a case where the aqueous ink is applied become sufficient. Further, in a case where the void volume thereof is 75% or less, it is possible to suppress loss of particles from the water-absorbing layer.

Further, from the viewpoint of water absorption properties, the layer thickness of the water-absorbing layer is preferably in a range of 20 μm to 40 μm.

- Particles -

Any of organic particles and inorganic particles may be used as the particles contained in the water-absorbing layer.

Preferred examples of the organic particles include polymer particles obtained by emulsion polymerization, microemulsion polymerization, soap-free polymerization, seed polymerization, dispersion polymerization, and suspension polymerization. Specific examples thereof include powder of polyethylene, polypropylene, polystyrene, polyacrylate, polyamide, a silicone resin, and a phenol resin, powder of a natural polymer or the like, latex-like polymer particles, and emulsion-like polymer particles.

Examples of the inorganic particles include silica particles, colloidal silica, titanium dioxide, barium sulfate, calcium silicate, zeolite, kaolinite, halloysite, mica, talc, calcium carbonate, magnesium carbonate, calcium sulfate, pseudoboehmite, zinc oxide, zinc hydroxide, alumina, aluminum silicate, calcium silicate, magnesium silicate, zirconium oxide, zirconium hydroxide, cerium oxide, lanthanum oxide, and yttrium oxide.

From the viewpoints of water absorption properties and image stability, inorganic particles are preferable. From the viewpoint of forming an excellent porous structure, silica particles, colloidal silica, alumina particles, and pseudoboehmite are preferable. As the particles, primary particles may be used or secondary particles formed by a plurality of primary particles being aggregated may be used.

The average primary particle diameter of the particles contained in the water-absorbing layer is preferably 2 μm or less and more preferably 200 nm or less.

Typically, silica particles are roughly classified into wet method particles and dry method (gas phase method) particles according to the production method thereof. As the wet method, a method of obtaining hydrous silica by generating active silica through acid decomposition of silicate, appropriately polymerizing the active silica, and aggregating and settling the polymerized silica is the mainstream. In addition, as the gas phase method, a method of obtaining anhydrous silica using a method of performing high temperature gas phase hydrolysis on silicon halide (flame hydrolysis method) and a method of heating, reducing, vaporizing silica sand and coke in an electric furnace using an arc and then oxidizing the resultant in air (arc method) is the mainstream. Further, the term "gas phase method silica" indicates anhydrous silica particles obtained by a gas phase method. As the silica particles which can be contained in the water-absorbing layer, gas phase method silica particles are particularly preferable.

The gas phase method silica and hydrous silica have different properties and are different from each other in terms of the density of a silanol group on the surface and the presence or absence of holes. The gas phase method silica is suitable for forming a three-dimensional structure with a high void volume. The reason thereof is not clear, but the density of the silanol group on the surface of particles is in a range of 5 particles/$nm^2$ to 8 particles/$nm^2$, which is high, and silica particles are densely aggregated easily in a case of hydrous silica. On the contrary, in a case of gas phase method silica, since the density of the silanol group on the surface of particles is in a range of 2 particles/$nm^2$ to 3 particles/$nm^2$, which is low, the silica particles are sparsely flocculated. As the result, it is assumed that the gas phase method silica has a structure with a high void volume.

Since the gas phase method silica has a particularly large specific surface area, ink absorption properties and holding efficiency are excellent. Further, since the refractive index is small, the transparency can be imparted to the water-absorbing layer in a case where dispersion is performed up to an appropriate particle diameter. Therefore, as the recording medium, a high color density and excellent color developability are obtained. It is important that the water-absorbing layer be transparent from the viewpoint of obtaining a high color density and excellent coloring gloss as the recording medium.

The average primary particle diameter of the gas phase method silica is preferably 30 nm or less, more preferably 20 nm or less, still more preferably 10 nm or less, and particularly preferably 3 nm to 10 nm. In the gas phase method silica, since particles are likely to adhere to each other due to hydrogen bonding of the silanol group, a structure with a high void volume can be suitably formed in a case where the average primary particle diameter is 30 nm or less and the water absorption properties can be effectively improved.

The silica particles may be used in combination with other particles described above. In a case where other particles and the gas phase method silica are used in combination, the content of the gas phase method silica in all particles is preferably 30% by mass or greater and more preferably 50% by mass or greater.

As the inorganic particles, alumina particles, an alumina hydrate, a mixture of these, and a composite of these are also preferable. Among these, an alumina hydrate is preferable from the viewpoints of satisfactorily absorbing water and fixing a colorant, and pseudoboehmite ($Al_2O_3{\cdot}nH_2O$) is particularly preferable. Various forms of alumina hydrates can be used, but it is preferable that sol-like boehmite is used as a raw material because a smooth layer is easily obtained.

In the pore structure of pseudoboehmite, the average pore radius is preferably in a range of 1 nm to 25 nm and more preferably in a range of 2 nm to 10 nm. Further, the pore volume is preferably in a range of 0.3 ml/g to 2.0 ml/g and more preferably in a range of 0.5 ml/g to 1.5 ml/g. Here, since the pore radius and pore volume are measured by a nitrogen absorption and desorption method, the measurement can be performed using a gas absorption and desorption analyzer (for example, "OMNISORP 369" (trade name, manufactured by Beckman Coulter, Inc.)).

Among alumina particles, gas phase method alumina particles having a large specific surface area are preferable.

The average primary particle diameter of the gas phase method alumina particles is preferably 50 nm or less and more preferably 20 nm or less.

In addition, colloidal silica having an average primary particle diameter of 50 nm or less I also preferably exemplified.

The above-described particles can be preferably used even in the forms disclosed in JP1998-81064A (JP-H10-81064A), JP1998-119423A (JP-H10-119423A), JP1998-157277A (JP-H10-157277A), JP1998-217601A (JP-H10-217601A), JP1999-348409A (JP-H11-348409A), JP2001-138621A, JP2000-43401A, JP2000-211235A, JP2000-309157A, JP2001-96897A, JP2001-138627A, JP1999-91242A (JP-H11-91242A), JP1996-2087A (JP-H08-2087A), JP1996-2090A (JP-H08-2090A), JP1996-2091A (JP-H08-2091A), JP1996-2093A (JP-H08-2093A), JP1996-174992A (JP-H08-174992A), JP1999-192777A (JP-H11-192777A), and JP2001-301314A.

- Water-soluble resin (water-soluble polymer) -

It is preferable that the water-absorbing layer contains a water-soluble resin (water-soluble polymer), and examples of the water-soluble resin include a polyvinyl alcohol-based resin which is a resin containing a hydroxy group as a hydrophilic constitutional unit [such as polyvinyl alcohol (PVA), acetoacetyl-modified polyvinyl alcohol, cation-modified polyvinyl alcohol, anion-modified polyvinyl alcohol, silanol-modified polyvinyl alcohol, or polyvinyl acetal], a cellulose-based resin [such as methyl cellulose (MC), ethyl cellulose (EC), hydroxyethyl cellulose (HEC), carboxymethyl cellulose (CMC), hydroxypropyl cellulose (HPC), hydroxyethyl methyl cellulose, or hydroxypropyl methyl cellulose], chitins, chitosans, starch, a resin having an ether bond [such as polyethylene oxide (PEO), polypropylene oxide (PPO), polyethylene glycol (PEG), or polyvinyl ether (PVE)], and a resin containing a carbamoyl group [such as polyacrylamide (PAAM), polyvinylpyrrolidone (PVP), or polyacrylic acid hydrazide]. Among these, a polyvinyl alcohol-based resin, a cellulose-based resin, a resin having an ether bond, a resin containing a carbamoyl group, a resin containing a carboxy group, and gelatins are preferable.

Further, polyacrylate containing a carboxy group as a dissociable group, a maleic acid resin, alginate, and gelatins can be also exemplified.

Among these, a polyvinyl alcohol-based resin is particularly preferable.

Examples of the polyvinyl alcohol include those described in JP1992-52786B (JP-H04-52786B), JP1993-67432B (JP-H05-67432B), JP1995-29479B (JP-H07-29479B), JP2537827B, JP1995-57553B (JP-H07-57553A), JP2502998B, JP3053231B, JP1988-176173A (JP-S63-176173A), JP2604367B, JP1995-276787A (JP-H07-276787A), JP1997-207425A (JP-H09-207425A), JP1999-58941A (JP-H11-58941A), JP2000-135858A, JP2001-205924A, JP2001-287444A, JP1987-278080A (JP-S62-278080A), JP1997-39373A (JP-H09-39373A), JP2750433B, JP2000-158801A, JP2001-213045A, JP2001-328345A, JP1996-324105A (JP-H08-324105A), and

JP1999-348417A (JP-H11-348417A).

The water-soluble resin contained in the water-absorbing layer may be used alone or in combination of two or more kinds thereof. The content of the water-soluble resin is preferably in a range of 9% by mass to 40% by mass and more preferably in a range of 12% by mass to 33% by mass with respect to the total mass of the solid contents in the water-absorbing layer.

As the water-soluble resin and the particles mainly forming the water-absorbing layer of exclusive paper for ink jet, respectively a single material or a mixture of a plurality of materials may be used.

Further, from the viewpoint of maintaining transparency, the type of water-soluble resin to be combined with particles, particularly, silica particles become important. In a case where gas phase method silica is used as the particles, a polyvinyl alcohol-based resin is preferable as the water-soluble resin. Among the examples of the polyvinyl alcohol-based resin, a polyvinyl alcohol-based resin having a saponification degree of 70% to 100 is more preferable and a polyvinyl alcohol-based resin having a saponification degree of 80% to 99.5% is more preferable.

Since a polyvinyl alcohol-based resin contains a hydroxyl group in the structural unit thereof and the hydroxyl group and a silanol group of the surface of silica particles form a hydrogen bond, a three-dimensional network structure having secondary particles of silica particles as a network chain unit is easily formed. It is considered that a water-absorbing layer having a porous structure with a high void volume and sufficient strength is formed because of the formation of the three-dimensional network structure.

In a case where the aqueous ink is applied to the water-absorbing layer having the porous structure obtained by the above-described manner according to the ink jet system, the moisture in the applied aqueous ink is rapidly taken into the water-absorbing layer due to a capillary phenomenon, dots with excellent circularity without ink blurring can be formed on the recording medium.

Further, the polyvinyl alcohol-based resin may be used in combination with other water-soluble resins. In a case where other water-soluble resins and the polyvinyl alcohol-based resin are used in combination, the content of the polyvinyl alcohol-based resin in all water-soluble resins is preferably 50% by mass or greater and more preferably 70% by mass or greater.

- Content ratio between particles and water-soluble resin -

The mass ratio [PB ratio; = x/y] of a mass (x) of the particles to a mass (y) of the water-soluble resin in the water-absorbing layer greatly affects the film structure and the film hardness of the water-absorbing layer. In other words, the void volume, the pore volume, and the surface area (per unit mass) of the water-absorbing layer are increased in a case where the mass ratio (PB ratio) is increased, but the density and the strength tend to decrease.

The PB ratio (x/y) in the water-absorbing layer is preferably in a range of 1.5 to 10. In a case where the PB ratio is 10 or less, degradation of film hardness and occurrence of cracks during the drying, which are caused by the extremely large PB ratio, are suppressed. Further, in a case where the PB ratio is 1.5 or greater, since the PB ratio is extremely small, a decrease in void volume occurring in a case where gaps are blocked by the resin can be suppressed and degradation of water absorption properties of the water-absorbing layer can be suppressed.

Since the stress is occasionally applied to the exclusive paper for ink jet in a case where the exclusive paper for ink jet passes through a transport system of an ink jet printer, it is preferable that the water-absorbing layer has a sufficient film hardness. In a case where the exclusive paper for ink jet is cut into a sheet shape, it is preferable that the water-absorbing layer has a suffcient film hardness from the viewpoints of preventing cracking, peeling, and the like of the water-absorbing layer. In view of these points, the PB ratio is more preferably 5 or less. In addition, from the viewpoint of ensuring high-speed water absorption properties in the ink jet printer, the PB ratio is more preferably 2 or greater.

For example, in a case where a base material is coated with a coating solution obtained by sufficiently dispersing a water-soluble resin and gas phase method silica particles having an average primary particle diameter of 20 nm or less in an aqueous solution at a PB ratio (x/y) of 2 to 5 and then dried, a light-transmissive porous film (water-absorbing layer) in which a three-dimensional network structure having secondary particles of silica particles as a network chain is formed and the average pore diameter is 25 nm or less, the void volume is in a range of 50% to 80%, the pore specific volume is 0.5 ml/g or greater, and the specific surface area is 100 $m^2$/g or greater can be easily formed.

- Cross-linking agent -

It is preferable that the water-absorbing layer is a porous layer in which a coating layer containing particles and a water-soluble resin contains a cross-linking agent which can be obtained by cross-linking a water-soluble resin and which is cured by a cross-linking reaction between the cross-linking agent and the water-soluble resin.

It is preferable that a boron compound is used as a cross-linking agent for cross-linking of a water-soluble resin, particularly, a polyvinyl alcohol-based resin. Examples of the boron compound include borax, boric acid, borate (such as ortho borate, $InBO_3$, $ScBO_3$, $YBO_3$, $LaBO_3$, $Mg_3(BO_3)_2$, or $Co_3(BO_3)_2$, diborate (such as $Mg_2B_2O_5$ or $Co_2B_2O_5$),

metaborate (such as $LiBO_2$, $Ca(BO_2)_2$, $NaBO_2$, or $KBO_2$), tetraborate (such as $Na_2B_4O_7 \cdot 10H_2O$), pentaborate (such as $KB_5O_8 \cdot 4H_2O$, $Ca_2B_6O_{11} \cdot 7H_2O$, or $CsB_5O_5$). Among these, from the viewpoint that the cross-linking reaction proceeds rapidly, borax, boric acid, and borate are preferable and boric acid is particularly preferable.

As the cross-linking agent of the water-soluble resin, the following compounds other than the boron compound can be also used.

Examples thereof include an aldehyde-based compound such as formaldehyde, glyoxal, or glutaraldehyde; a ketone-based compound such as diacetyl or cyclopentanedione; an active halogen compound such as bis(2-chloroethylurea)-2-hydroxy-4,6-dichloro-1 ,3,5-triazine or 2,4-dichloro-6-S-triazine sodium salt; an active vinyl compound such as divinylsulfonic acid, 1,3-vinylsulfonyl-2-propanol, N,N'-ethylenebis(vinylsulfonylacetamide), or 1,3,5-triacryloyl-hexahydro-S-triazine; a N-methylol compound such as dimethylol urea or methylol dimethyl hydantoin; a melamine resin (such as methylol melamine or alkylated methylol melamine); an epoxy resin;
an isocyanate-based compound such as 1,6-hexamethylene diisocyanate; an aziridine-based compound described in US3017280A and US29833611A; a carboximide-based compound described in US3100704A; an epoxy-based compound such as glycerol triglycidyl ether; an ethyleneimino-based compound such as 1,6-hexamethylene-N,N'-bisethylene urea; a halogenated carboxyaldehyde-based compound such as mucochloric acid or mucophenoxychloric acid; a dioxane-based compound such as 2,3-dihydroxydioxane; a metal-containing compound such as titanium lactate, aluminum sulfate, chrome alum, potassium alum, zirconyl acetate, or chromium acetate; a polyamine compound such as tetraethylene pentamine; a hydrazide compound such as adipic acid dihydrazide; and low molecules or polymers containing two or more oxazoline groups.

The cross-linking agent may be used alone or in combination of two or more kinds thereof.

- Mordant -

In the embodiment of the present invention, for the purpose of further improving water resistance of an image and blurring resistance with time, it is preferable that the water-absorbing layer contains a mordant. As the mordant, any of an organic mordant such as a cationic polymer (cationic mordant) and an inorganic mordant such as a water-soluble metal compound can be used. Among these, an organic mordant is preferable and a cationic mordant is particularly preferable.

In a case where a mordant is present at least in an upper layer portion of the water-absorbing layer, the mordant interacts with a colorant (such as an anionic dye) in the aqueous ink, and thus the colorant is stabilized and water resistance and blurring resistance with time can be further improved.

As the cationic mordant, a polymer mordant containing primary to tertiary amino groups or a quaternary ammonium base as cationic functional groups is suitably used, but a cationic non-polymer mordant can be also used.

As the polymer mordant, a mordant obtained as a homopolymer (hereinafter, referred to as a "mordant monomer") of a monomer containing primary to tertiary amino groups or a quaternary ammonium base, a copolymer of a mordant monomer and another monomer (hereinafter, referred to as a "non-mordant polymer"), or a condensation polymer is preferable. Further, these polymer mordants can be used in the form of water-soluble polymers or water-dispersible latex particles.

Examples of the mordant monomer include trimethyl-p-vinylbenzylammonium chloride, trimethyl-m-vinylbenzylammonium chloride, triethyl-p-vinylbenzylammonium chloride, triethyl-m-vinylbenzylammonium chloride, N,N-dimethyl-N-ethyl-N-p-vinylbenzylammonium chloride, N,N-diethyl-N-methyl-N-p-vinylbenzylammonium chloride, N,N-dimethyl-N-n-propyl-N-p-vinylbenzylammonium chloride, N,N-dimethyl-N-n-octyl-N-p-vinylbenzylammonium chloride, N,N-dimethyl-N-benzyl-N-p-vinylbenzylammonium chloride, N,N-diethyl-N-benzyl-N-p-vinylbenzylammonium chloride, N,N-dimethyl-N-(4-methyl)benzyl-N-p-vinylbenzylammonium chloride, N,N-dimethyl-N-phenyl-N-p-vinylbenzylammonium chloride;
trimethyl-p-vinylbenzylammonium bromide, trimethyl-m-vinylbenzylammonium bromide, trimethyl-p-vinyolbenzylammonium sulfonate, trimethyl-m-vinylbenzylammonium sulfonate, trimethyl-p-vinylbenzylammonium acetate, trimethyl-m-vinylbenzylammonium acetate, N,N,N-triethyl-N-2-(4-vinylphenyl)ethylammonium chloride, N,N,N-triethyl-N-2-(3-vinylphenyl)ethylammonium chloride, N,N-diethyl-N-methyl-N-2-(4-vinylphenyl)ethylammonium chloride, N,N-diethyl-N-methyl-N-2-(4-vinylphenyl)ethylammonium acetate;
products quaternized with methyl chloride, ethyl chloride, methyl bromide, ethyl bromide, methyl iodide, or ethyl iodide of N,N-dimethylaminoethyl (meth)acrylate, N,N-diethylaminoethyl (meth)acrylate, N,N-dimethylaminopropyl (meth)acrylate, N,N-diethylaminopropyl (meth)acrylate, N,N-dimethylaminoethyl (meth)acrylamide, N,N-diethylaminoethyl (meth)acrylamide, N,N-dimethylaminopropyl (meth)acrylamide, and N,N-diethylaminopropyl (meth)acrylamide, a sulfonate formed by substituting these anions, an alkyl sulfonate, an acetate, and an alkyl carboxylate.

Specific examples of the compound include monomethyl diallyl ammonium chloride, trimethyl-2-(methacryloyloxy)ethyl ammonium chloride, triethyl-2-(methacryloyloxy)ethyl ammonium chloride, trimethyl-2-(acryloyloxy)ethyl ammonium chloride, triethyl-2-(acryloyloxy)ethyl ammonium chloride, trimethyl-3-(methacryloyloxy)propyl ammonium chloride, triethyl-3-(methacryloyloxy)propyl ammonium chloride, trimethyl-2-(methacryloylamino)ethyl ammonium chloride, triethyl-2-(methacryloylamino)ethyl ammonium chloride, trimethyl-2-(acryloylamino)ethyl ammonium chloride, triethyl-2-(acryloylamino)ethyl ammonium chloride, trimethyl-3-(methacryloylamino)propyl ammonium chloride, triethyl-3-(methacryloylamino)propyl ammonium chloride, trimethyl-3-(acryloylamino)propyl ammonium chloride, triethyl-3-(acryloylamino)propyl ammonium chloride;

N,N-dimethyl-N-ethyl-2-(methacryloyloxy)ethyl ammonium chloride, N,N-diethyl-N-methyl-2-(methacryloyloxy)ethyl ammonium chloride, N,N-dimethyl-N-ethyl-3-(acryloylamino)propyl ammonium chloride, trimethyl-2-(methacryloyloxy)ethyl ammonium bromide, trimethyl-3-(acryloylamino)propyl ammonium bromide, trimethyl-2-(methacryloyloxy)ethyl ammonium sulfonate, and trimethyl-3-(acryloylamino)propyl ammonium acetate.

In addition, as monomers which can be copolymerized, N-vinylimidazole, N-vinyl-2-methylimidazole, and the like are exemplified.

Further, allylamine, diallylamine, a derivative thereof, and a salt thereof can be used. Examples of such compounds include allylamine, allylamine hydrochloride, allylamine acetate, allylamine sulfate, diallylamine, diallylamine hydrochloride, diallylamine acetate, diallylamine sulfate, diallylmethylamine, and a salt thereof (as the salt, a hydrochloride, an acetate, a sulfate, or the like), diallylethylamine and a salt thereof (as the salt, a hydrochloride, an acetate, a sulfate, or the like), and a diallyldimethylammonium salt (as a counter anion of the salt, a chloride ion, an acetate ion, a sulfate ion, or the like). According to a general production method, the allylamine and the diallylamine derivative are polymerized in the form of a salt since the polymerizability thereof is degraded in the form of an amine and are desalted as necessary.

Further, a vinylamine unit is obtained through hydrolysis after polymerization using a polymerization unit such as N-vinylacetamide or N-vinylformamide and then made into a salt and can be used.

The non-mordant monomer indicates a monomer which does not contain a basic or cationic portion such as primary to tertiary amino groups and salts thereof or a quaternary ammonium base and does not show an interaction with a colorant (for example, a dye) in the aqueous ink or shows a substantially small interaction with the colorant.

Examples of the non-mordant monomer include (meth)acrylic acid alkyl ester; (meth)acrylic acid cycloalkyl ester such as (meth)acrylic acid cyclohexyl; (meth)acrylic acid aryl ester such as (meth)acrylic acid phenyl; aralkyl ester such as (meth)acrylic acid benzyl; aromatic vinyls such as styrene, vinyl toluene, and $\alpha$-methylstyrene; vinyl esters such as vinyl acetate, vinyl propionate, and vinyl versatate; allyl esters such as allyl acetate; a halogen-containing monomer such as vinylidene chloride or vinyl chloride; vinyl cyanide such as (meth)acrylonitrile; and olefins such as ethylene and propylene.

As the (meth)acrylic acid alkyl ester, (meth)acrylic acid alkyl ester in which the number of carbon atoms in an alkyl moiety is in a range of 1 to 18 is preferable, and specific examples thereof include methyl (meth)acrylate, ethyl (meth)acrylate, propyl (meth)acrylate, isopropyl (meth)acrylate, n-butyl (meth)acrylate, isobutyl (meth)acrylate, t-butyl (meth)acrylate, hexyl (meth)acrylate, octyl (meth)acrylate, 2-ethylhexyl (meth)acrylate, lauryl (meth)acrylate, and stearyl (meth)acrylate. Among these, methyl acrylate, ethyl acrylate, methyl methacrylate, ethyl methacrylate, and hydroxyethyl methacrylate are preferable. The non-mordant monomer may be used alone or in combination of two or more kinds thereof.

Further, preferred examples of the cationic mordant include polydiallyl dimethyl ammonium chloride, polymethacryloyloxyethyl-$\beta$-hydroxyethyldimethylammonium chloride, polyethyleneimine, polyallylamine and a derivative thereof, a polyamide-polyamine resin, cationized starch, a dicyandiamide formalin condensate, a dimethyl-2-hydroxypropylammonium salt polymer, polyamidine, polyvinylamine, a dicyan-based cation resin typified by a dicyandiamide-formalin polycondensate, a polyamine-based cation resin typified by a dicyanamide-diethylenetriamine polycondensate, an epichlorohydrin-dimethylamine addition polymer, a dimethyldiallylammonium chloride-$SO_2$ copolymer, a diallylamine salt-$SO_2$ copolymer, a (meth)acrylate-containing polymer containing a quaternary ammonium base-substituted alkyl group in an ester moiety, and a styryl type polymer containing a quaternary ammonium base-substituted alkyl group.

As polyallylamine or a derivative thereof, various known allylamine polymers and derivatives thereof can be used. Examples of such derivatives include salts of polyallylamine and an acid (as the acid, an inorganic acid such as hydrochloric acid, sulfuric acid, phosphoric acid, or nitric acid; an organic acid such as methanesulfonic acid, toluenesulfonic acid, acetic acid, propionic acid, cinnamic acid, or (meth)acrylic acid; a combination of these; or a portion of allylamine made into a salt), a derivative obtained by a polymer reaction of polyallylamine, and a copolymer of polyallylamine and another copolymerizable monomer (specific examples of the monomer include (meth)acrylic acid esters, styrenes, (meth)amides, acrylonitrile, and vinyl esters).

Among the cationic mordants, a diallyl dialkyl cationic polymer is preferable and a diallyl dimethyl cationic polymer is particularly preferable. In addition, from the viewpoints of dispersibility and particularly suppressing thickening, as the cationic mordant, a cationic polymer having a weight-average molecular weight of 60000 or less is preferable and a cationic polymer having a weight-average molecular weight of 40000 or less is particularly preferable.

Further, the cationic mordant is useful as a dispersant of the above-described particles.

Further, the concentration of sulfate ions in a coating solution for forming a water-absorbing layer is preferably 1.5% by mass or less from the viewpoint of suppressing thickening of a liquid. Since the sulfate ions are contained in a

polymerization initiator at the time of producing a cationic polymer and remains in a polymer, it is desirable to use a cationic mordant formed using a polymerization initiator which does not discharge sulfate ions.

Examples of the inorganic mordant include polyvalent water-soluble metal salts and hydrophobic metal salt compounds. Specific examples thereof include salts or complexes of metals selected from magnesium, aluminum, calcium, scandium, titanium, vanadium, manganese, iron, nickel, copper, zinc, gallium, germanium, strontium, yttrium, zirconium, molybdenum, indium, barium, lanthanum, cerium, praseodymium, neodymium, samarium, europium, gadolinium, dysprosium, erbium, ytterbium, hafnium, tungsten, and bismuth.

Among the inorganic mordants, an aluminum-containing compound, a titanium-containing compound, a zirconium compound, and metal compounds (salts or complexes) of Group IIIB series in the periodic table of elements are preferable.

The amount of the mordant to be added to the water-absorbing layer is preferably in a range of 0.01 $g/m^2$ to 5 $g/m^2$ and more preferably in a range of 0.1 $g/m^2$ to 3 $g/m^2$.

- Other components -

In addition to the components described above, the water-absorbing layer or the coating solution for forming a water-absorbing layer (water-absorbing layer-forming coating solution) may contain various known additives such as an ultraviolet absorbing agent, an antioxidant, a fluorescent brightening agent, monomers, a polymerization initiator, a polymerization inhibitor, a blurring inhibitor, a preservative, a viscosity stabilizer, an anti-foaming agent, a surfactant, an antistatic agent, a matting agent, a curl inhibitor, and a water resistant additive, as necessary.

Other components may be used alone or in combination of two or more kinds thereof. Other components may be added through water solubilization, dispersion, polymer dispersion, emulsification, or oil dropletization, and may be included in microcapsules. The amount of other components to be added is preferably in a range of 0.01 to 10 $g/m^2$.

For the purpose of improving the dispersibility of inorganic particles, the surface of inorganic particles may be treated with a silane coupling agent. As the silane coupling agent, an agent containing an organic functional group (such as a vinyl group, an amino group, an epoxy group, a mercapto group, a chloro group, an alkyl group, a phenyl group, or an ester group) in a portion other than the portion on which a coupling treatment is performed is preferable.

It is preferable that the coating solution for forming a water-absorbing layer contains a surfactant. The surfactant here may be any of cationic, anionic, non-ionic, amphoteric, fluorine-based, and silicon-based surfactants.

The total amount of the surfactant in the coating solution for forming a water-absorbing layer is preferably in a range of 0.001% by mass to 2.0% by mass and more preferably in a range of 0.01% by mass to 1.0% by mass.

The surface of the resin layer is coated with the coating solution containing particles and a water-soluble resin to form a coating layer and a cross-linking agent is added to the coating solution and/or the following basic solution. Here, it is preferable that the water-absorbing layer is formed by a method (Wet-on-Wet method) of applying a basic solution having a pH of 7.1 or greater to the coating layer and cross-linking and curing the coating layer at the same time when (1) the coating layer is formed by coating the surface with the coating solution or during when (2) the coating layer to be formed by coating the surface with the coating solution is dried and before the coating layer shows the decreasing rate of drying. It is preferable that the cross-linking agent which is capable of cross-linking the water-soluble resin contains at least one or both of a coating solution and a basic solution. It is preferable that the water-absorbing layer which has been cross-linked and cured in the above-described manner is provided from the viewpoints of improving water absorption properties and preventing occurrence of cracks in a film.

It is preferable that the mordant is present such that the thickness from the surface of the water-absorbing layer to the portion in which the mordant is present is in a range of 10% to 60% with respect to the thickness of the water-absorbing layer. Such a layer can be formed by an optional method such as a method (1) of forming a coating layer that contains particles, a water-soluble resin, and a cross-linking agent and coating the formed layer with a mordant-containing solution or a method (2) of applying a coating solution that contains particles and a water-soluble resin and a mordant-containing solution to form a multilayer. In addition, the mordant-containing solution may contain inorganic particles, a water-soluble resin, a cross-linking agent, and the like.

In a case where the above-described method is employed, since a large amount of mordant is present in a predetermined portion from the surface of the water-absorbing layer, the colorant of the aqueous ink applied according to the ink jet system is sufficiently mordanted, and the color density, blurring with time, the gloss of a printing portion, water resistance of characters and images after printing, and ozone resistance are improved. A part of the mordant may be initially contained in the layer provided on the resin layer. In this case, the mordant to be applied later may be the same as or different from the initial mordant.

According to the embodiment of the present invention, the coating solution for forming a water-absorbing layer containing particles (for example, gas phase method silica) and a water-soluble resin (for example, polyvinyl alcohol) can be prepared in the following manner.

The particles such as gas phase method silica are added to water together with a dispersant or the like (for

example, the content of silica particle in water is in a range of 10% by mass to 20% by mass) and are pre-dispersed (primary dispersion) using a homomixer. Next, the obtained dispersion liquid is further dispersed (secondary dispersion) in one pass using a disperser such as ULTIMIZER (manufactured by SUGINO MACHINE LIMITED CO., LTD.) and then a polyvinyl alcohol (PVA) aqueous solution (for example, the mass of PVA is approximately 1/3 of the mass of gas phase method silica) is added thereto, thereby preparing the coating solution. In order to impart stability to the coating solution, it is preferable that the pH of the coating solution is adjusted to approximately 9.2 using ammonia water or the like or a dispersant is used. The obtained coating solution is in a sol state with high uniformity and a porous water-absorbing layer having a three-dimensional network structure can be formed by coating the resin layer with the coating solution according to a coating method described below and drying the layer.

Examples of the disperser used for dispersion include various known dispersers of the related art such as a colloid mill disperser, a high-speed rotating disperser, a medium stirring type disperser (such as a ball mill or a sand mill), an ultrasonic disperser, and a high-pressure disperser. Among these, from the viewpoint of effectively performing dispersion of bulky particles to be formed, an ultrasonic disperser or a high-pressure disperser (particularly, a high-pressure jet disperser) is preferable.

As the solvent used in each step, water, an organic solvent, or a mixed solvent of these can be used. Examples of the organic solvent include alcohols such as methanol, ethanol, n-propanol, i-propanol, and methoxypropanol, ketones such as acetone and methyl ethyl ketone, tetrahydrofuran, acetonitrile, ethyl acetate, and toluene.

Further, a cationic polymer can be used as the dispersant. Examples of the cationic polymer include the above-described examples of the mordant. Further, it is preferable to use a silane coupling agent as the dispersant.

The amount of the dispersant to be added to the particles is preferably in a range of 0.1% by mass to 30% by mass and more preferably in a range of 1% by mass to 10% by mass.

The application of the coating solution for forming a water-absorbing layer can be performed according to a known coating method using an extrusion die coater, an air doctor coater, a blade coater, a rod coater, a knife coater, a squeeze coater, a reserve roll coater, or a bar coater.

The pore diameter of the water-absorbing layer is preferably in a range of 0.005 μm to 0.030 μm and more preferably in a range of 0.01 μm to 0.025 μm in median diameter.

The void volume and the pore median diameter can be measured using a mercury porosimeter ("PORE SIZER 9320-PC2" (trade name), manufactured by Shimadzu Corporation).

Further, it is preferable that the water-absorbing layer has excellent transparency. As a measure for this, the haze value in a case where the water-absorbing layer is formed on a transparent film is preferably 30% or less and more preferably 20% or less.

The haze value can be measured using a haze meter (HGM-2DP, manufactured by Suga Test Instruments Co., Ltd.).

A polymer particle dispersion may be added to each layer (for example, a water-absorbing layer or a back coat layer) of exclusive paper for ink jet which can be obtained in the embodiment of the present invention. This polymer particle dispersion is used for the purposes of improving film physical properties such as dimension stabilization, curl prevention, adhesion prevention, and prevention of cracking of a film. The polymer particle dispersion is described in JP1987-245258A (JP-S62-245258A), JP1987-1316648A (JP-S62-1316648A), and JP1987-110066A (JP-S62-110066A). Further, cracking and curling of a layer can be suppressed by adding a polymer particle dispersion having a low glass transition temperature (40°C or lower) to a layer containing a mordant. In addition, curling can be suppressed even by adding a polymer particle dispersion having a high glass transition temperature to a back coat layer.

In a case where the base material of exclusive paper for ink jet which can be used in the embodiment of the present invention includes original paper, the original paper is obtained by paper-making a pulp stock formed by beating desired pulp and particularly a beaten and adjusted pulp slurry. The paper-making step of performing paper-making includes a step of drying a web surface side corresponding to a surface coated with a resin layer of the original paper by pressing the web surface to a drum dryer cylinder through a dryer canvas. During this step, the drying can be performed by adjusting the tensile strength of the dryer canvas to be in a range of 1.5 kg/cm to 3 kg/cm.

The pulp is not particularly limited and can be appropriately selected from among natural pulp selected from softwood and hardwood, for example, LBKP (hardwood bleached kraft pulp) such as Aspen wood, Acacia wood, Maple wood, Poplar wood, or Eucalyptus wood; NBKP (soft wood bleached kraft pulp) such as Spruce wood or Douglas-fir wood; LBSP (hardwood bleached sulfite pulp); NBSP (softwood bleached sulfite pulp); LDP (hardwood dissolving pump); NDP (softwood dissolving pulp); LUKP (hardwood unbleached kraft pulp), and NUKP (softwood unbleached kraft). These may be used alone or in combination of two or more kinds thereof.

The pulp forming the original paper is formed of preferably 30% by mass or greater of kraft pulp (Maple wood LBKP) made of Maple and more preferably 50% by mass or greater of Maple wood LBKP. In a case where the amount of Maple wood LBKP to be blended in the pulp is 30% by mass or greater, the smoothness becomes excellent and the glossiness is further improved.

For example, a method of producing kraft pulp (LBKP) is not particularly limited and a typical method of producing

kraft pulp can be widely used. The kraft pulp is obtained by being beaten such that the water retention degree is in a predetermined range, adding a sizing agent or the like to the pulp as necessary to prepare a pulp slurry, and paper-making the prepared pulp slurry. Further, in a case where mixed pulp of plural kinds of pulps is intended to be obtained, arbitrary kraft pulp is beaten and prepared and other pulps are beaten and prepared separately from the kraft pulp, and then both are mixed.

In the paper-making, the freeness after the beating of LBKP is preferably in a range of 200 ml to 400 ml as prescribed in Canadian Standard Freeness (C. S. F). In a case where the freeness is in the above-described range, the swelling ratio and the shrinkage ratio are small so that excellent leveling (surface smoothness) can be obtained. Further, the freeness is a value measured in conformity with the Canadian Standard Test method in "Method of Testing Freeness of Pulp" of JIS-P8121.

Further, the water retention degree after the beating is preferably in a range of 100% to 200%. In a case where the water retention degree of pulp after the beating for forming a pulp stock before the paper-making is in the above-described range, the swelling ratio and the shrinkage ratio of pulp are small and a smooth surface property with high gloss and less unevenness is obtained.

The water retention degree is measured based on the standard described in JAPAN TAPPI Paper Pulp Test Method No. 26:2000 (pulp-water retention degree test method). The water retention degree is obtained according to a method of measuring the water retention degree of dehydrated pulp by dehydrating a pulp suspension using the centrifugal force. Specifically, the beaten pulp suspension is suction-filtered using a filtration container which is referred to as a centrifugal cup, the container is put into a precipitation tube of a centrifuge, centrifugation is performed under certain conditions for a certain time, and wet pulp which has been centrifugally dehydrated is taken out and then weighed. Next, the wet pulp after the centrifugal dehydration is bone-dried at 105°C. The water retention degree is a value calculated from the equation of "water retention degree (%) = (A - B)/B x 100" in a case where the mass of wet pulp after centrifugal dehydration is set to A and the mass of pulp after bone dry is set to B.

As the pulp, pulp with fewer impurities is suitable for use and pulp (bleached pulp) whose whiteness is improved by performing a bleaching treatment is also useful.

Among the examples described above, from the viewpoints of impurities and hue, hardwood bleached kraft pulp (bleached LBKP) obtained by performing a bleaching treatment to improve the whiteness is preferable as the pulp. Among these, hardwood bleached kraft pulp (bleached LBKP) formed of at least one selected from Aspen wood, Acacia wood, Maple wood, and Poplar wood is particularly preferable. The bleached LBKP can be suitably used alone or in the form of mixed pulp obtained by mixing two or more kinds of bleached LBKP or mixed pulp obtained by mixing one or two or more bleached LBKP and one or two or more pulps other than the bleached LBKP.

The concentration of pulp in the original paper of the embodiment of the present invention, that is, the pulp stock for paper-making the original paper is preferably 60% by mass or greater and more preferably 80% by mass or greater.

The pulp stock before the paper-making may further contain anionic colloidal silica. In other words, the original paper of the embodiment of the present invention is suitably obtained by paper-making the pulp stock after addition of anionic colloidal silica. It is effective that the pulp stock contains anionic colloidal silica since dehydration properties can be improved (in other words, the anionic colloidal silica functions as a water filtration assistant) and particularly the cutting quality at the time of cutting, that is, the cutting suitability can be improved.

The specific surface area of the anionic colloidal silica is preferably in a range of 100 $m^2/g$ to 1000 $m^2/g$ and the average particle diameter thereof is preferably in a range of 1 nm to 20 nm.

From the viewpoints of improving the cutting suitability and the dehydration properties, the content of anionic colloidal silica in a case of being contained in the pulp stock is preferably in a range of 0.005% by mass to 0.5% by mass and more preferably in a range of 0.01% by mass to 0.2% by mass with respect to the amount of pulp of the embodiment of the present invention.

A paper-making machine for paper-making the pulp stock is not particularly limited and can be selected from among known paper-making machines of the related art as appropriate. As the paper-making machine, a fourdrinier paper-making machine provided with a shaking device having an amplitude of 10 mm or greater is exemplified, and a paper-making machine having a dandy roll (for example, a paper-making machine provided with a dandy roll formed of a 60 mesh to 100 mesh wire) is preferable from the viewpoint of improving the leveling.

The original paper of the embodiment of the present invention is natural pulp paper containing typical natural pulp as a main component, a filler such as clay, talc, calcium carbonate, or urea resin particles; a sizing agent such as rosin, an alkyl ketene dimer, a higher fatty acid salt, a paraffin wax, or alkenyl succinic acid; a paper strength enhancer such as starch, polyacrylamide, or polyvinyl alcohol; a moisture retention agent such as polyethylene glycols; and a fixing agent such as aluminum sulfate can be added to the original paper as additive chemicals as appropriate. Further, a dye, a white pigment such as titanium oxide, a fluorescent dye, a slime control agent, an anti-foaming agent, or a softener such as quaternary ammonium can be added thereto as necessary.

The surface of original paper formed of natural pulp paper can be subjected to a surface size treatment using

a polymer for forming a coating film, such as gelatin, starch, carboxymethyl cellulose, polyacrylamide, polyvinyl alcohol, or a modified product of polyvinyl alcohol. Examples of the modified product of polyvinyl alcohol include a carboxy group-modified product, a silanol-modified product, and a copolymer of polyvinyl alcohol and acrylamide. The coating amount of the polymer for forming a coating film in a case where the surface size treatment is performed using a polymer for forming a coating film is adjusted to be preferably in a range of 0.1 $g/m^2$ to 5.0 $g/m^2$ and more preferably in a range of 0.5 $g/m^2$ to 2.0 $g/m^2$. An antistatic agent, a fluorescent brightening agent, a pigment, an anti-foaming agent, and the like can be added to the polymer for forming a coating film as necessary.

The original paper typically has a moisture content of approximately 7.0% by mass. However, in the embodiment of the present invention, the moisture content thereof is preferably in a range of 7.5% by mass to 10% by mass and more preferably in a range of 8.0% by mass to 10% by mass from the viewpoint of the texture of the original paper.

The thickness of the original paper is not particularly limited, but is preferably in a range of 150 μm to 250 μm. Further, the basis weight of the original paper is preferably in a range of 180 $g/m^2$ to 220 $g/m^2$ and particularly preferably in a range of 150 $g/m^2$ to 250 $g/m^2$.

As the original paper in the embodiment of the present invention, original paper whose surface has excellent smoothness and leveling is preferable. From this viewpoint, excellent smoothness may be provided by performing a calendar treatment such as machine calendar or super calendar during the paper-making or after the paper-making to treat the surface by applying heat and a pressure.

The density of the original paper is typically in a range of 0.7 $g/m^2$ to 1.2 $g/m^2$ (JIS P-8118).

The stiffness of the original paper is preferably in a range of 1.0 mNm to 3.0 mNm in MD (the vertical direction) and in a range of 0.5 mNm to 1.5 mNm in CD (the horizontal direction) under conditions prescribed in JIS P-8125 (2000).

The surface of the original paper may be coated with a surface size agent. As the surface size agent, the same one as the size agent which can be applied to the original paper can be used.

The pH of the original paper is preferably in a range of 5 to 9 in measured value according to a hot water extraction method prescribed in JIS P-8113.

The sum of image clarity described above and regular reflection intensity can be respectively adjusted to be in the above-described range by adjusting the center surface average roughness (SRa) of the surface of the base material (particularly the original paper) and improving the smoothness of the base material (particularly the original paper).

Specifically, the center surface average roughness (SRa) of a surface on a side (in other words, one side or both sides of the base material), of the base material (particularly the original paper) on which exclusive paper for ink jet of the embodiment of the present invention is formed, on which at least a water-absorbing layer is formed can be suitably adjusted to 0.70 μm or less when measured under a cut off value condition of 0.05 mm to 0.5 mm and adjusted to 0.80 μm or less when measured under a cut off value condition of 1 mm to 3 mm.

The center surface average roughness (SRa) is an index for evaluating the smoothness (surface smoothness) of the surface of the base material (particularly the original paper), and suitable glossiness and surface smoothness can be obtained in a case where exclusive paper for ink jet has been formed in a case where the center surface average roughness SRa is in the above-described range.

In other words, in a case where the SRa when measured under a cut off value condition of 0.05 mm to 0.5 mm is 0.70 μm or less, specifically, a phenomenon in which a reflected image such as reflection of a fluorescent lamp appears to be blurred is suppressed and the image clarity that dominates the glossiness is unlikely to deteriorate, in a case where exclusive paper for ink jet has been formed. Further, in a case where the SRa when measured under a cut off value condition of 1 mm to 3 mm is 0.80 μm or less, specifically, a reflected image such as reflection of a fluorescent lamp is unlikely to appear distorted and the image clarity that greatly dominates the glossiness is unlikely to deteriorate, in a case where exclusive paper for ink jet is formed.

The SRa is preferably 0.60 μm or less under a cut off value condition of 0.05 mm to 0.5 mm and preferably 0.60 μm or less under a cut off value condition of 1 mm to 3 mm. Further, it is preferable that each lower limit of SRa is close to 0 μm.

The center surface average roughness SRa when measured under a cut off value condition of 0.05 mm to 0.5 mm is a value suitably measured using ZYGO New View 5000 (manufactured by Zygo Corporation) and the center surface average roughness SRa when measured under a cut off value condition of 1 mm to 3 mm is a value suitably measured using NANOMETRO 110F (manufactured by KURODA Precision Industries Ltd.).

In terms of improving the surface properties and the appearance in a case where the base material (support) is formed using original paper, the texture index of paper is also important and it is preferable that the original paper of the embodiment of the present invention is formed of paper having a texture index value of 60 or greater.

The texture index means that the texture is excellent as the value is greater, and the smoothness becomes uniform and high without texture unevenness and the surface properties and the appearance can be improved particularly by setting the texture index value to be in the above-described range.

In other words, in a case where the texture index value is less than 60, the texture unevenness significantly

occurs and the surface uniformity or the appearance is degraded. The texture index value is preferably 70 or greater.

The texture index value is a value obtained by setting the stop of a 3D sheet analyzer (M/K950) manufactured by M/K Systems, Inc. (MKS Inc.) to a diameter of 1.5 mm and measured using a microformation tester (MFT).

In other words, a local basis weight difference in a sample is measured as a difference in light quantity by mounting the sample on a rotating drum in a 3D sheet analyzer using a light source mounted on a drum shaft and a photodetector mounted on the outside of the drum in correspondence with the light source. The measurement target range is set based on the diameter of a stop attached to a light-incident portion of the photodetector. Next, after the difference in light quantity (deviation) is amplified, subjected to A/D conversion, and classified into 64 photometrical basis weight classes, 100000 pieces of data are obtained in one scan and the histogram frequency for the data is obtained. In addition, the highest frequency (peak value) of the histogram is divided by the number of classes having a frequency of 100 or greater, among 64 classes classified in correspondence with the small basis weight, and a value obtained by multiplying the divided value by 1/100 is calculated as a texture index value.

As a method of increasing the texture index value, that is, a method of improving the texture of original paper, a method of disposing a screen and a vortex type cleaner directly in front of a head box of a paper-making machine so that the flow direction of the original paper stock does not become constant and controlling flocculation of the stock using additive chemicals such as a dispersant, a texture control additive, a retention, and a water filtration assistant is exemplified. However, the method is not limited to these methods.

According to the embodiment of the present invention, commercially available products of exclusive paper for ink jet with the above-described layer structure can be used, and examples thereof include KASSAI (registered trademark, manufactured by Fujifilm Corporation), REAL PROOF G (registered trademark, manufactured by Fujifilm Corporation), REAL PROOF MK (registered trademark, manufactured by Fujifilm Corporation), and Photo Art (registered trademark) photo gloss GL thick (manufactured by Fujifilm Corporation).

<Aqueous ink>

According to the embodiment of the present invention, a parallax picture is formed on the above-described recording medium using aqueous ink that contains water and a colorant according to the ink jet system. The aqueous ink used in the embodiment of the present invention may further contain other additives such as latex as necessary.

(Water)

The content of water contained in the aqueous ink is not particularly limited, and the content of water can be set to, for example, 50% by mass or greater with respect to the total amount of aqueous ink.

The content of water contained in the aqueous ink is preferably in a range of 50% by mass to 80% by mass, more preferably in a range of 50% by mass to 75% by mass, and still more preferably in a range of 50% by mass to 70% by mass with respect to the total amount of the aqueous ink.

(Colorant)

As the colorant contained in the aqueous ink, a resin-coated pigment having a structure in which at least a part of the surface of the pigment is coated with a resin (hereinafter, also referred to as a "coating resin") is preferable. In this manner, the dispersion stability of the aqueous ink is improved and the quality of an image to be formed is improved.

- Pigment -

The pigment is not particularly limited and can be appropriately selected depending on the purpose thereof. For example, the pigment may be any of an organic pigment and an inorganic pigment. Further, a carbon black pigment, a magenta pigment, a cyan pigment, or a yellow pigment may be used as a color pigment. From the viewpoint of ink colorability, it is preferable that the pigment is almost insoluble or hardly soluble in water.

Examples of the organic pigment include an azo pigment, a polycyclic pigment, chelate dye, a nitro pigment, a nitroso pigment, and aniline black. Among these, an azo pigment and a polycyclic pigment are preferable. Examples of the inorganic pigment include titanium oxide, iron oxide, calcium carbonate, barium sulfate, aluminum hydroxide, yellow barium, cadmium red, chrome yellow, and carbon black. Among these, carbon black is preferable.

In a case of using an organic pigment, from the viewpoints of transparency and color reproducibility, it is preferable that the average particle diameter of the organic pigment is small. However, from the viewpoint of light fastness, it is preferable that the average particle diameter thereof is large. From the viewpoint of balancing these, the average particle diameter thereof is preferably in a range of 10 nm to 200 nm, more preferably in a range of 10 nm to 150 nm, and still more preferably in a range of 10 nm to 120 nm. Further, the particle size distribution of the organic pigment is

not particularly limited, and any of an organic pigment having a wide particle size distribution and an organic pigment having a monodispersed particle size distribution may be used. In addition, two or more organic pigments having a monodispersed particle size distribution may be mixed and then used.

The pigment may be used alone or in combination of two or more kind thereof.

From the viewpoint of the image density, the content of the pigment in the aqueous ink is preferably in a range of 1% by mass to 20% by mass and more preferably in a range of 2% by mass to 10% by mass with respect to the total amount of the aqueous ink.

- Coating resin -

As the coating resin contained in the resin-coated pigment, a dispersant is preferable.

The dispersant may be any of a polymer dispersant and a low-molecular-weight surfactant-type dispersant.

Further, the polymer dispersant may be any of a water-soluble dispersant and a water-insoluble dispersant.

As the low-molecular-weight surfactant-type dispersant, for example, known low-molecular-weight surfactant-type dispersants described in paragraphs 0047 to 0052 of JP2011-178029A can be used.

Among polymer dispersants, hydrophilic polymer compounds are exemplified as the water-soluble dispersant. As the hydrophilic polymer compounds, examples of natural hydrophilic polymer compounds include vegetable polymers such as Arabic gum, tragacanth gum, guar gum, karaya gum, locust bean gum, arabinogalactone, pectin, and quince seed starch; seaweed-based polymers such as alginic acid, carrageenan, and agar; animal polymers such as gelatin, casein, albumin, and collagen; and microbial polymers such as xanthan gum and dextran.

Further, examples of the hydrophilic polymer compound obtained by modifying a natural product with a raw material include fibrous polymers such as methyl cellulose, ethyl cellulose, hydroxyethyl cellulose, hydroxypropyl cellulose, and carboxymethyl cellulose; starch-based polymers such as sodium starch glycolate and sodium starch phosphoric acid ester; and seaweed-based polymers such as sodium alginate and propylene glycol alginic acid ester.

Further, examples of synthetic hydrophilic polymer compounds include a vinyl-based polymer such as polyvinyl alcohol, polyvinylpyrrolidone, or polyvinyl methyl ether; an acrylic resin such as non-cross-linked polyacrylamide, polyacrylic acid or an alkali metal salt thereof, or a water-soluble styrene acrylic resin; and a natural polymer compound such as a water-soluble styrene maleic acid resin, a water-soluble vinyl naphthalene acrylic resin, a water-soluble vinyl naphthalene maleic acid resin, polyvinylpyrrolidone, polyvinyl alcohol, an alkali metal salt of a β-naphthalenesulfonic acid formalin condensate, a polymer compound having a salt of a cationic functional group such as quaternary ammonium or an amino group in a side chain, or a natural polymer compound such as shellac.

Among these, a water-soluble dispersant into which a carboxy group is introduced, such as a homopolymer of acrylic acid, methacrylic acid, or styrene acrylic acid; or a copolymer with monomers having other hydrophilic groups, is preferable as a hydrophilic polymer compound.

Among the polymer dispersants, a polymer having both of a hydrophobic part and a hydrophilic part can be used as a water-insoluble dispersant. As a hydrophilic structural unit, a structural unit having an acidic group is preferable and a structural unit having a carboxy group is more preferable. Examples of the water-insoluble resin include a styrene-(meth)acrylic acid copolymer, a styrene-(meth)acrylic acid-(meth)acrylic acid ester copolymer, a (meth)acrylic acid ester-(meth)acrylic acid copolymer, a polyethylene glycol (meth)acrylate-(meth)acrylic acid copolymer, a vinyl acetate-maleic acid copolymer, and a styrene-maleic acid copolymer.

More specifically, water-insoluble resins described in JP2005-41994A, JP2006-273891A, JP2009-084494A, and JP2009-191134A can be suitably used in the embodiment of the present invention.

The weight-average molecular weight of the polymer dispersant is preferably in a range of 3000 to 100000, more preferably in a range of 5000 to 50000, still more preferably in a range of 5000 to 40000, and particularly preferably in a range of 10000 to 40000.

Further, the weight-average molecular weight of the polymer dispersant indicates a value acquired by the same method as the method used to acquire the weight-average molecular weight of the resin particles described below.

From the viewpoints of self-dispersibility and the aggregation rate in a case where a treatment liquid comes into contact with the polymer dispersant, the polymer dispersant contains preferably a polymer having a carboxy group, preferably a polymer having a carboxy group and an acid value of 130 mgKOH/g or less, and more preferably a polymer having a carboxy group and an acid value of 25 mgKOH/g to 120 mgKOH/g. Particularly, in a case where the aqueous ink used in the embodiment of the present invention is used together with a treatment liquid that aggregates components in the aqueous ink, a polymer dispersant having a carboxy group and an acid value of 25 mg/KOH/g to 100 mg/KOH/g is effective. The treatment liquid will be described later.

The mixing mass ratio (p:s) of the pigment (p) to the dispersant (s) is preferably in a range of 1:0.06 to 1:3, more preferably in a range of 1:0.125 to 1:2, and still more preferably in a range of 1:0.125 to 1:1.5.

The content of the coating resin used for coating a pigment is preferably in a range of 0.5% by mass to 3.0% by mass, more preferably in a range of 1.0% by mass to 2.8% by mass, and still more preferably in a range of 1.2% by

mass to 2.5% by mass with respect to the total mass of the aqueous ink.

From the viewpoints of suppressing reduction of the viscosity of the aqueous ink and suppressing roughening of the surface of an image, the mass ratio (coating resin:inorganic salt) of the coating resin to an inorganic salt described below is preferably in a range of 10 to 250, more preferably in a range of 15 to 200, and still more preferably in a range of 30 to 150.

The volume average particle diameter (secondary particle diameter) of the resin-coated pigment (pigment in a dispersed state) is preferably in a range of 10 nm to 200 nm, more preferably in a range of 10 nm to 150 nm, and still more preferably in a range of 10 nm to 100 nm. In a case where the volume average particle diameter thereof is 200 nm or less, the color reproducibility becomes excellent and the jetting properties at the time of jetting the ink according to the ink jet system become excellent. In a case where the volume average particle diameter thereof is 10 nm or greater, the light fastness becomes excellent.

In addition, the particle size distribution of the colorant is not particularly limited and may be any of a wide particle size distribution and a monodispersed particle size distribution. Further, the colorant having a monodispersed particle size distribution may be used in a combination of two or more kinds thereof. Here, the volume average particle diameter of the pigment in a dispersed state indicates an average particle diameter in a state in which the ink is obtained, and the same applies to a so-called concentrated ink dispersion at a stage before the ink is obtained.

Here, the volume average particle diameter of the resin-coated pigment indicates a value acquired by the same method as the method used for acquiring the volume average particle diameter of resin particles described below.

Further, it is preferable that the resin used for coating the pigment in the resin-coated pigment is cross-linked by a cross-linking agent.

In other words, it is preferable that the resin-coated pigment is a resin-coated pigment in which at least a part of the surface of the pigment is coated with the resin that is cross-linked by a cross-linking agent.

In regard to the resin-coated pigment in which at least a part of the surface of the pigment is coated with the resin that is cross-linked by a cross-linking agent, description in paragraphs 0029 to 0048, 0110 to 0118, and 0121 to 0129 of JP2012-162655A and paragraphs 0035 to 0071 of JP2013-47311A can be referred to.

The cross-linking agent is not particularly limited as long as the cross-linking agent is a compound having two or more sites reacting with a resin. Among examples of such a compound, from the viewpoint of excellent reactivity with a carboxy group, a compound (bi- or higher functional epoxy compound) having two or more epoxy groups is preferable.

Examples of the cross-linking agent include ethylene glycol diglycidyl ether, polyethylene glycol diglycidyl ether, 1,6-hexanediol diglycidyl ether, diethylene glycol diglycidyl ether, dipropylene glycol diglycidyl ether, polypropylene glycol diglycidyl ether, and trimethylolpropane triglycidyl ether. Among these, polyethylene glycol diglycidyl ether, diethylene glycol diglycidyl ether, and trimethylolpropane triglydicyl ether are preferable.

Commercially available products can be used as the cross-linking agent. Examples of the commercially available products include Denacol EX-321, EX-821, EX-830, EX-850, and EX-851 (manufactured by ChemteX Corporation).

From the viewpoints of the cross-linking reaction rate and dispersion liquid stability after the cross-linking, the molar ratio between a cross-linking site (for example, an epoxy group) of the cross-linking agent and a cross-linked site of a resin (for example, a carboxy group) is preferably in a range of 1:1 to 1:10, more preferably in a range of 1:1 to 1:5, and still more preferably in a range of 1:1 to 1:1.5.

(Water-soluble solvent)

It is preferable that the aqueous ink used in the embodiment of the present invention contains a water-soluble solvent.

In a case where the aqueous ink contains a water-soluble solvent, the jettability from a head and storage stability are ensured and deformation of exclusive paper for ink jet caused by water is effectively suppressed.

As the water-soluble solvent, known solvents can be used without particular limitation.

Examples of the water-soluble solvent include glycols such as glycerin, 1,2,6-hexanetriol, trimethylolpropane, ethylene glycol, propylene glycol, diethylene glycol, triethylene glycol, tetraethylene glycol, pentaethylene glycol, and dipropylene glycol; polyhydric alcohols, for example, alkanediol such as 2-butene-1,4-diol, 2-ethyl-1,3-hexanediol, 2-methyl-2,4-pentanediol, 1,2-octanediol, 1,2-hexanediol, 1,2-pentanediol, or 4-methyl-1,2-pentanediol; and saccharides, sugar alcohols, hyaluronic acids, alkyl alcohols having 1 to 4 carbon atoms, glycol ethers, 2-pyrrolidone, and N-methyl-2-pyrrolidone described in paragraph 0116 of JP2011-42150A. One or two or more solvents can be appropriately selected from among these solvents and then used. Polyhydric alcohols are useful as a drying inhibitor and a wetting agent, and examples thereof include those described in paragraph 0117 of JP2011-42150A. In addition, a polyol compound is preferable as a penetration enhancer, and examples of an aliphatic diol include those described in paragraph 0117 of JP2011-42150A.

Further, other water-soluble solvents can be appropriately selected from among water-soluble solvents described in paragraphs 0176 to 0179 of JP2011-46872A and water-soluble solvents described in paragraphs 0063 to

0074 of JP2013-18846A.

The content of the water-soluble solvent (the total content in a case where two or more water-soluble solvents are contained in the aqueous ink) in the aqueous ink used in the embodiment of the present invention is preferably in a range of 2% by mass to 20% by mass with respect to the total amount of the aqueous ink.

In a case where the total content thereof is 2% by mass or greater, the jettability from a head and storage stability are further improved and deformation of exclusive paper for ink jet caused by water is further suppressed.

The total content of the water-soluble solvent is more preferably in a range of 3% by mass to 20% by mass and more preferably in a range of 5% by mass to 18% by mass with respect to the total amount of the aqueous ink.

It is more preferable that the aqueous ink used in the embodiment of the present invention contains a solvent A represented by Structural Formula (I) and at least one solvent B selected from ethylene glycol, diethylene glycol, triethylene glycol, tetraethylene glycol, and pentaethylene glycol as a water-soluble solvent. With such a composition, excellent rub resistance is obtained and curling and stacker blocking of exclusive paper for ink jet after the image formation are suppressed.

Here, the stacker blocking indicates a phenomenon in which plural sheets of exclusive paper for ink jet on which images are formed are accumulated and the front surface (surface on a side where an image is formed) of exclusive paper for ink jet and the rear surface (surface on a side where an image is not formed) of another exclusive paper for ink jet are brought into contact with each other so that the image formed on the exclusive paper for ink jet is destroyed. The image is destroyed due to image transfer to the rear surface of exclusive paper for ink jet or adhesion between two sheets of exclusive paper for ink jet.

The stacker blocking is described in JP2011-088323A.

In a case where the aqueous ink used in the embodiment of the present invention contains the solvent A and the solvent B, the content of the solvent A is preferably in a range of 1.0% by mass to 10.0% by mass with respect to the total amount of the aqueous ink, and the content (on a mass basis) of the solvent B with respect to the total amount of the aqueous ink is preferably in a range of 0.05 times to 20.0 times the content (on a mass basis) of the solvent A with respect to the total amount of the aqueous ink.

In the present specification, the expression "the content (on a mass basis) of the solvent B with respect to the total amount of the aqueous ink is in a range of a times to b times (for example, 0.05 times to 20.0 times) the content (on a mass basis) of the solvent A with respect to the total amount of the aqueous ink" is also described as "the ratio [mass of solvent B/mass of solvent A] is in a range of a to b (for example, 0.05 to 20.0)".

The ratio [mass of solvent B/mass of solvent A] is preferably in a range of 0.1 to 15.0 and more preferably in a range of 0.2 to 10.0.

In a case where the aqueous ink used in the embodiment of the present invention contains the solvent A and the solvent B, the total content of the solvent A and the solvent B is preferably in a range of 2.0% by mass to 30.0% by mass, more preferably in a range of 3.0% by mass to 20.0 % by mass, and still more preferably in a range of 5.0% by mass to 15.0% by mass with respect to the total amount of the aqueous ink.

In the case where the aqueous ink used in the embodiment of the present invention contains the solvent A and the solvent B, the content of the solvent B is preferably in a range of 0.5% by mass to 20.0% by mass, more preferably in a range of 1.0% by mass to 15.0% by mass, and still more preferably in a range of 2.0% by mass to 10.0% by mass with respect to the total amount of the aqueous ink.

- Solvent A-

The solvent A is at least one solvent selected from the compounds represented by Structural Formula (I). The solvent A may be a solvent formed of one solvent (single component) selected from compounds represented by Structural Formula (I) or a mixed solvent formed of two or more kinds of solvents selected from compounds represented by Structural Formula (I).

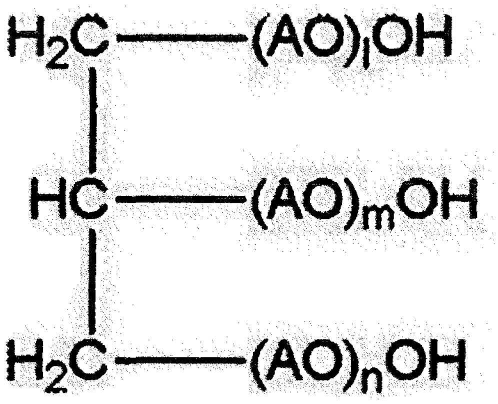

Structural Formula (I)

In Structural Formula (I), 1, m, and n each independently represent an integer of 0 or greater and 1 + m + n is in a range of 0 to 15. In the range, 1 + m + n is preferably in a range of 3 to 12 and more preferably in a range of 3 to 10. In Structural Formula (I), AO represents an ethyleneoxy group or a propyleneoxy group, and a propyleneoxy group is preferable. In a case where 1 + m + n is greater than or equal to 2, two or more AO's may be the same as or different from each other.

As the compounds represented by Structural Formulae (I), glycerin or an alkylene oxide adduct of glycerin is preferable.

Hereinafter, examples of the compounds represented by Structural Formula (I) will be described. However, in the embodiment of the present invention, the compounds are not limited to these examples.

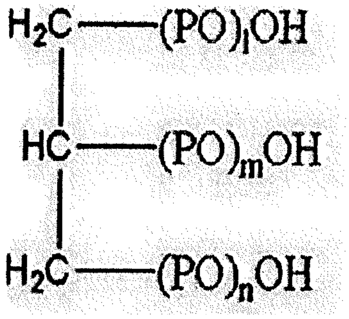

l+m+n=3 PO = Propyleneoxy

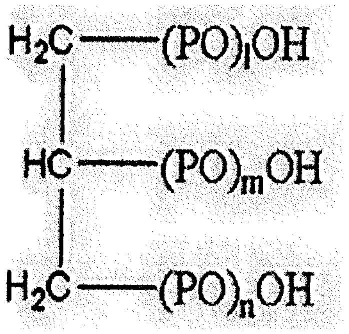

l+m+n=4 PO = Propyleneoxy

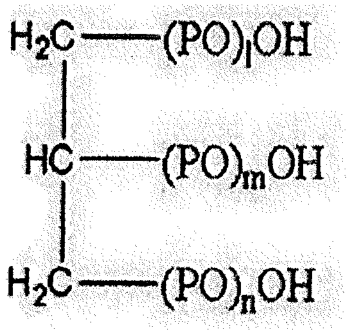

l+m+n=5 PO = Propyleneoxy

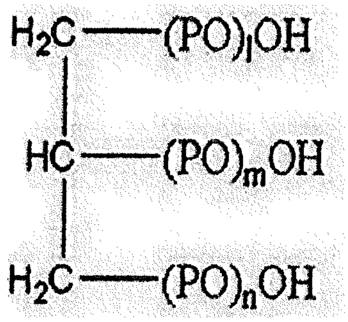

l+m+n=6 PO = Propyleneoxy

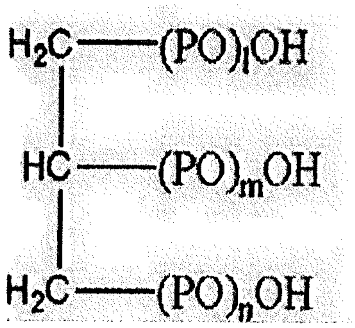

l+m+n=7 PO = Propyleneoxy

- $nC_4H_9O(AO)_4$-H
  (AO=EO or PO (EO:PO =1:1))
- $nC_4H_9O(AO)_{10}$-H
  (AO=EO or PO (EO:PO = 1:1))
- $HO(A'O)_{40}$-H
  (A'O = EO or PO (EO:PO = 1:3))
- $HO(A''O)_{55}$-H
  (A"O = EO or PO (EO:PO = 5:6))
- $HO(PO)_3$-H
- $HO(PO)_7$-H
- 1,2-hexanediol

Further, EO represents an ethyleneoxy group and PO represents a propyleneoxy group.

As the alkylene oxide adduct of glycerin, commercially available products may be used. Examples of polyoxypropylated glycerin (ether of polypropylene glycol and glycerin) include SANNIX (registered trademark) GP-250 (average molecular weight of 250), GP-400 (average molecular weight of 400), GP-600 (average molecular weight of 600) [all manufactured by Sanyo Chemical Industries, Ltd.], LEOCON (registered trademark) GP-250 (average molecular weight of 250), GP-300 (average molecular weight of 300, GP-400 (average molecular weight of 400), GP-700 (average molecular weight of 700) [all manufactured by Lion Corporation], and a polypropylene triol glycol-triol type product (average molecular weight of 300, average molecular weight of 700) [manufactured by Wako Pure Chemical Industries, Ltd.].

- Solvent B -

The solvent B is at least one solvent selected from the group consisting of ethylene glycol, diethylene glycol, triethylene glycol, tetraethylene glycol (for example, PEG-200 described below), pentaethylene glycol, propylene glycol, and methyl propylene triglycol (MFTG). It is preferable that the solvent B contains at least one of triethylene glycol or tetraethylene glycol.
The solvent B may be a solvent formed of one solvent (single component) or a mixed solvent formed of two or more kinds of solvents.
As the solvent B, commercially available products may be used.
Examples thereof include PEG-200 (average molecular weight of 200), PEG-300 (average molecular weight of 300), PEG-400 (average molecular weight of 400) [all manufactured by Sanyo Chemical Industries, Ltd.], PEG #200 (average molecular weight of 200), PEG #300 (average molecular weight of 300), PEG #400 (average molecular weight of 400) [all manufactured by Lion Corporation], PEG #200 (average molecular weight of 200), PEG #300 (average molecular weight of 300), PEG #400 (average molecular weight of 400) [all manufactured by NOF CORPORATION], PEG200 (average molecular weight of 200), PEG300 (average molecular weight of 300), and PEG400 (average molecular weight of 400) [all manufactured by Dai-chi Kogyo Seiyaku Co., Ltd.].

(Resin particles)

It is preferable that the aqueous ink used in the embodiment of the present invention contains particles and preferably at least one type of resin particles. In this manner, the rub resistance of an image is further improved.
Particularly, in a case where the aqueous ink used in the embodiment of the present invention contains resin particles and an image is formed by applying the aqueous ink and a treatment liquid described below onto the recording medium, the rub resistance of the image is further improved.
In other words, in a case where the resin particles are brought into contact with exclusive paper for ink jet (particularly, the treatment liquid or a region where the treatment liquid has been dried in the exclusive paper for ink jet), the dispersion of the resin particles becomes destabilized in the aqueous ink and thus the resin particles are aggregated. As the result, since the aqueous ink becomes thickened, the aqueous ink can be immobilized to the exclusive paper for ink jet. In this manner, the rub resistance of the image is further improved. Further, the adhesiveness of the aqueous ink to the exclusive paper for ink jet is also further improved.
As the resin particles, for example, resin particles formed of a resin selected from thermoplastic resins and thermosetting resins can be used.
These resins may be modified resins.
Examples of the resin used for forming resin particles include an acrylic resin, an epoxy resin, a urethane resin, a polyether resin, a polyamide resin, an unsaturated polyester resin, a phenol resin, a silicone resin, a fluorine resin, a polyvinyl resin (such as vinyl chloride, vinyl acetate, polyvinyl alcohol, or polyvinyl butyral), an alkyd resin, a polyester resin (such as a phthalic acid resin), and an amino material (such as a melamine resin, a melamine formaldehyde resin, an amino alkyd co-condensation resin, a urea resin, or a urea resin).
The resin forming resin particles may be a copolymer having two or more structural units forming resins exemplified above or a mixture of two or more resins. As the resin particles, not only particles formed of a mixture of two or more resins but also composite resin particles formed by two or more resins being laminated as in a case of a core and shell may be exemplified.
In a case where resin particles are used for the aqueous ink, the resin particles may be used alone or in combination of two or more kinds thereof.
As the resin particles, particles of an acrylic resin, a urethane resin, a polyether resin, a polyester resin, or a polyolefin resin are preferable. From the viewpoints of stability and the quality of the formed film (image), particles of an acrylic resin or particles of a urethane resin are more preferable.
The aqueous ink used in the embodiment of the present invention may contain resin particles in the form of an aqueous dispersion containing the resin particles, that is, so-called latex.
In the present specification, an acrylic resin indicates a resin having a structural unit derived from (meth)acrylic acid. An acrylic resin may have a structural unit other than the structural unit derived from (meth)acrylic acid.
The glass transition temperature (Tg) of the resin particles is preferably 40°C or higher. The upper limit of the glass transition temperature of the resin particles is preferably 250°C. The glass transition temperature of the resin particles is preferably in a range of 50°C to 230°C.
For example, in a case where an image is formed by applying the aqueous ink and the treatment liquid described below onto the exclusive paper for ink jet, the resin particles have a function of immobilizing the aqueous ink to the paper by destabilizing dispersion in the aqueous ink, being aggregated, and thickening the aqueous ink in a case where the resin particles are brought into contact with the treatment liquid or a region where the treatment liquid has been dried.

In this manner, the rub resistance of an image is further improved. Further, the image irregularity is further suppressed. In addition, the adhesiveness of the aqueous ink to the exclusive paper for ink jet and scratch resistance of an image are further improved.

The glass transition temperature of resin particles is appropriately controlled by a method which has been typically used. For example, the glass transition temperature of resin particles can be controlled to be in a desired range by appropriately selecting the type of monomer (polymerizable compound) forming the resin particles, the ratio thereof, and the molecular weight of a polymer forming the resin particles.

In the present specification, a measured value Tg obtained by actual measurement is applied to the glass transition temperature of the resin particles.

Specifically, the measured value Tg indicates a value measured using a differential scanning calorimeter (DSC) EXSTAR6220 (manufactured by Seiko Instruments Inc.) under typical measurement conditions. In a case where it is difficult to perform measurement due to decomposition or the like of the polymer, a calculated value Tg to be calculated by the following calculation formula is applied. The calculated value Tg indicates a value calculated by Formula (1).

$$1/Tg = \Sigma(Xi/Tgi) \cdots (1)$$

Here, it is assumed that the polymer as a target for calculation is formed by copolymerizing n monomer components (in the formula, i represents 1 to n). Xi represents a weight fraction ($\sum Xi = 1$) of the i-th monomer and Tgi represents a glass transition temperature (absolute temperature) of a homopolymer of the i-th monomer. Here, $\sum$ is obtained by summing 1 to n as i. Further, values in Polymer Handbook (3rd Edition) (written by J. Brandrup, E. H. Immergut (Wiley-Interscience, 1989)) are employed as the value (Tgi) of the glass transition temperature of the homopolymer of each monomer.

As the resin particles, resin particles obtained by a phase-transfer emulsification method are preferable and particles of a self-dispersing polymer (self-dispersing polymer particles) are more preferable.

Here, the self-dispersing polymer indicates a water-insoluble polymer which may enter a dispersed state in an aqueous medium by a functional group (particularly, an acidic group of a carboxy group or the like or a salt thereof) contained in the polymer itself in a case where the polymer has entered the dispersed state according to the phase-transfer emulsification method in the absence of a surfactant.

Here, the concept of the dispersed state includes both of an emulsified state (emulsion) in which a water-insoluble polymer is dispersed in the aqueous medium in a liquid state and a dispersed state (suspension) in which a water-insoluble polymer is dispersed in the aqueous medium in a solid state.

In addition, the term "water-insoluble" means that the amount of substance to be dissolved in 100 parts by mass (25°C) of water is 5.0 parts by mass or less.

As the phase-transfer emulsification method, a method of dissolving or dispersing a polymer in a solvent (for example, a water-soluble solvent), putting the solution into water without adding a surfactant thereto, stirring and mixing the solution, and removing the solvent in a state in which a salt-forming group (for example, an acidic group) contained in the polymer is neutralized to obtain an aqueous dispersion in an emulsified or dispersed state may be exemplified.

The self-dispersing polymer particles can be selected from among self-dispersing polymer particles described in paragraphs 0090 to 0121 of JP2010-64480A and paragraphs 0130 to 0167 of JP2011-068085A and then used. Particularly, it is preferable that particles having a glass transition temperature of 100°C or higher are selected from among self-dispersing polymer particles described in the same publications and then used.

As described above, self-dispersing polymer particles containing a carboxy group are preferable as the self-dispersing polymer particles.

A polymer having a structural unit derived from unsaturated carboxylic acid (preferably (meth)acrylic acid) is more preferable as the self-dispersing polymer particles containing a carboxy group.

A polymer which has a structural unit having an alicyclic group, a structural unit having an alkyl group, and a structural unit derived from unsaturated carboxylic acid (preferably (meth)acrylic acid) is still more preferable as the self-dispersing polymer particles containing a carboxy group.

The content (total content in a case where two or more structural units are included in the polymer) of the structural unit having an alicyclic group in the polymer is preferably in a range of 3% by mass to 95% by mass, more preferably in a range of 5% by mass to 75% by mass, and still more preferably in a range of 10% by mass to 50% by mass with respect to the total amount of the polymer.

The content (total content in a case where two or more structural units are included in the polymer) of the structural unit having an alkyl group in the polymer is preferably in a range of 5% by mass to 90% by mass, more preferably in a range of 10% by mass to 85% by mass, still more preferably in a range of 20% by mass to 80% by mass, even still more preferably in a range of 30% by mass to 75% by mass, and even still more preferably in a range of 40%

by mass to 75% by mass with respect to the total amount of the polymer.

The content (total content in a case where two or more structural units are included in the polymer) of the structural unit derived from a unsaturated carboxylic acid (preferably (meth)acrylic acid) in the polymer is preferably in a range of 2% by mass to 30% by mass, more preferably in a range of 5% by mass to 20% by mass, and still more preferably in a range of 5% by mass to 15% by mass with respect to the total amount of the polymer.

Further, a polymer in which the structural unit having an alicyclic group is changed into a structural unit having an aromatic group or a polymer which has a structural unit having an aromatic group in addition to the structural unit having an alicyclic group, in the "still more preferable form of the self-dispersing polymer particles containing a carboxy group" described above, is also preferable as the form of self-dispersing polymer particles containing a carboxy group.

In both polymer, the total content of the structural unit having an alicyclic group and a structural unit having an aromatic group is preferably in a range of 3% by mass to 95% by mass, more preferably in a range of 5% by mass to 75% by mass, and still more preferably in a range of 10% by mass to 50% by mass with respect to the total amount of the polymer.

It is preferable that the structural unit having an alicyclic group is a structural unit derived from alicyclic (meth)acrylate.

Examples of the alicyclic (meth)acrylate include monocyclic (meth)acrylate, bicyclic (meth)acrylate, and tricyclic (meth)acrylate.

Examples of the monocyclic (meth)acrylate include cycloalkyl (meth)acrylate in which the number of carbon atoms in a cycloalkyl group is in a range of 3 to 10, such as cyclopropyl (meth)acrylate, cyclobutyl (meth)acrylate, cyclopentyl (meth)acrylate, cyclohexyl (meth)acrylate, cycloheptyl (meth)acrylate, cyclooctyl (meth)acrylate, cyclononyl (meth)acrylate, or cyclodecyl (meth)acrylate.

Examples of the bicyclic (meth)acrylate include isobornyl (meth)acrylate and isobornyl (meth)acrylate.

Examples of the tricyclic (meth)acrylate include adamantly (meth)acrylate, dicyclopentanyl (meth)acrylate, and dicyclopentenyloxyethyl (meth)acrylate.

These may be used alone or in combination of two or more kinds thereof.

Among these, from the viewpoints of fixability, blocking resistance, and dispersion stability of self-dispersing polymer particles, bicyclic (meth)acrylate or tri- or higher cyclic polycyclic (meth)acrylate is preferable; and isobornyl (meth)acrylate, adamantly (meth)acrylate, or dicyclopentenyl (meth)acrylate is more preferable.

As the structural unit having an aromatic group, a structural unit derived from an aromatic group-containing monomer is preferable.

Examples of the aromatic group-containing monomer include an aromatic group-containing (meth)acrylate monomer (such as phenoxyethyl (meth)acrylate, benzyl (meth)acrylate, or phenyl (meth)acrylate) and a styrene-based monomer.

Among these, from the viewpoints of balancing between the hydrophilicity and the hydrophobicity of the polymer chain and ink fixability, an aromatic group-containing (meth)acrylate monomer is preferable; phenoxyethyl (meth)acrylate, benzyl (meth)acrylate, or phenyl (meth)acrylate is more preferable; and phenoxyethyl (meth)acrylate or benzyl (meth)acrylate is still more preferable.

As the structural unit having an alkyl group, a structural unit derived from an alkyl group-containing monomer is preferable.

Examples of the alkyl group-containing monomer include alkyl (meth)acrylate such as methyl (meth)acrylate, ethyl (meth)acrylate, isopropyl (meth)acrylate, n-propyl (meth)acrylate, n-butyl (meth)acrylate, isobutyl (meth)acrylate, t-butyl (meth)acrylate, hexyl (meth)acrylate, or ethylhexyl (meth)acrylate; an ethylenically unsaturated monomer containing a hydroxyl group such as hydroxymethyl (meth)acrylate, 2-hydroxyethyl (meth)acrylate, 2-hydroxypropyl (meth)acrylate, 4-hydroxybutyl (meth)acrylate, hydroxypentyl (meth)acrylate, or hydroxyhexyl (meth)acrylate; dialkylaminoalkyl (meth)acrylate such as dimethylamonoethyl (meth)acrylate; and (meth)acrylamide, for example, N-hydroxyalkyl (meth)acrylamide such as N-hydroxymethyl (meth)acrylamide, N-hydroxyethyl (meth)acrylamide, or N-hydroxybutyl (meth)acrylamide, and N-alkoxyalkyl (meth)acrylamide such as N-methoxymethyl (meth)acrylamide, N-ethoxymethyl (meth)acrylamide, N-(n-,iso)butoxymethyl (meth)acrylamide, N-methoxyethyl (meth)acrylamide, N-ethoxyethyl (meth)acrylamide, or N-(n,iso)butoxyethyl (meth)acrylamide.

Among these, alkyl (meth)acrylate is preferable; alkyl (meth)acrylate in which the number of carbon atoms in an alkyl group is in a range of 1 to 4 is more preferable; methyl (meth)acrylate, ethyl (meth)acrylate, isopropyl (meth)acrylate, or butyl (meth)acrylate is still more preferable; and methyl (meth)acrylate is particularly preferable.

Hereinafter, exemplary compounds P-1 to P-5 will be described as specific examples of the self-dispersing polymer particles, but the self-dispersing polymer particles used in the embodiment of the present invention are not limited to these examples. Further, the numerical values in the parenthesis indicate the mass ratios of the copolymer components.

- P-1: methyl methacrylate/isobornyl methacrylate/methacrylic acid copolymer (70/20/10)

- P-2: methyl methacrylate/isobornyl methacrylate/methacrylic acid copolymer (48/42/10)
- P-3: methyl methacrylate/benzyl methacrylate/methacrylic acid copolymer (65/25/10)
- P-4: isopropyl methacrylate/isobornyl methacrylate/methacrylic acid copolymer (50/40/10)
- P-5: butyl methacrylate/dicyclopentanyl methacrylate/methacrylic acid copolymer (60/30/10)

Further, as described above, a urethane resin is also preferable as the resin particles.

As the urethane resin, a urethane resin obtained by reacting a diol compound and a diisocyanate compound is exemplified.

In regard to the details of the diol compound and the diisocyanate compound, the description in paragraphs 0031 to 0036 of JP2001-247787A can be referred to. Among the examples, a polyester-based urethane resin or a polyether-based urethane resin which has an ester bond in a main chain structure is preferably used.

In regard to the urethane resin, the description in paragraphs 0128 to 0136 of JP2013-227498A can be referred to as appropriate.

The weight-average molecular weight of the polymer forming resin particles (preferably self-dispersing polymer particles, the same applies hereinafter) is preferably in a range of 3000 to 200000, more preferably in a range of 5000 to 150000, and still more preferably in a range of 10000 to 100000.

In a case where the weight-average molecular weight is 3000 or greater, the amount of water-soluble components can be effectively suppressed. Further, the self-dispersion stability can be improved by setting the weight-average molecular weight to 200000 or less.

Here, the weight-average molecular weight of the polymer forming the resin particles indicates a value measured by gel permeation chromatography (GPC).

The GPC is performed using HLC-8020GPC (manufactured by Tosho Corporation), three columns of TSKgel (registered trademark), and Super Multipore HZ-H (manufactured by Tosho Corporation, 4.6 mmID x 15 cm), and tetrahydrofuran (THF) as an eluant.

Further, the GPC is performed at a sample concentration of 0.45% by mass, a flow rate of 0.35 ml/min, a sample injection volume of 10 μl, and a measurement temperature of 40°C using a differential refractive index (RI) detector.

The calibration curve is prepared using 8 samples of "F-40", "F-20", "F-4", "F-1", "A-5000", "A-2500", "A-1000", and "n-propylbenzene" which are "Standard Samples TSK standard, polystyrene" (manufactured by TOSOH CORPORATION).

From the viewpoints of self-dispersibility and the aggregation rate in a case where the polymer forming resin particles is brought into contact with a treatment liquid, the acid value of the polymer is preferably 100 mgKOH/g or less and more preferably in a range of 25 mgKOH/g to 100 mgKOH/g.

The volume average particle diameter of the resin particles is preferably in a range of 1 nm to 200 nm, more preferably in a range of 1 nm to 150 nm, still more preferably in a range of 1 nm to 100 nm, and particularly preferably in a range of 1 nm to 10 nm. In a case where the volume average particle diameter thereof is 1 nm or greater, the production suitability is improved. Further, in a case where the volume average particle diameter is 200 nm or less, the storage stability is improved. Further, the particle size distribution of polymer particles is not particularly limited, and the polymer particles may be a wise particle size distribution or a monodispersed particle size distribution. Two or more kinds of polymer particles may be mixed and then used.

Here, the volume average particle diameter of resin particles indicates a value measured by a particle size distribution measuring device (for example, MICROTRAC UPA (registered trademark) EX150, manufactured by NIKKOSO CO., LTD.) that uses light scattering.

The content (total content in a case where two or more kinds of resin particles are contained in the aqueous ink) of the resin particles (preferably self-dispersing polymer particles) in the aqueous ink is not particularly limited, but is preferably in a range of 0.3% by mass to 10.0% by mass, more preferably in a range of 0.5% by mass to 7.0% by mass, and still more preferably in a range of 1.0% by mass to 5.0% by mass with respect to the total amount of the aqueous ink.

In a case where the content of the resin particles in the aqueous ink is 0.3% by mass or greater, the rub resistance of an image is further improved and the image irregularity can be further suppressed.

It is advantageous that the content of the resin particles in the aqueous ink is 10.0% by mass or less from the viewpoint that the jettability of the ink can be further improved and generation of precipitates in a low temperature environment is suppressed.

(Surfactant)

The aqueous ink used in the embodiment of the present invention may contain at least one surfactant as necessary. The surfactant can be used as a surface tension adjuster.

As the surfactant, a compound having a structure that has both of a hydrophilic part and a hydrophobic part in

a molecule can be effectively used, and any of an anionic surfactant, a cationic surfactant, an amphoteric surfactant, a non-ionic surfactant, or a betaine-based surfactant can be used. Further, the above-described polymer dispersant may be used as a surfactant.

From the viewpoint of suppressing jetting interference of the aqueous ink, a non-ionic surfactant is preferable as the surfactant. Among the examples of the non-ionic surfactant, an acetylene glycol derivative (acetylene glycol-based surfactant) is more preferable.

Examples of the acetylene glycol-based surfactant include 2,4,7,9-tetramethyl-5-decyne-4,7-diol and an alkylene oxide adduct of 2,4,7,9-tetramethyl-5-decyne-4,7-diol. It is preferable that the acetylene glycol-based surfactant is at least one selected from these. Examples of commercially available products of these compounds include E series of OLFINE E1010 (manufactured by Nissin Chemical Industry Co., Ltd.).

A fluorine-based surfactant is preferable as a surfactant other than the acetylene glycol-based surfactant. Examples of the fluorine-based surfactant include an anionic surfactant, a non-ionic surfactant, and a betaine-based surfactant. Among these, an anionic surfactant is more preferable. Examples of the anionic surfactant include Capstone FS-63, Capstone FS-61 (manufactured by Dupont), FTERGENT 100, FTERGENT 110, FTERGENT 150 (all manufactured by NEOS COMPANY LIMITED), and CHEMGUARD S-760P (manufactured by Chemguard Inc.).

In a case where the aqueous ink contains a surfactant (surface tension adjuster), from the viewpoint of satisfactorily jetting the aqueous ink according to the ink jet system, the amount of the surfactant to be contained in the aqueous ink is set such that the surface tension of the aqueous ink can be adjusted to be preferably in a range of 20 mN/m to 60 mN/m, more preferably in a range of 20 mN/m to 45 mN/m from the viewpoint of the surface tension, and still more preferably in a range of 25 mN/m to 40 mN/m.

Here, the surface tension of the aqueous ink indicates a value measured in a liquid temperature condition of 25°C using an Automatic Surface Tensiometer CBVP-Z (manufactured by Kyowa Interface Science Co., Ltd.).

In a case where the aqueous ink used in the embodiment of the present invention contains a surfactant, the specific amount of the surfactant is not particularly limited, but is preferably 0.1 % by mass or greater, more preferably in a range of 0.1 % by mass to 10% by mass, and still more preferably in a range of 0.2% by mass to 3% by mass with respect to the total amount of the aqueous ink.

- Colloidal silica -

The aqueous ink used in the embodiment of the present invention may contain colloidal silica as necessary.

In this manner, the stability during continuous jetting of the ink can be further improved.

The colloidal silica is a colloid formed of particles of an inorganic oxide that contains silicon having an average particle diameter of several hundreds of nanometers or less. The colloidal silica contains silicon dioxide (including the hydrate thereof) as a main component and may contain aluminate (such as sodium aluminate or potassium aluminate) as a small amount of component.

Further, the colloidal silica may contain inorganic salts such as sodium hydroxide, potassium hydroxide, lithium hydroxide, and ammonium hydroxide; and organic salts such as tetramethylammonium hydroxide. These inorganic salts and the organic salts act, for example, as a colloidal stabilizer.

In regard to the colloidal silica, for example, the description in paragraphs 0043 to 0050 of JP2011-202117A can be referred to.

Further, the aqueous ink used in the embodiment of the present invention may contain alkali silicate metal salts in place of or in addition to colloidal silica as necessary. In regard to the alkali silicate metal salts, the description in paragraphs 0052 to 0056 of JP2011-202117A can be referred to.

In a case where the aqueous ink used in the embodiment of the present invention contains colloidal silica, the content of colloidal silica is preferably in a range of 0.0001% by mass to 10% by mass, more preferably in a range of 0.01% by mass to 3% by mass, still more preferably in a range of 0.02% by mass to 0.5% by mass, and particularly preferably in a range of 0.03% by mass to 0.3% by mass with respect to the total amount of the aqueous ink.

- Urea -

The aqueous ink used in the embodiment of the present invention may contain urea.

Since urea has an excellent moisturizing function, urea is capable of effectively suppressing undesired drying or solidification of the ink as a solid wetting agent.

In a case where the aqueous ink used in the embodiment of the present invention contains the colloidal silica and urea, the maintainability (wiping workability) of an ink jet head or the like is more effectively improved.

From the viewpoint of improving maintainability (wiping workability), the content of urea in the aqueous ink used in the embodiment of the present invention is preferably in a range of 1% by mass to 20% by mass, more preferably in a range of 1% by mass to 15% by mass, and still more preferably in a range of 3% by mass to 10% by mass.

In a case where the aqueous ink used in the embodiment of the present invention contains urea and colloidal silica, the ratio between the content of urea and the content of colloidal silica is not particularly limited, but the ratio (urea/colloidal silica) of the content of urea to the content of colloidal silica is preferably in a range of 5 to 1000, more preferably in a range of 10 to 500, and still more preferably in a range of 20 to 200.

In the case where the aqueous ink used in the embodiment of the present invention contains urea and colloidal silica, a combination of the content of urea and the content of colloidal silica is not particularly limited, but the following combination is preferable from the viewpoint of more effectively balancing the wiping properties and the fixability of an image.

That is, a combination of urea at a content of 1.0% by mass or greater and colloidal silica at a content of 0.01% by mass or greater is preferable; a combination of urea at a content of 1.0% by mass to 20% by mass and colloidal silica at a content of 0.02% by mass to 0.5% by mass is more preferable; and a combination of urea at a content of 3.0% by mass to 10% by mass and colloidal silica at a content of 0.03% by mass 0.2% by mass is still more preferable;

- Water-soluble polymer compound -

The aqueous ink used in the embodiment of the present invention contains at least one water-soluble polymer compound as necessary.

The water-soluble polymer compound is not particularly limited, and known water-soluble polymer compounds such as polyvinyl alcohol, polyacrylamide, polyvinylpyrrolidone, and polyethylene glycol can be used.

Further, as the water-soluble polymer compounds, specific polymer compounds contained in the treatment liquid described below and water-soluble polymer compounds described in paragraphs 0026 to 0080 of JP2013-001854A are suitable.

In a case where the aqueous ink used in the embodiment of the present invention contains a water-soluble polymer compound, the content of the water-soluble polymer compound is preferably in a range of 0.0001% by mass to 10 by mass, more preferably in a range of 0.01% by mass to 3% by mass, still more preferably in a range of 0.02% by mass to 0.5% by mass, and particularly preferably in a range of 0.03% by mass to 0.3% by mass with respect to the total amount of the aqueous ink.

- Anti-foaming agent -

The aqueous ink used in the embodiment of the present invention may contain at least one anti-foaming agent as necessary.

Examples of the anti-foaming agent include a silicone-based compound (a silicone-based anti-foaming agent) and a pluronic compound (pluronic anti-foaming agent). Among these, a silicone-based anti-foaming agent is preferable.

As the silicone-based anti-foaming agent, a silicone-based anti-foaming agent having a polysiloxane structure is preferable.

As the anti-foaming agent, commercially available products can be used. Examples of the commercially available products include BYK-012, 017, 021, 022, 024, 025, 038, and 094 (all manufactured by manufactured by Big Chemie Japan Co., Ltd.); KS-537, KS-604, KM-72F (all manufactured by Shin-Etsu Chemical Co. Ltd.); TSA-739 (manufactured by Momentive Performance Material Inc.), and Olefin AF104 (manufactured by Nissin Chemical Co., Ltd.).

Among these, BYK-017, 021, 022, 024, 025, 094, KS-537, KS-604, KM-72F, and TSA-739 serving as a silicone-based anti-foaming agent are preferable. From the viewpoint of jetting stability of an ink, BYK-024 is more preferable.

In a case where the aqueous ink used in the embodiment of the present invention contains an anti-foaming agent, the content of the anti-foaming agent is preferably in a range of 0.0001% by mass to 1% by mass and more preferably in a range of 0.001% by mass to 0.1 % by mass with respect to the total amount of the aqueous ink.

- Inorganic salt -

The aqueous ink used in the embodiment of the present invention may contain at least one kind of inorganic salt as necessary. In this manner, the surface roughening of the formed image is suppressed.

Here, the surface roughening (graininess) indicates a phenomenon in which portions where the concentration of the aqueous ink is high and portions where the concentration thereof is low are unevenly distributed in an intermediate region (halftone region) between a bright region (highlight) and a dark region (shadow) of an image so that the surface thereof appears to be rough.

The "surface roughening" is not a phenomenon occurring due to local insufficient aggregation of aqueous ink, such as "blurring" or "streak" of the related art, but a phenomenon occurring due to non-uniform aggregation caused by non-uniform distribution of a treatment liquid on a recording medium.

As the inorganic salt, a hydrochloride or a nitrate is preferable.

Among these, from the viewpoints of markedly suppressing a decrease in thickening of the ink and suppressing the surface roughening, a monovalent salt is preferable; an alkali metal salt is more preferable; and lithium chloride, lithium nitrate, potassium chloride, or potassium nitrate is still more preferable.
The inorganic salt may be used alone or in combination of two or more kinds thereof.
In a case where the aqueous ink used in the embodiment of the present invention contains an inorganic salt, the content (total content in a case where two or more kinds of inorganic salts are contained in the aqueous ink) of the inorganic salt in the aqueous ink is not particularly limited, but is preferably in a range of 0.01% by mass to 0.1% by mass, more preferably in a range of 0.02% by mass to 0.1% by mass, and still more preferably in a range of 0.03% by mass to 0.1% by mass.

- Wax particles -

The aqueous ink used in the embodiment of the present invention may contain at least one kind of wax particles. In this manner, the rub resistance can be further improved.
Examples of wax particles include plant-based waxes such as carnauba wax, candelilla wax, beeswax, rice wax, and lanolin; animal waxes; petroleum waxes such as paraffin wax, microcrystalline wax, polyethylene wax, polyethylene oxide wax, and petrolatum, mineral waxes such as montan wax and ozokerite, synthetic waxes such as carbon wax, hoechst wax, polyolefin wax, and stearic acid wax, natural waxes such as $\alpha$-olefin-maleic anhydride copolymer, particles of synthetic waxes, and mixed particles of these.
It is preferable that the wax is added in the form of a dispersion. For example, the aqueous ink contains the wax as a dispersion such as an emulsion. It is preferable that the solvent in a case where the wax is contained in the aqueous ink as a dispersion is water, but the solvent is not limited thereto. For example, the solvent may be appropriately selected from organic solvents which have been typically used and can be used during the dispersion. In regard to the organic solvents, the description of paragraph 0027 of JP2006-91780A can be referred to.
The wax particles may be used alone or in combination of plural kinds thereof.
As the wax particles, commercially available products may be used. Examples of the commercially available products include NOPCOAT PEM17 (manufactured by SAN NOPCO LIMITED), CHEMIPEARL W4005 (manufactured by Mitsui Chemicals, Inc.), AQUACER 515, and AQUACER 593 (both manufactured by Big Chemie Japan Co., Ltd.).
Among these, carnauba wax and polyolefin wax are preferable, and carnauba wax is particularly preferable from the viewpoint of rub resistance.
In a case where the aqueous ink used in the embodiment of the present invention contains wax particles, the ratio of the content of resin particles to the content of wax particles (resin particles:wax particles) is preferably in a range of 1:5 to 5:1 (ratio between solid contents). In a case where the ratio of the content of resin particles to the content of wax particles is in the above-described range, an image having excellent rub resistance can be formed.

- Other components -

The aqueous ink used in the embodiment of the present invention may contain other components in addition to the above-described components as necessary.
Examples of other components include known additives such as a solid wetting agent, a fading inhibitor, an emulsion stabilizer, a penetration enhancer, an ultraviolet absorbing agent, a preservative, an antibacterial agent, a pH adjuster, a viscosity adjuster, a rust inhibitor, and a chelating agent.
The aqueous ink used in the embodiment of the present invention may be active energy ray (for example, ultraviolet ray) curable aqueous ink that contains at least one polymerizable compound.
In this case, it is preferable that the aqueous ink (at least one of the aqueous ink or the treatment liquid in a case where the treatment liquid described below is used) further contains a polymerization initiator.
Examples of the polymerizable compound include polymerizable compounds (for example, a bi- or higher functional (meth)acrylamide compound) described in paragraphs 0128 to 0144 of JP2011-184628A, paragraphs 0019 to 0034 of JP2011-178896A, and paragraphs 0065 to 0086 of JP2015-25076A.
Examples of the polymerization initiator include known polymerization initiators described in paragraphs 0186 to 0190 of JP2011-184628A, paragraphs 0126 to 0130 of JP2011-178896A, and paragraphs 0041 to 0064 of JP2015-25076A.

(Preferable physical properties of aqueous ink)

The physical properties of the aqueous ink used in the embodiment of the present invention are not particularly

limited, but the following physical properties are preferable.

From the viewpoints of the aggregation rate and the dispersion stability, the pH of the aqueous ink used in the embodiment of the present invention at 25°C (±1°C) is preferably 7.5 or greater.

The pH (25°C ± 1°C) of the aqueous ink is preferably in a range of 7.5 to 13 and more preferably in a range of 7.5 to 10.

From the viewpoint of the aggregation rate, the viscosity of the aqueous ink used in the embodiment of the present invention is preferably in a range of 0.5 mPa·s to 10 mPa·s and more preferably in a range of 1 mPa·s to 7 mPa·s.

The viscosity is measured using a VISCOMETER TV-22 (manufactured by TOKI SANGYO CO., LTD.) under a temperature condition of 30°C.

The surface tension of the aqueous ink used in the embodiment of the present invention at 25°C (±1°C) is preferably 60 mN/m or less, more preferably in a range of 20 mN/m to 50 mN/m, and still more preferably in a range of 25 mN/m to 45 mN/m. It is advantageous that the surface tension of the aqueous ink is 60 mN/m or less from the viewpoint that curling of the recording medium is suppressed. The surface tension is measured using an Automatic Surface Tensiometer CBVP-Z (manufactured by Kyowa Interface Science Co., Ltd.) under a temperature condition of 25°C according to a plate method.

According to the embodiment of the present invention, a parallax picture is formed by applying the aqueous ink containing water and a colorant to the water-absorbing layer of the recording medium according to an ink jet system, but it is preferable that a treatment liquid that aggregates components in the aqueous ink is applied to the water-absorbing layer of the recording medium before the aqueous ink is applied thereto. Particularly, in a case where synthetic paper is used, it is preferable that spreading of ink dots is suppressed by applying a treatment liquid to the water-absorbing layer before the aqueous ink is applied thereto.

<Treatment liquid>

It is preferable that the treatment liquid contains at least one kind of acid (hereinafter, also referred to as an "acidic compound") that aggregates the components in the aqueous ink.

(Acidic compound)

As the acidic compound, an acidic substance capable of lowering the pH of the aqueous ink is exemplified.

As the acidic compound, any of an organic acidic compound and an inorganic acidic compound may be used and two or more organic acidic compounds and inorganic acidic compounds may be used in combination.

- Organic acidic compound -

Examples of the organic acidic compound include organic compounds containing an acidic group.

Examples of the acidic group include a phosphoric acid group, a phosphonic acid group, a phosphinic acid group, a sulfuric acid group, a sulfonic acid group, a sulfinic acid group, and a carboxy group. From the viewpoint of the aggregation rate of the aqueous ink, it is preferable that the acidic group according to the embodiment of the present invention is a phosphoric acid group or a carboxy group and more preferable that the acidic group is a carboxy group.

Preferred examples of the organic compound (organic carboxylic acid) containing a carboxy group include polyacrylic acid, acetic acid, glycolic acid, malonic acid, malic acid (preferably DL-malic acid), maleic acid, ascorbic acid, succinic acid, glutaric acid, fumaric acid, citric acid, tartaric acid, phthalic acid, 4-methylphthalic acid, lactic acid, sulfonic acid, orthophosphoric acid, pyrrolidone carboxylic acid, pyrrone carboxylic acid, pyrrole carboxylic acid, furan carboxylic acid, pyridine carboxylic acid, coumarinic acid, thiophene carboxylic acid, nicotinic acid, derivatives of these compounds, and salts of these (for example, polyvalent metal salts). These compounds may be used alone or two or more kinds thereof.

From the viewpoint of the aggregation rate of the aqueous ink, as the organic carboxylic acid, di- or higher valent carboxylic acid (hereinafter, also referred to as polyvalent carboxylic acid) is preferable; at least one selected from malonic acid, malic acid, maleic acid, succinic acid, glutaric acid, fumaric acid, tartaric acid, 4-methylphthalic acid, and citric acid is more preferable; and malonic acid, malic acid, tartaric acid, or citric acid is still more preferable.

It is preferable that the pKa of the organic acidic compound is low.

In this manner, the surface charge of particles such as polymer particles or the pigment stably dispersed in the aqueous ink by a weakly acidic functional group such as a carboxy group is reduced by bringing the aqueous ink into contact with an organic acidic compound having a lower pKa to decrease the dispersion stability.

It is preferable that the organic acidic compound contained in the treatment liquid is a compound which has a low pKa and a high solubility in water and is di- or higher valent and more preferable that the organic acidic compound is a di- or trivalent acidic substance which has a high buffer capacity in a pH region whose pKa is lower than the pKa of the functional group (for example, a carboxy group) that allows particles to be stably dispersed in the aqueous ink.

- Inorganic acidic compound -

Examples of the inorganic acidic compound include phosphoric acid, nitric acid, nitrous acid, sulfuric acid, and hydrochloric acid, but the inorganic acidic compound is not particularly limited thereto. From the viewpoints of the aggregation rate of the ink and suppressing occurrence of gloss unevenness in an image area, phosphoric acid is preferable as the inorganic acidic compound.
The solubility (25°C) of phosphoric acid in water in a case where a calcium salt (calcium phosphate) is obtained is 0.0018 g/100 g of water, which is small. Therefore, in a case where the inorganic acidic compound contained in the treatment liquid is phosphoric acid, the calcium salt is not dissolved and is immobilized so that the effect of suppressing gloss unevenness occurring on the surface of the image area becomes excellent.
Particularly, in a case where a recording medium that has a layer containing calcium carbonate is used as the recording medium, phosphoric acid is advantageous as the inorganic acidic compound to be contained in the treatment liquid.
The total amount of the acidic compound contained in the treatment liquid is not particularly limited, but is preferably in a range of 5% by mass to 40% by mass and more preferably in a range of 10% by mass to 30% by mass with respect to the total amount of the treatment liquid, from the viewpoint of the aggregation rate of the aqueous ink.
In a case where a combination of an organic acidic compound and an inorganic acidic compound is used as the acidic compound, in the content ratio between the organic acidic compound and the inorganic acidic compound, from the viewpoints of the aggregation rate and suppressing the gloss unevenness, the content ratio of the content of the inorganic acidic compound to the content of the organic acidic compound is preferably in a range of 5% by mole to 50% by mole, more preferably in a range of 10% by mole to 40% by mole, and still more preferably in a range of 15% by mole to 35% by mole.
As necessary, the treatment liquid may contain other aggregation components such as polyvalent metal salts and cationic polymers in addition to the acidic compounds.
Polyvalent metal salts and cationic polymers described in paragraphs 0155 and 0156 of JP2011-042150A can be used as the polyvalent metal salts and the cationic polymers.

(Water-soluble polymer compound)

It is preferable that the treatment liquid contains at least one water-soluble polymer compound.
The water-soluble polymer compound is not particularly limited, and known water-soluble polymer compounds such as polyvinyl alcohol, polyacrylamide, polyvinylpyrrolidone, and polyethylene glycol can be used.
Further, specific polymer compounds described below and water-soluble polymer compounds described in paragraphs 0026 to 0080 of JP2013-001854A are suitable as the water-soluble polymer compound.
The weight-average molecular weight of the water-soluble polymer compound is not particularly limited, but can be set to a range of 10000 to 100000, preferably in a range of 20000 to 80000, and more preferably in a range of 30000 to 80000.
Further, the content of the water-soluble polymer compound in the treatment liquid is not particularly limited, but is preferably in a range of 0.1% by mass to 10% by mass, more preferably in a range of 0.1 % by mass to 4% by mass, still more preferably in a range of 0.1 % by mass to 2% by mass, and particularly preferably in a range of 0.1% by mass to 1% by mass with respect to the total amount of the treatment liquid.
In a case where the content of the water-soluble polymer compound in the treatment liquid is 0.1% by mass or greater, the spreading of ink droplets can be further promoted. In a case where the content thereof is 10% by mass or less, the thickening of the treatment liquid can be further suppressed. Further, in a case where the content of the water-soluble polymer compound in the treatment liquid is 10% by mass or less, coating unevenness of the treatment liquid caused by bubbles in the treatment liquid can be further suppressed.
A polymer compound (hereinafter, also referred to as "specific polymer compound") which has a hydrophilic structural unit having an ionic group (preferably an anionic group) is preferable as the water-soluble polymer compound. In this manner, the spreading of ink droplets applied to the recording medium can be more promoted so that image roughness is further suppressed.
Examples of the ionic group contained in the specific polymer compound include a carboxy group, a sulfonic acid group a phosphoric acid group, a boronic acid group, an amino group, an ammonium group, and salts of these. Among these, a carboxy group, a sulfonic acid group, a phosphoric acid group, and salts of these are preferable; a carboxy group, a sulfonic acid group, and salts of these are more preferable; and a sulfonic acid group and a salt thereof are still more preferable.
As a hydrophilic structural unit having an ionic group (preferably an anionic group), a structural unit derived from a (meth)acrylamide compound having an ionic group (preferably an anionic group) is preferable.
The content of the hydrophilic structural unit having an ionic group (preferably an anionic group) in the water-soluble polymer compound can be set to be in a range of 10% by mass to 100% by mass and is preferably in a range of 10% by mass to 90% by mass, more preferably in a range of 10% by mass to 70% by mass, still more preferably in a range of 10% by mass to 50% by mass, and particularly preferably in a range of 20% by mass to 40% by mass with respect to the total mass of the water-soluble polymer compound.

It is more preferable that the specific polymer compound contains at least one hydrophilic structural unit in addition to at least one hydrophobic structural unit having the above-described ionic group (preferably an anionic group and particularly preferably a sulfonic acid group). Since the specific polymer compound is easily present on the surface of the treatment liquid in a case where the specific polymer compound has a hydrophobic structural unit, the spreading of ink droplets applied to the recording medium is further promoted so that the image roughness is further suppressed.

As the hydrophobic structural unit, a structural unit derived from (meth)acrylic acid ester (preferably an alkyl ester in which the number of carbon atoms in (meth)acrylic acid is in a range of 1 to 4) is preferable.

The content of the hydrophobic structural unit in the specific polymer compound is in a range of 10% by mass to 90% by mass, preferably in a range of 30% by mass to 90% by mass, more preferably in a range of 50% by mass to 90% by mass, and still more preferably in a range of 60% by mass to 80% by mass with respect to the total mass of the specific polymer compound.

(Water)

It is preferable that the treatment liquid contains water.

The content of water is preferably in a range of 50% by mass to 90% by mass and more preferably in a range of 60% by mass to 80% by mass with respect to the total mass of the treatment liquid.

(Water-soluble solvent)

It is preferable that the treatment liquid contains at least one water-soluble solvent.

Specifically, as the water-soluble solvent, the above-described water-soluble solvents which can be contained in the aqueous ink used in the embodiment of the present invention can be also used in the treatment liquid.

Among those, from the viewpoint of suppressing curling, polyalkylene glycol or a derivative thereof is preferable; and at least one selected from diethylene glycol monoalkyl ether, triethylene glycol monoalkyl ether, dipropylene glycol, tripropylene glycol monoalkyl ether, polyoxypropylene glyceryl ether, and polyoxyethylene polyoxypropylene glycol is more preferable.

From the viewpoint of coating properties, the content of the water-soluble solvent in the treatment liquid is preferably in a range of 3% by mass to 20% by mass and more preferably in a range of 5% by mass to 15% by mass with respect to the total amount of the treatment liquid.

(Surfactant)

The treatment liquid may contain at least one surfactant.

The surfactant can be used as a surface tension adjuster. Examples of the surface tension adjuster include a non-ionic surfactant, a cationic surfactant, an anionic surfactant, and a betaine surfactant. Among these, from the viewpoint of the aggregation rate of the aqueous ink, a non-ionic surfactant or an anionic surfactant is preferable.

Examples of the surfactant include compounds exemplified as surfactants in pp. 37 and 38 of JP1984-157636A (JP-S59-157636A) and Research Disclosure No. 308119 (1989). Further, other examples of the surfactant include fluorine-based surfactants (fluorinated alkyl-based surfactants) and silicone-based surfactants described in JP2003-322926A, JP2004-325707A, and JP2004-309806A.

The content of the surfactant in the treatment liquid is not particularly limited, but the content can be set such that the surface tension of the treatment liquid becomes preferably 50 mN/m or less, more preferably in a range of 20 mN/m to 50 mN/m, and still more preferably in a range of 30 mN/m to 45 mN/m.

(Other additives)

The treatment liquid may contain other additives in addition to those described above as necessary.

Other additives which can be contained in the treatment liquid are the same as other additives which can be contained in the above-described aqueous ink.

(Physical properties of treatment liquid)

From the viewpoint of the aggregation rate of the aqueous ink, the pH of the treatment liquid at 25°C (±1°C)

is preferably in a range of 0.1 to 0.5.

In a case where the pH of the treatment liquid is 0.1 or greater, the roughness of the recording medium is further decreased and the adhesiveness of the image area is further improved.

In a case where the pH of the treatment liquid is 0.5 or less, the aggregation rate of the components contained in the aqueous ink is further improved, coalescence of dots (ink dots) caused by the aqueous ink on the recording medium is further suppressed, and the roughness of the image is further decreased.

The pH (25°C ± 1°C) of the treatment liquid is more preferably in a range of 0.2 to 0.4.

From the viewpoint of the aggregation rate of the aqueous ink, the viscosity of the treatment liquid is preferably in a range of 0.5 mPa·s to 10 mPa·s and more preferably in a range of 1 mPa·s to 5 mPa·s. The viscosity is a value measured using A VISCOMETER TV-22 (manufactured by TOKI SANGYO CO., LTD.) under a temperature condition of 25°C.

The surface tension of the treatment liquid at 25°C (±1°C) is preferably 60 mN/m or less, more preferably in a range of 20 mN/m to 50 mN/m, and still more preferably in a range of 30 mN/m to 45 mN/m. It is advantageous that the surface tension of the treatment liquid is 60 mN/m or less because the occurrence of curling in the recording medium is suppressed. The surface tension of the treatment liquid is measured using an Automatic Surface Tensiometer CBVP-Z (manufactured by Kyowa Interface Science Co., Ltd.) according to a plate method.

Next, a method of forming a parallax picture using the recording medium, the aqueous ink, and the treatment liquid described above according to the ink jet system will be described in detail.

The ink jet system used in the embodiment of the present invention is not particularly limited, and any of known methods such as an electric charge control method of jetting an ink using electric attraction force; a drop-on-demand method (pressure pulse method) using a vibration pressure of a piezoelectric element; an acoustic ink jet system of jetting an ink using a radiation pressure by changing an electric signal into an acoustic beam and radiating the acoustic beam to the ink; and a thermal ink jet (bubble jet (registered trademark)) method of heating an ink to form bubbles and utilizing the generated pressure may be used. As the ink jet system, particularly, an ink jet method, described in JP1979-59936A (JP-S54-59936A), of jetting an ink from a nozzle using an action force caused by a rapid change in volume of the ink after being subjected to an action of thermal energy can be effectively used.

A short serial head is used as the ink jet head, and there are two systems for the ink jet head, which are a shuttle system of performing recording while scanning a head in the width direction of the recording medium and a single pass system (line system) of using a line head in which recording elements are disposed corresponding to the entire area of one side of the recording medium. In the single pass system, image recording can be performed on the entire surface of the recording medium by scanning the recording medium in a direction intersecting the direction in which the recording elements are disposed. Therefore, a transport system such as a carriage that scans a short head becomes unnecessary. Further, since movement of a carriage and complicated scanning control between the head and the recording medium become unnecessary and only the recording medium moves, the recording can be performed at a higher speed compared to the shuttle system. The method of forming a parallax picture using the ink jet system according to the embodiment of the present invention can be applied to any of these, but it is preferable that the method is applied to the single pass system that does not perform a dummy jet since the jetting accuracy and the rub resistance of an image are highly improved and drawing can be performed at a high speed.

<Ink jet recording device>

Here, an example of an ink jet recording device which can be used to form a parallax picture according to the embodiment of the present invention will be described.

(Overall configuration of ink jet recording device)

First, the overall configuration of the ink jet recording device will be described.

Fig. 3 is an overall configuration view schematically illustrating the overall configuration of the ink jet recording device.

An ink jet recording device 10 records color images by jetting four colors of inks, which are, a cyan (C) ink, a magenta (M) ink, a yellow (Y) ink, and a black (K) ink, to the recording medium.

The above-described recording medium is used as the recording medium. Further, the above-described aqueous ink is used as the ink.

In a case where the above-described exclusive paper for ink jet is used, a high-quality image can be formed even by recording an image according to the ink jet system using the aqueous ink as it is. However, in a case where the above-described synthetic paper is used, in the ink jet recording device of the present example, it is preferable that an image is recorded by coating the paper with the treatment liquid having a function of aggregating the components in the ink in advance in order to suppress occurrence of feathering and blurring.

As illustrated in Fig. 3, the ink jet recording device 10 mainly includes a paper feed unit 12 which feeds paper P as a recording medium; a treatment liquid coating unit 14 which coats a surface (water-absorbing layer) of the paper P fed from the paper feed unit 12 with the treatment liquid; a treatment liquid drying process unit 16 which performs a drying treatment on the paper P coated with the treatment liquid; an image recording unit 18 which draws a color image by jetting ink droplets onto the surface of the paper P, which has been subjected to the drying treatment, according to the ink jet system; an ink drying process unit 20 which performs the drying treatment on the paper P on which the image has been recorded; and a paper discharge unit 24 which discharges and recovers the paper P.

- Paper feed unit -

The paper feed unit 12 feeds the paper P stacked on a paper feed stand 30 one by one to the treatment liquid coating unit 14. The paper feed unit 12 mainly includes the paper feed stand 30, a sucker device 32, a pair 34 of paper feed rollers; a feeder board 36, a front contact 38, and a paper feed drum 40.

The paper P is placed on the paper feed stand 30 in a state of a bundle formed by multiple sheets of paper being stacked. The paper feed stand 30 is provided so as to be elevated and lowered by a paper feed stand elevating device (not illustrated). The paper feed stand elevating device interlocks with increase and decrease of the paper P stacked on the paper feed stand 30 so that the drive is controlled and elevates and lowers the paper feed stand 30 such that the paper P on the top of the bundle is constantly positioned at a certain height.

The sucker device 32 feeds the paper P to the pair 34 of paper feed rollers by sequentially taking the paper P stacked on the paper feed stand 30 up from the above one by one. The sucker device 32 includes a suction foot 32A provided so as to be freely elevated and lowered and freely swung, allows the suction foot 32A to suction and holds the upper surface of the paper P, and transports the paper P from the paper feed stand 30 to the pair 34 of paper feed rollers. At this time, the suction foot 32A suctions and holds the upper surface of the paper P on the front end side which is positioned on the top of the bundle, pulls up the paper P, and inserts the front end of the pulled-up paper P into the space between a pair of rollers 34A and 34B (the pair 34 of paper feed rollers).

The pair 34 of paper feed rollers includes the pair of upper and lower roller 34A and 34B which are mutually pressed. In the pair of upper and lower rollers 34A and 34B, one roller is a driving roller (roller 34A) and the other roller is a driven roller (roller 34B), and the driving roller (roller 34A) rotates by being driven by a motor (not illustrated). The motor is driven by interlocking with the feed of the paper P and rotates the driving roller (roller 34A) at the timing in a case where the paper P is fed from the sucker device 32. The paper P which has been inserted into the space between the pair of upper and lower rollers 34A and 34B is nipped between these rollers 34A and 34B and is sent to the rotation direction (direction in which the feeder board 36 is provided) of the rollers 34A and 34B.

The feeder board 36 is formed in correspondence with the paper width, receives the paper P sent from the pair 34 of paper feed rollers, and guides the paper P to the front contact 38. The feeder board 36 is disposed such that the front end side thereof is inclined downward, slides the paper P placed on the transport surface along the transport surface, and guides the paper P to the front contact 38.

The feeder board 36 is provided with a plurality of tape feeders 36A for transporting the paper P at intervals in the width direction. The tape feeders 36A are formed in an endless shape and rotate by being driven by a motor (not illustrated). The paper P placed on the transport surface of the feeder board 36 is sent by the tape feeders 36A and transported on the feeder board 36.

Further, retainers 36B and a roller 36C are provided on the feeder board 36.

A plurality (two in the present example) of retainers 36B are longitudinally provided in series along the transport surface of the paper P. The retainers 36B include a plate spring having a width corresponding to the paper width and are provided by being pressed by the transport surface. In a case where the paper P transported on the feeder board 36 by the tape feeders 36A passes through the retainers 36B, the unevenness is corrected. Further, the rear end portions of the retainers 36B are curled in order for the paper P to be easily introduced into the space with the feeder board 36.

The roller 36C is disposed between the front and rear retainers 36B. The roller 36C is provided by being pressed by the transport surface of the paper P. The paper P transported between the front and rear retainers 36B is transported while the upper surface thereof is pressed by the roller 36C.

The front contact 38 corrects the posture of the paper P. The front contact 38 is formed in a plate shape and disposed orthogonal to the transport direction of the paper P. Further, the front contact 38 is driven by a motor (not illustrated) and swingably provided. The front end of the paper P transported on the feeder board 36 is brought into contact with the front contact 38 so that the posture thereof is corrected (so-called skew prevention). The front contact 38 is swung by interlocking with the feed of paper to the paper feed drum 40 and delivers the paper P whose posture has been corrected to the paper feed drum 40.

The paper feed drum 40 received the paper P to be fed from the feeder board 36 through the front contact 38 and transports the paper P to the treatment liquid coating unit 14. The paper feed drum 40 is formed in a cylindrical shape and rotates by being driven by a motor (not illustrated). A gripper 40A is provided on the outer peripheral surface

of the paper feed drum 40, and the front end of the paper P is gripped by the gripper 40A. The paper feed drum 40 rotates by allowing the gripper 40A to grip the front end of the paper P. In this manner, the paper feed drum 40 transports the paper P to the treatment liquid coating unit 14 while winding the paper P around the peripheral surface.

- Treatment liquid coating unit -

The treatment liquid coating unit 14 coats the surface (water-absorbing layer) of the paper P with the treatment liquid having a function of aggregating the components in the ink. The treatment liquid coating unit 14 mainly includes a treatment liquid coating drum 42 which transports the paper P and a treatment liquid coating device 44 which coats the surface (water-absorbing layer) of the paper P to be transported by the treatment liquid coating drum 42 with the treatment liquid.
The treatment liquid coating drum 42 received the paper P from the paper feed drum 40 of the paper feed unit 12 and rotate by being held on the outer peripheral surface to transport the paper P to the treatment liquid drying process unit 16 by functioning as means for holding the paper P serving as a recording medium (recording medium holding means) and also functioning as means for transporting the paper P as serving a recording medium (recording medium transport means).
The treatment liquid coating drum 42 is formed in a cylindrical shape and rotates by being driven by a motor (not illustrated). A gripper 42A is provided on the outer peripheral surface of the treatment liquid coating drum 42, and the front end of the paper P is gripped by the gripper 42A. The treatment liquid coating drum 42 rotates by allowing the gripper 42A to grip the front end of the paper P. In this manner, the treatment liquid coating drum 42 transports the paper P (transports a sheet of paper P in one rotation) to the treatment liquid drying process unit 16 while winding the paper P around the peripheral surface. The rotation of the treatment liquid coating drum 42 and the paper feed drum 40 is controlled such that the timing for receiving the paper P matches the timing for delivering the paper P. In other words, the treatment liquid coating drum 42 and the paper feed drum 40 are driven such that the peripheral speed of the treatment liquid coating drum 42 is the same as the peripheral speed of the paper feed drum 40 and are driven such that the positions of respective grippers match each other.
The treatment liquid coating device 44 functions as treatment liquid coating means for coating the surface of the paper P to be transported by the treatment liquid coating drum 42 with the treatment liquid. The treatment liquid coating device 44 includes, for example, a roller coating device and coats the surface of the paper P with the treatment liquid by pressing a coating roller provided with a peripheral surface to which the treatment liquid has been applied to the surface of the paper P. In addition to the function described above, for example, the treatment liquid coating device 44 can be used as a head which performs coating by jetting the treatment liquid according to the ink jet system and can be also used as a spray which performs coating by spraying the treatment liquid.
Further, the treatment liquid used for coating the surface using the treatment liquid coating unit 14 is the above-described treatment liquid and is a liquid containing an acid that aggregates the components in the aqueous ink.
By recording an image by coating the surface (water-absorbing layer) of the paper P with the treatment liquid, the occurrence of feathering and blurring can be prevented and high-quality printing can be performed even in a case where synthetic paper which includes a water-absorbing layer on the surface thereof is used.

- Treatment liquid drying treatment unit -

The treatment liquid drying process unit 16 performs a drying treatment on the paper P having a surface to which the treatment liquid has been applied. This treatment liquid drying process unit 16 mainly includes a treatment liquid drying treatment drum 46 which transports the paper P, a paper transport guide 48, and a treatment liquid drying treatment unit 50 which dries the water-absorbing layer of the paper P to be transported by the treatment liquid drying treatment drum 46 by blowing hot air to the water-absorbing layer.
The treatment liquid drying treatment drum 46 receives the paper P from the treatment liquid coating drum 42 of the treatment liquid coating unit 14 and transports the paper P to the image recording unit 18. The treatment liquid drying treatment drum 46 includes a frame formed in a cylindrical shape and rotates by being driven by a motor (not illustrated). A gripper 46A is provided on the outer peripheral surface of the treatment liquid drying treatment drum 46, and the front end of the paper P is gripped by the gripper 46A. The treatment liquid drying treatment drum 46 rotates by allowing the gripper 46A to grip the front end of the paper P. In this manner, the treatment liquid drying treatment drum 46 transports the image recording unit 18 and the paper P. Further, the treatment liquid drying treatment drum 46 of the present example is provided with a gripper 42A on two sites of the outer peripheral surface thereof. The treatment liquid drying treatment drum is disposed such that two sheets of paper P are transported in one rotation. The rotation of the treatment liquid drying treatment drum 46 and the treatment liquid coating drum 42 is controlled such that the timing of the receiving of the paper P matches the timing of the delivery of the paper P. In other words, the treatment liquid drying treatment drum 46 and the treatment liquid coating drum 42 are driven such that the peripheral speed of the treatment

liquid drying treatment drum 46 is the same as the peripheral speed of the treatment liquid coating drum 42 and are driven such that the positions of respective grippers match each other.

A paper transport guide 48 is disposed along the transport path of the paper P transported by the treatment liquid drying treatment drum 46 and guides the transport of the paper P.

The treatment liquid drying treatment unit 50 is provided in the treatment liquid drying treatment drum 46 and performs the drying treatment by blowing hot air toward the surface of the paper P to be transported by the treatment liquid drying treatment drum 46. In the present example, the configuration is made such that two treatment liquid drying treatment units 50 are provided in the treatment liquid drying treatment drum and hot air is blown toward the surface of the paper P transported by the treatment liquid drying treatment drum 46.

- Image recording unit -

The image recording unit 18 draws a color parallax picture on the water-absorbing layer of the paper P by jetting respective colors of C, M, Y, and K aqueous inks to the water-absorbing layer of the paper P. The image recording unit 18 mainly includes an image recording drum 52 which transports the paper P; a paper-pressing roller 54 which presses the paper P to be transported by the image recording drum 52 and brings the paper P into close contact with the peripheral surface of the image recording drum 52; a head unit 56 which records an image by jetting respective colors of C, M, Y, and K ink droplets to the paper P; an inline sensor 58 which serves as image reading means for reading the image recorded on the paper P; a mist filter 60 which captures the ink mist; and a drum cooling unit 62 which cools the image recording drum 52.

The image recording drum 52 functions as recording medium holding means for holding the paper P serving as a recording medium and functions as recording medium transport means for transporting the paper P serving as a recording medium. The image recording drum 52 receives the paper P from the treatment liquid drying treatment drum 46 of the treatment liquid drying process unit 16 and transports the paper P to the ink drying process unit 20. The image recording drum 52 is formed in a cylindrical shape and rotates by being driven by a motor (not illustrated) serving as driving means. A gripper is provided on the outer peripheral surface of the image recording drum 52 and the front end of the paper P is gripped by this gripper. The image recording drum 52 rotates by allowing the gripper to grip the front end of the paper P. In this manner, the image recording drum 52 transports the paper P to the ink drying process unit 20 while winding the paper P around the peripheral surface. Further, a plurality of suction holes (not illustrated) are formed on the peripheral surface of the image recording drum 52 in a predetermined pattern. Further, the paper P wound around the peripheral surface of the image recording drum 52 is sucked from these suction holes so that the paper P is transported while being suctioned and held by the peripheral surface of the image recording drum 52. In this manner, the paper P can be transported with high leveling.

The paper-pressing roller 54 is provided in the vicinity of a paper reception position (position for receiving the paper P from the treatment liquid drying treatment drum 46) of the image recording drum 52. The paper-pressing roller 54 includes a rubber roller and is provided by being pressed by the peripheral surface of the image recording drum 52. The paper P delivered to the image recording drum 52 from the treatment liquid drying treatment drum 46 is nipped by passing through the paper-pressing roller 54 and brought into close contact with the peripheral surface of the image recording drum 52.

The head unit 56 includes an ink jet head 200C which jets cyan (C) ink droplets according to the ink jet system; an ink jet head 200M which jets magenta (M) ink droplets according to the ink jet system; an ink jet head 200Y which jets yellow (Y) ink droplets according to the ink jet system; and an ink jet head 200K which jets black (K) ink droplets according to the ink jet system. The respective ink jet heads 200C, 200M, 200Y, and 200K are disposed at constant intervals along the transport path of the paper P transported by the image recording drum 52.

The respective ink jet heads 200C, 200M, 200Y, and 200K include a line head and are formed to have a length corresponding to the maximum paper width. The respective ink jet heads 200C, 200M, 200Y, and 200K are disposed such that a nozzle surface (surface on which nozzles are arranged) faces the peripheral surface of the image recording drum 52.

The respective ink jet heads 200C, 200M, 200Y, and 200K record an image to the paper P to be transported by the image recording drum 52 by the nozzles, formed on the nozzle surface, jetting liquid droplets of inks toward the image recording drum 52.

Further, the configuration of the ink jet heads 200C, 200M, 200Y, and 200K will be described later.

The inline sensor 58 functions as image reading means for reading the image recorded on the paper P. The inline sensor 58 is provided on the downstream side of the ink jet head 200K at the end of line toward the transport direction of the paper P transported by the image recording drum 52 and reads the image recorded by the ink jet heads 200C, 200M, 200Y, and 200K. The inline sensor 58 includes, for example, a line scanner and reads the image recorded by the ink jet heads 200C, 200M, 200Y, and 200K from the paper P to be transported by the image recording drum 52.

In addition, a contact prevention plate 59 is provided in the vicinity of the inline sensor 58 on the downstream

side of the inline sensor 58. In a case where the paper P floats due to the defect or the like of the transport, the contact prevention plate 59 prevents the paper P from coming into contact with the inline sensor 58.

The mist filter 60 is disposed between the ink jet head 200K at the end of line and the inline sensor 58 and captures the ink mist by sucking the air around the image recording drum 52. In this manner, by suctioning the air around the image recording drum 52 so that the ink mist is captured, it is possible to prevent the ink mist from entering the inline sensor 58 and to prevent occurrence of the reading failure or the like.

The drum cooling unit 62 cools the image recording drum 52 by blowing cold air to the image recording drum 52. The drum cooling unit 62 mainly includes an air conditioner (not illustrated) and a duct 62A which blows cold air supplied from the air conditioner to the peripheral surface of the image recording drum 52. The duct 62A cools the image recording drum 52 by blowing cold air to a region other than the transport region of the paper P with respect to the image recording drum 52. In the present example, the configuration is made such that the duct 62A blows cold air to a region which is substantially the lower half of the image recording drum 52 to cool the image recording drum 52 since the paper P is transported along an arc surface which is substantially the upper half of the image recording drum 52. Specifically, the configuration is made such that an outlet of the duct 62A is formed in an arc shape so as to cover substantially the lower half of the image recording drum 52 and cold air is blown to a region which is substantially the lower half of the image recording drum 52.

Here, the temperature of cooling the image recording drum 52 is determined based on the relationship with the temperature of the ink jet heads 200C, 200M, 200Y, and 200K (particularly the temperature of the nozzle surface), and the image recording drum 52 is cooled to a temperature lower than the temperature of the ink jet heads 200C, 200M, 200Y, and 200K. In this manner, it is possible to prevent occurrence of condensation in the ink jet heads 200C, 200M, 200Y, and 200K. That is, condensation can be induced on the image recording drum side and the occurrence of condensation (particularly the condensation occurring on the nozzle surface) in the ink jet heads 200C, 200M, 200Y, and 200K can be prevented by setting the temperature of the image recording drum 52 to be lower than the temperature of the ink jet heads 200C, 200M, 200Y, and 200K.

The paper P on which an image has been recorded by the ink jet heads 200C, 200M, 200Y, and 200K passes through the inline sensor 58. Further, the image recorded on the surface of the paper P is read in a case where the paper P passes through the inline sensor 58. The reading of the recorded image is performed as necessary and the read image is inspected to confirm the presence of jetting failure or the like. Since the image is read in a state of being suctioned and held by the image recording drum 52 during the reading, the image can be read with high accuracy. In addition, since the reading is performed immediately after the image is recorded, for example, abnormality such as jetting failure or the like can be immediately detected and can be dealt with rapidly. In this manner, wasteful recording can be prevented and generation of waste paper can be suppressed to a minimum.

Thereafter, the paper P is delivered to the ink drying process unit 20 after the suction is released.

- Ink drying treatment unit -

The ink drying process unit 20 performs the drying treatment on the paper P after an image recording and removes liquid components remaining on the surface of the paper P. The ink drying process unit 20 includes a chain gripper 64 which transports the paper P on which an image has been recorded; a back tension imparting mechanism 66 which imparts the back tension to the paper P to be transported by the chain gripper 64; and an ink drying treatment unit 68 which performs the drying treatment on the paper P to be transported by the chain gripper 64.

The chain gripper 64 is a paper transport mechanism to be commonly used in the ink drying process unit 20 and the paper discharge unit 24. Further, the chain gripper 64 receives the paper P delivered from the image recording unit 18 and transports the paper to the paper discharge unit 24.

The chain gripper 64 mainly includes a first sprocket 64A which is provided in the vicinity with the image recording drum 52; a second sprocket 64B which is provided in the paper discharge unit 24; an endless chain 64C which is wound around the first sprocket 64A and the second sprocket 64B; a plurality of chain guides (not illustrated) which guide traveling of the chain 64C; and a plurality of grippers 64D which are mounted on the chain 64C at constant intervals. The first sprocket 64A, the second sprocket 64B, the chain 64C, and the chain guide are provided in pairs and disposed on both sides of the paper P in the width direction. The grippers 64D are provided by being stretched to a pair of chains 64C.

The first sprocket 64A is provided in the vicinity of the image recording drum 52 such that the paper P to be delivered from the image recording drum 52 can be received by the gripper 64D. The first sprocket 64A is pivotally supported by a bearing (not illustrated) and rotatably provided, and a motor (not illustrated) is connected to the first sprocket 64A. The chain 64C wound around the first sprocket 64A and the second sprocket 64B is traveled by driving this motor.

The second sprocket 64B is provided to the paper discharge unit 24 such that the paper P received from the image recording drum 52 can be recovered by the paper discharge unit 24. In other words, the position where the second sprocket 64B is provided is considered as the terminal of the transport path of the paper P transported by the chain

gripper 64. The second sprocket 64B is pivotally supported by a bearing (not illustrated) and rotatably provided.

The chain 64C is formed in an endless shape and wound around the first sprocket 64A and the second sprocket 64B.

The chain guide is disposed in a predetermined position and guides the chains 64C to travel on a predetermined path (in other words, guides the paper P to be transported while traveling on a predetermined transport path). In the ink jet recording device 10 of the present example, the second sprocket 64B is disposed in a position higher than the position where the first sprocket 64A is disposed. Therefore, a traveling path in which the chain 64C is inclined in the middle thereof is formed. Specifically, the chain guide includes a first horizontal transport path 70A, an inclined transport path 70B, and a second horizontal transport path 70C.

The first horizontal transport path 70A is provided at the same height as the height of the first sprocket 64A and also provided such that the chain 64C wound around the first sprocket 64A horizontally travels.

The second horizontal transport path 70C is provided at the same height as the height of the second sprocket 64B and also provided such that the chain 64C wound around the second sprocket 64B horizontally travels.

The inclined transport path 70B is provided between the first horizontal transport path 70A and the second horizontal transport path 70C and also provided so as to connect the first horizontal transport path 70A and the second horizontal transport path 70C to each other.

The chain guide is disposed such that the first horizontal transport path 70A, the inclined transport path 70B, and the second horizontal transport path 70C are formed. Specifically, the chain guide is provided at least on a binding point between the first horizontal transport path 70A and the inclined transport path 70B and a binding point between the inclined transport path 70B and the second horizontal transport path 70C.

A plurality of the grippers 64D are mounted on the chain 64C at constant intervals. The interval between which the grippers 64D are mounted is set according to the interval set for receiving the paper P from the image recording drum 52. That is, the interval is set according to the interval set for receiving the paper P from the image recording drum 52 such that the paper P to be sequentially delivered from the image recording drum 52 can be received from the image recording drum 52 according to the appropriate timing.

The chain gripper 64 is configured as described above. The chain 64C travels in a case where the motor (not illustrated) connected to the first sprocket 64A is driven as described above. The chain 64C travels at the same speed as the peripheral speed of the image recording drum 52. Further, the timing is set such that the paper P to be delivered from the image recording drum 52 can be received by each gripper 64D.

The back tension imparting mechanism 66 imparts the back tension to the paper P to be transported while the front end thereof is gripped by the chain gripper 64. The back tension imparting mechanism 66 mainly includes a guide plate 72 and a suction mechanism (not illustrated) which sucks air from a suction hole (not illustrated) to be formed in the guide plate 72.

The guide plate 72 includes a hollow box plate having a width corresponding to the paper width. The guide plate 72 is disposed along the transport path (chain traveling path) of the paper P transported by the chain gripper 64. Specifically, the guide plate 72 is disposed along the chain 64C traveling on the first horizontal transport path 70A and the inclined transport path 70B and disposed by being spaced from the chain 64C by a predetermined distance. The rear surface (surface on a side where an image is not recorded) of the paper P to be transported by the chain gripper 64 is transported while sliding and contacting on the upper surface (surface facing the chain 64C: sliding contact surface) of the guide plate 72.

A plurality of suction holes (not illustrated) are formed on the sliding contact surface (upper surface) of the guide plate 72 in a predetermined pattern. As described above, the guide plate 72 is formed of a hollow box plate. The suction mechanism (not illustrated) sucks a hollow portion (inner portion) of the guide plate 72. In this manner, air is sucked from the suction holes formed on the sliding contact surface.

In a case where air is sucked from the suction hole of the guide plate 72, the rear surface of the paper P to be transported by the chain gripper 64 is sucked into the suction hole. In this manner, the back tension is imparted to the paper P to be transported by the chain gripper 64.

As described above, since the guide plate 72 is disposed along the chain 64C that travels on the first horizontal transport path 70A and the inclined transport path 70B, the back tension is imparted to the paper P while the paper P is transported through the first horizontal transport path 70A and the inclined transport path 70B.

The ink drying treatment unit 68 is provided in the chain gripper 64 (particularly the site including the first horizontal transport path 70A) and performs the drying treatment on the paper P to be transported through the first horizontal transport path 70A. The ink drying treatment unit 68 performs the drying treatment by blowing hot air to the surface of the paper P to be transported through the first horizontal transport path 70A. A plurality of the ink drying treatment units 68 are provided along the first horizontal transport path 70A. The number of ink drying treatment units to be provided is set according to the treatment capacity of the ink drying treatment unit 68, the transport speed (printing speed) of the paper P. In other words, the number of ink drying treatment units is set such that the paper P received from the image recording unit 18 is dried while being transported through the first horizontal transport path 70A. Accordingly, the length of the first horizontal transport path 70A is also set in consideration of the capacity of the ink drying treatment unit 68.

In addition, the humidity of the ink drying process unit 20 is increased by performing the drying treatment. In a case where the humidity thereof is increased, since the drying treatment cannot be efficiently performed, it is preferable that exhaust means is provided in the ink drying process unit 20 together with the ink drying treatment unit 68 and humid air generated by the drying treatment is forcibly exhausted. The exhaust means can be configured such that an exhaust duct is provided in the ink drying process unit 20 and the air of the ink drying process unit 20 is exhausted by the exhaust duct.

The ink drying process unit 20 is configured as above. The paper P delivered from the image recording drum 52 of the image recording unit 18 is received by the chain gripper 64. The chain gripper 64 transports the paper P along with the planar guide plate 72 by allowing the gripper 64D to grip the front end of the paper P. The paper P delivered to the chain gripper 64 is firstly transported to the first horizontal transport path 70A. During the transport of the paper P through the first horizontal transport path 70A, the drying treatment is performed on the paper P by the ink drying treatment unit 68 provided in the chain gripper 64. In other words, the drying treatment is performed by blowing hot air to the surface (water-absorbing layer). During the treatment, the drying treatment is performed on the paper P while the back tension is imparted to the paper P by the back tension imparting mechanism 66. In this manner, the drying treatment can be performed while suppressing the deformation of the paper P.

- Paper discharge unit -

The paper discharge unit 24 discharges the paper P on which a series of image recording treatments are performed and then recovers the paper P. The paper discharge unit 24 mainly includes a chain gripper 64 which transports the paper P and a paper discharge stand 76 which recovers the paper P by stacking the paper P.

As described above, the chain gripper 64 is commonly used together with the ink drying process unit 20. The chain gripper 64 releases the paper P on the paper discharge stand 76 and allows the paper P to be stacked on the paper discharge stand 76.

The paper discharge stand 76 recovers the paper P by stacking the paper P released from the chain gripper 64. The paper discharge stand 76 includes paper rests (a front paper rest, a rear paper rest, a side paper rest, and the like) (not illustrated) such that the paper P is orderly stacked thereon.

Further, the paper discharge stand 76 is provided so as to be elevated and lowered by a paper discharge stand elevating device (not illustrated). The paper discharge stand elevating device interlocks with increase and decrease of the paper P stacked on the paper discharge stand 76 so that the drive is controlled and elevates and lowers the paper discharge stand 76 such that the paper P on the top is constantly positioned at a certain height.

(Control system)

Fig. 4 is a block diagram showing a schematic configuration of a control system of the ink jet recording device according to the present embodiment.

As shown in the figure, the ink jet recording device 10 includes a system controller 100, a communication unit 102, an image memory 104, a transport control unit 110, a paper feed control unit 112, a treatment liquid application control unit 114, a treatment liquid drying control unit 116, an image recording control unit 118, an ink drying control unit 120, a paper discharge control unit 124, an operation unit 130, a display unit 132, and a non-volatile memory 134.

The system controller 100 functions as control means for performing overall control of respective units of the ink jet recording device 10 and also functions as arithmetic means for performing various arithmetic treatments. The system controller 100 includes a CPU, a ROM, and a RAM and is operated according to a predetermined control program. The control program executed by the system controller 100 and various pieces of data necessary for control are stored in the ROM.

The communication unit 102 includes a required communication interface and transmits and receives data between the communication interface and a host computer connected to the communication interface.

The image memory 104 functions as temporary storage means for storing various pieces of data including image data and reads and writes data through the system controller 100. The image data obtained from the host computer through the communication unit 102 is stored in the image memory 104.

The transport control unit 110 controls a transport system of the paper P in the ink jet recording device 10. In other words, the transport control unit 110 controls the driving of a tape feeder 36A, the front contact 38, and the paper feed drum 40 in the paper feed unit 12 and also controls the driving of the treatment liquid coating drum 42 in the treatment liquid coating unit 14, the treatment liquid drying treatment drum 46 in the treatment liquid drying process unit 16, and image recording drum 52 in the image recording unit 18. Further, the transport control unit 110 controls the driving of the chain gripper 64 and the back tension imparting mechanism 66 commonly used for the ink drying process unit 20

and the paper discharge unit 24.

The transport control unit 110 controls the transport system according to an instruction from the system controller 100 and controls the paper P to be transported from the paper feed unit 12 to the paper discharge unit 24 without delay.

The paper feed control unit 112 controls the paper feed unit 12 according to an instruction from the system controller 100. Specifically, the paper feed control unit 112 controls the driving of the sucker device 32 and the paper feed stand elevating mechanism so that the paper P stacked on the paper feed stand 30 is sequentially fed one by one without overlapping.

The treatment liquid application control unit 114 controls the treatment liquid coating unit 14 according to an instruction from the system controller 100. Specifically, the treatment liquid application control unit 114 controls the driving of the treatment liquid coating device 44 such that the paper P to be transported by the treatment liquid coating drum 42 is coated with the treatment liquid.

The treatment liquid drying control unit 116 controls the treatment liquid drying process unit 16 according to an instruction from the system controller 100. Specifically, the treatment liquid drying control unit 116 controls the driving the treatment liquid drying treatment unit 50 such that the paper P to be transported by the treatment liquid drying treatment drum 46 is subjected to the drying treatment.

The image recording control unit 118 controls the image recording unit 18 according to an instruction from the system controller 100. Specifically, the image recording control unit 118 controls the driving of the ink jet heads 200C, 200M, 200Y, and 200K such that a predetermined image is recorded on the paper P to be transported by the image recording drum 52. Further, the image recording control unit 118 controls the operation of the inline sensor 58 such that the recorded image is read.

The ink drying control unit 120 controls the ink drying process unit 20 according to an instruction from the system controller 100. Specifically, the ink drying control unit 120 controls the driving of the ink drying treatment unit 68 such that hot air is blown to the paper P to be transported by the chain gripper 64.

The paper discharge control unit 124 controls the paper discharge unit 24 according to an instruction from the system controller 100. Specifically, the paper discharge control unit 124 controls the driving of the paper discharge stand elevating mechanism and controls the paper P to be stacked on the paper discharge stand 76.

The operation unit 130 includes required operation means (for example, an operation button, a keyboard, or a touch panel) and outputs operation information input from the operation means to the system controller 100. The system controller 100 executes various treatments according to the operation information input from the operation unit 130.

The display unit 132 includes a required display device (for example, a liquid crystal display (LCD) panel) and displays required information on a display device according to an instruction from the system controller 100.

The non-volatile memory 134 is configured of, for example, an electrically erasable programmable read only memory (EEPROM), and various pieces of data necessary for control and various pieces of setting information are recorded therein.

As described above, the image data recorded on the paper is received by the ink jet recording device 10 from the host computer to the communication unit 102. The obtained image data is stored in the image memory 104.

The system controller 100 generates dot data by performing a required signal treatment on the image data stored in the image memory 104. In addition, the system controller 100 controls the driving of the respective ink jet heads 200C, 200M, 200Y, and 200K of the image recording unit 18 according to the generated dot data and records an image represented by the image data on the paper.

The dot data is typically generated by performing a color conversion treatment and a halftone treatment on the image data. The color conversion treatment is a treatment of converting image data (for example, RGB 8-bit image data) expressed as sRGB or the like into data related to the amounts of respective colors of inks used in the ink jet recording device 10 (in the present example, image data is converted into data related to the amounts of respective colors of C, M, Y, and K inks). The halftone treatment is a treatment of converting the data related to the amounts of respective colors of inks, which is generated by the color conversion treatment into data related to respective colors of dots through a treatment such as error diffusion or the like.

The system controller 100 generates data related to respective colors of dots by performing the color conversion treatment and the halftone treatment on the image data. In addition, the system controller 100 controls the driving the corresponding ink jet head according to the data related to the generated respectively colors of dots so that an image represented by the image data is recorded on the paper.

As described below, the system controller 100 allows an image in a predetermined test pattern to be drawn on the paper P at the time of positioning of a head module which includes the ink jet heads 200C, 200M, 200Y, and 200K, allows the inline sensor 58 to read the drawn image, performs a treatment on the read image, and performs a treatment of calculating the correction amount of a position where each head module is mounted.

Although not illustrated, the ink jet recording device 10 includes a maintenance unit adjacent to the image recording unit 18. The maintenance unit performs maintenance of the ink jet head 200. The maintenance unit includes a cap which covers the nozzle surface of the ink jet head 200; and a cleaning device which cleans the nozzle surface.

The head unit 56 is provided so as to be movable between the image recording unit 18 and the maintenance unit by a head unit transfer mechanism, and a maintenance treatment is performed by the maintenance unit as necessary. For example, the operation is stopped for a long period of time, the ink jet head 200 is moved to the maintenance unit so that the nozzle surface is covered by the cap. In this manner, the drying of the nozzle surface is prevented. Further, since the nozzle surface becomes dirty after use, the ink jet head 200 allows the cleaning device to periodically clean the nozzle surface. The cleaning of the nozzle surface is carried out by wiping the nozzle surface with a blade or a web.

(Configuration of head)

As described above, the ink jet heads 200M, 200K, 200C, and 200Y of the present embodiment includes a line head having a length corresponding to the paper width.

Since the configurations of respective ink jet heads 200M, 200K, 200C, and 200Y are basically the same as each other, the configuration of the ink jet head 200 will be described here.

Fig. 5 is a bottom view (the head is viewed from the nozzle surface side) illustrating the structure of the main portions of the head. Fig. 6 is an enlarged view illustrating an enlarged portion of Fig. 5.

As illustrated in the figure, the ink jet head 200 is configured by connecting a plurality of head modules 210 in one array. Respective head modules 210 have the same structure, and one ink jet head 200 is configured by the head modules 210 being mounted on a base frame 212 in one array.

Hereinafter, the configurations of the head module 210 and the base frame 212 will be described.

In the description below, a direction in which nozzles of the ink jet head 200 are arranged is set as an X direction, a direction orthogonal to the nozzle surface is set as a Z direction, and a direction in parallel with the nozzle surface or orthogonal to the X direction is set as a Y direction. The X direction, the Y direction, and the Z direction are orthogonal to each other.

(Head module)

The head module 210 is a so-called short head and is capable of recording an image having a predetermined printing width alone. One long head is configured by connecting a plurality of head modules 210 along the direction of the nozzle array (direction orthogonal to the transport direction of the paper P).

The head module 210 includes an ink jet head 214 which jets an ink; and a bracket 216 for mounting the ink jet head 214 on the base frame 212.

The ink jet head 214 mainly includes a head main body portion 218; and an electrical piping unit (not illustrated).

The head main body portion 218 has a rectangular plate shape. The head main body portion 218 has a nozzle surface 222 on the lower surface portion thereof. The nozzle surface 222 includes a strip-like nozzle forming region 222A in the central portion thereof. The nozzle forming region 222A has a constant width and is formed along the X direction. The nozzles N are formed in the nozzle forming region 222A.

Here, in the ink jet head 214 of the present example, nozzles N are arranged in a two-dimensional matrix shape as illustrated in Fig. 6. Specifically, the nozzles N are arranged at a constant pitch along the X direction and arranged at a constant pitch along a direction inclined at a predetermined angle with respect to the X direction. The substantial interval between nozzles N to be projected in the X direction can be reduced by arranging the nozzles in the above-described manner. In this case, the direction in which the nozzles N are arranged (direction of the nozzle array) is set as the X direction. In addition, the nozzles N may be in the form of being arranged along the X direction in an array.

(Recording operation performed by ink jet recording device)

Next, the operation of the ink jet recording device 10 during image recording, which is configured in the above-described manner will be described.

In a case where the system controller 100 is instructed to start a printing job through the operation unit 130, a cycle-up treatment is performed. That is, a preparation operation is performed by each unit such that a stabilized operation can be performed.

In a case where the cycle-up process is completed, a printing treatment is started. In other words, the paper P is sequentially fed from the paper feed unit 12.

In the paper feed unit 12, the paper P stacked on the paper feed stand 30 is sequentially fed using the sucker device 32 one by one from the top of the stack. The paper P fed from the sucker device 32 is stacked on the feeder board 36 one by one through the pair 34 of paper feed rollers.

The paper P stacked on the feeder board 36 is sent by the tape feeder 36A included in the feeder board 36 and is transported to the paper feed drum 40 while sliding on the feeder board 36. At this time, the paper P to be sequentially fed is transported to the paper feed drum 40 while sliding on the feeder board 36 one by one without

overlapping. Further, the upper surface thereof is pressed to the feeder board 36 by the retainer 36B during the transport. In this manner, the unevenness is corrected.

The paper P transported to the terminal of the feeder board 36 is delivered to the paper feed drum 40 after the front end of the paper P is brought into contact with the front contact 38. In this manner, the paper P can be fed to the paper feed drum 40 while maintaining a constant posture without causing inclination.

The paper feed drum 40 receives the paper P by allowing the gripper 40A to grip the front end of the paper P while rotating and transports the paper P toward the treatment liquid coating unit 14.

The paper P transported to the treatment liquid coating unit 14 is delivered to the treatment liquid coating drum 42 from the paper feed drum 40.

The treatment liquid coating drum 42 receives the paper P by allowing the gripper 40A to grip the front end of the paper P while rotating and transports the paper P toward the treatment liquid drying process unit 16. The surface of the paper P is coated with the treatment liquid by the treatment liquid coating device 44 during the transport of the paper P transported by the treatment liquid coating drum 42.

The paper P whose surface is coated with the treatment liquid is delivered from the treatment liquid coating drum 42 to the treatment liquid drying treatment drum 46.

The treatment liquid drying treatment drum 46 receives the paper P by gripping the front end of the paper P while rotating and transports the paper P toward the image recording unit 18. By blowing hot air sent from the treatment liquid drying treatment unit 50 to the surface of the paper P during the transport of the paper P transported by the treatment liquid drying treatment drum 46, the paper P is subjected to the drying treatment. In this manner, the solvent components in the treatment liquid are removed and an ink aggregation layer is formed on the surface (water-absorbing layer) of the paper P.

The paper P on which the drying treatment using the treatment liquid is performed is delivered to the image recording drum 52 from the treatment liquid drying treatment drum 46.

The image recording drum 52 receives the paper P by gripping the front end of the paper P while rotating and transports the paper P toward the ink drying process unit 20. An image is recorded on the paper P by jetting liquid droplets of respective colors of C, M, Y, and K inks to the surface of the paper P using the ink jet heads 200C, 200M, 200Y, and 200K during the transport of the paper P transported by the image recording drum 52. The image recorded during this transporting process is read by the inline sensor 58. At this time, the paper P is transported while being suctioned and held by the peripheral surface of the image recording drum 52. In this suctioned and held state, the image is recorded and the recorded image is read. In this manner, a parallax picture can be recorded with high accuracy and the image can be read with high accuracy.

The paper P on which a parallax picture is recorded is delivered to the chain gripper 64 from the image recording drum 52.

The chain gripper 64 receives the paper P by allowing the gripper 64D included in the traveling chain 64C to grip the front end of the paper P and transports the paper P toward the paper discharge unit 24.

The paper P is subjected to the ink drying treatment during the transport of the paper P transported by the chain gripper 64. In other words, hot air is blown to the surface of the paper P from the ink drying treatment unit 68 provided on the first horizontal transport path 70A. In this manner, the drying treatment is performed. At this time, the paper P is transported while the rear surface thereof is suctioned and held by the guide plate 72 and the back tension is imparted to the paper P. In this manner, the drying treatment can be performed while suppressing deformation of the paper P.

The paper P (paper P having passed through the ink drying process unit 20) on which the drying treatment has been completed is transported toward the paper discharge unit 24, released from the gripper 64D in the paper discharge unit 24, and then stacked on the paper discharge stand 76.

The treatment of recording a parallax picture is completed by performing the series of operations described above. As described above, since the paper P is continuously fed from the paper feed unit 12, treatments are continuously performed on the paper P in each unit.

According to the embodiment of the present invention, from the viewpoint of forming a parallax picture with high accuracy, the amount of liquid droplets of ink jetted from the ink jet heads is preferably in a range of 1 pl (pico liter) to 10 pl and more preferably in a range of 1.5 pl to 6 pl from the viewpoint of obtaining an image with high accuracy. From the viewpoints of improving the image irregularity and improving connection of continuous gradations, it is also advantageous that the ink is jetted by combining a different amount of liquid droplets, and the embodiment of the present invention can be suitably used even in this case.

Further, from the viewpoint of forming a high-resolution parallax picture, it is preferable that the aqueous ink is jetted at a resolution of 1200 dpi or greater.

Particularly, it is preferable to use an ink jet recording device which is capable of applying the aqueous ink under conditions of a resolution of 1200 dpi or greater and a minimum liquid droplet size of 3 pl or less. From the viewpoint of productivity, it is preferable to use an ink jet recording device which is capable of forming an image according to a

single pass system.

As the ink jet recording device having the above-described performance, Jet Press (registered trademark) 720 (manufactured by Fujifilm Corporation) can be suitably used.

[Bonding step]

During the bonding step, a lenticular lens is bonded to the water-absorbing layer side on which a parallax picture of the recording medium has been formed. For example, the lenticular lens is bonded through a transparent adhesive layer between the flat surface of the lenticular lens and the recording medium on which a parallax picture has been formed. During the bonding, since deformation of expansion or contraction does not occur in the recording medium on which a parallax picture has been formed, the bonding can be carried out at a position where the lenticular lens and the parallax picture are entirely designed.

(Lenticular lens)

The lenticular lens has a flat surface on a side where the lenticular lens is bonded to the recording medium on which a parallax picture has been formed has a structure in which a plurality of convex lenses having a surface in a semi-cylindrical shape are arranged in parallel with each other on a side where the parallax picture is observed by bonding the lenticular lens to the recording medium.

The lenticular lens is formed of a resin having optical transmittance.

Examples of the resin forming the lenticular lens include a polymethyl methacrylate resin (PMMA), a polycarbonate resin, a polystyrene resin, a methacrylate-styrene copolymer resin (MS resin), an acrylonitrile-styrene copolymer resin (AS resin), a polypropylene resin, a polyethylene resin, a polyethylene terephthalate resin, a glycol-modified polyethylene terephthalate resin, a polyvinyl chloride resin (PVC), a thermoplastic elastomer, copolymers thereof, and a cycloolefin polymer. From the viewpoint of ease of performing melt extrusion, it is preferable to use a resin having a low melt viscosity such as a polymethyl methacrylate resin (PMMA), a polycarbonate resin, a polystyrene resin, a methacrylate-styrene copolymer resin (MS resin), a polyethylene resin, a polyethylene terephthalate resin, or a glycol-modified polyethylene terephthalate resin. Since the lens shape formed on the surface on an embossing roller is easily transferred and cracks are unlikely to occur in the lens layer at the time of embossing, it is more preferable to use a glycol-modified polyethylene terephthalate resin. The lenticular lens may be formed to contain a plurality of resins.

The lenticular lens has a thickness of, for example, 50 μm to 200 μm and has a lenticular lens shape in which a plurality of convex lenses in a cylindrical shape are arranged in parallel on the surface. The lenticular lens shape is formed by setting the lens radius to be in a range of 100 μm to 200 μm, the lens height to be in a range of 50 μm to 100 μm, and the lens pitch to be in a range of 100 μm to 257 μm. However, the numerical values are not limited to these, and values such as 127 μm and 254 μm may be exemplified. The lenticular lens shape indicates a plate-like lens array in which the shapes obtained by vertically dividing a column are vertically arranged in parallel, that is, a shape in which cylindrical lenses are two-dimensionally arranged.

[Examples]

Hereinafter, the embodiment of the present invention will be described in detail with reference to examples. The materials, the use amounts, the ratios, the treatment contents, and the treatment procedures shown in the examples described below can be changed as appropriate within the range not departing from the gist of the present invention. Therefore, the scope of the present invention is not limited to the specific examples shown below.

In the description below, "part" and "%" indicate "part by mass" and "% by mass" unless otherwise noted.

[Comparative Example 1 and Examples 1 and 2]

<Printing conditions>

Jet Press (registered trademark) 720 (manufactured by Fujifilm Corporation) was used. The specification and the printing conditions for Jet Press (registered trademark) 720 are described below.

- Drawing system: single pass drawing
- Printing speed: 2700 sheets/hr (linear speed: 30 m/min)
- printing density: 1200 dpi x 1200 dpi
- Volume of ink liquid droplets

Small droplets: 2 pl, medium droplets: 7 pl, large droplets: 10 pl

- Printing system

  1) a treatment liquid coating unit, 2) an ink jet drawing unit, 3) a drying unit, and 4) a fixing unit are respectively arranged in on four impression cylinders in an impression cylinder transport system. The order of each step is 1) a treatment liquid coating step, 2) an ink jet drawing step, 3) a drying step, and 4) a fixing step from the upstream side.

- Conditions for applying treatment liquid

  Coating amount: 1 ml/$m^2$
  • Physical properties of treatment liquid
  Viscosity: 2.9 mPa·s, surface tension: 41 mN/m, pH: 0.78
  • Drying conditions
  Cylinder temperature: 70°C, hot air: 70°C, + carbon heater, base material surface temperature: 50°C

- Fixing temperature

  Cylinder temperature: 45°C, roller temperature: 50°C, hot air: 70°C, base material surface temperature: 50°C

- Materials to be used

  Treatment liquid: the following treatment liquid
  Aqueous ink: the following yellow ink, magenta ink, cyan ink, and black ink

<Synthesis of water-soluble polymer dispersant Q-1>

A monomer supply composition was prepared by mixing methacrylic acid (172 parts), benzyl methacrylate (828 parts), and isopropanol (375 parts). Further, an initiator supply composition was prepared by mixing 2,2-azobis(2-methylbutyronitrile) (22.05 parts) and isopropanol (187.5 parts).
Next, isopropanol (187.5 parts) was heated to 80°C in a nitrogen atmosphere, and a mixture of the monomer supply composition and the initiator supply composition was added dropwise thereto for 2 hours. After dropwise addition, the temperature of the solution was maintained to 80°C for 4 hours and then lowered to 25°C.
After the cooling, the solvent was removed under reduced pressure, thereby obtaining a water-soluble polymer dispersant Q-1 having a weight-average molecular weight of approximately 30000 and an acid value of 112 mgKOH/g.

<Preparation of cyan pigment dispersion C-1>

0.8 equivalent of the amount of methacrylic acid in the water-soluble polymer dispersant Q-1 (150 parts) obtained in the above-described manner was neutralized using a potassium hydroxide aqueous solution, and then ion exchange water was added to the aqueous solution such that the concentration of the water-soluble polymer dispersant was adjusted to 25% by mass, thereby obtaining a water-soluble polymer dispersant aqueous solution.
The water-soluble polymer dispersant aqueous solution (124 parts), Pigment Blue 15:3 (cyan pigment) (48 parts), water (75 parts), and dipropylene glycol (30 parts) were mixed and then dispersed until a desired volume average particle diameter was obtained using a beads mill (bead diameter: 0.1 mmϕ, zirconia beads), thereby obtaining a dispersion of polymer-coated cyan pigment particles (uncross-linked dispersion C-1) having a pigment concentration of 15% by mass.
DENACOL (registered trademark) EX-321 (cross-linking agent, manufactured by Nagase ChemteX Corporation) (1.3 parts) and a boric acid aqueous solution (concentration of boric acid:4% by mass) (14.3 parts) were added to the uncross-linked dispersion C-1 (136 parts) to cause a reaction at 50°C for 6 hours and 30 minutes, and the solution was cooled to 25°C, thereby obtaining a cross-linked dispersion C-1.
Next, ion exchange water was added to the obtained cross-linked dispersion C-1, ultrafiltration was performed using a stirring type Ultra Holder (manufactured by ADVANTEC MFS, Inc.) and an ultrafiltration filter (manufactured by ADVANTEC MFS, Inc., molecular cutoff: 50000, Q0500076E ultrafilter), and then the solution was purified such that the concentration of dipropylene glycol in the dispersion became 0.1% by mass or less. Thereafter, the resultant was concentrated until the pigment concentration became 15% by mass, thereby obtaining a cyan pigment dispersion C-1.
A coloring material contained in the cyan pigment dispersion C-1 is a resin-coated pigment formed by coating

at least a part of the surface of Pigment Blue 15:3 (cyan pigment) with the water-soluble polymer dispersant Q-1 cross-linked by a cross-linking agent.

<Preparation of magenta pigment dispersion M-1>

A magenta pigment dispersion M-1 was obtained in the same manner as the preparation of the cyan pigment dispersion C-1 except that Pigment Red 122 (magenta pigment) was used in place of Pigment Blue 15:3 (cyan pigment) in the preparation of the cyan pigment dispersion C-1.

<Preparation of yellow pigment dispersion Y-1>

A yellow pigment dispersion Y-1 was obtained in the same manner as the preparation of the cyan pigment dispersion C-1 except that Pigment Yellow 74 (yellow pigment) was used in place of Pigment Blue 15:3 (cyan pigment) in the preparation of the cyan pigment dispersion C-1.

<Preparation of black pigment dispersion K-1>

A black pigment dispersion K-1 was obtained in the same manner as the preparation of the cyan pigment dispersion C-1 except that carbon black MA-100 (black pigment) was used in place of Pigment Blue 15:3 (cyan pigment) in the preparation of the cyan pigment dispersion C-1.

<Synthesis of self-dispersing polymer particles P-1 (resin particles)>

360.0 g of methyl ethyl ketone was put into a 2L three-neck flask provided with a stirrer, a thermometer, a reflux cooling pipe, and a nitrogen gas introduction pipe and then heated to 75°C. Thereafter, a mixed solution formed of 72.0 g of isobornyl methacrylate, 252.0 g of methyl methacrylate, 36.0 g of methacrylic acid, 72 g of methyl ethyl ketone, and 1.44 g of "V-601" (polymerization initiator, manufactured by Wako Pure Chemical Industries, Ltd., compound name: (dimethyl 2,2'-azobis(2-methylpropionate)) was added dropwise at a constant speed such that the dropwise addition was completed for 2 hours while the temperature in the flask was maintained to 75°C. A solution formed of 0.72 g of "V-601" and 36.0 g of methyl ethyl ketone was added thereto after the dropwise addition was completed, and a solution formed of 0.72 g of "V-601" and 36.0 g of isopropanol was added thereto after the solution was stirred at 75°C for 2 hours, and then the solution was stirred at 75°C for 2 hours. Thereafter, the solution was heated to 85°C and continuously stirred for 2 hours, thereby obtaining a polymer solution of an isobornyl methacrylate/methyl methacrylate/methacrylic acid (20/70/10 [mass ratio]) copolymer.

The weight-average molecular weight (Mw) of the obtained copolymer, measured in the same manner as described above, was 60000 (calculated using gel permeation chromatography (GPC) in terms of polystyrene), and the acid value thereof was 64.9 mgKOH/g.

Next, 668.3 g of the obtained polymer solution was weighed, 388.3 g of isopropanol and 145.7 ml of a 1 mol/L NaOH aqueous solution were added to the solution, and the temperature in the reaction container was increased to 80°C. Thereafter, 720.1 g of distilled water was added dropwise thereto at a speed of 20 ml/min and dispersed in the solution, and the temperature in the reaction container was maintained at 80°C for 2 hours, 85°C for 2 hours, and then 90°C for 2 hours under atmospheric pressure. Thereafter, the pressure inside the reaction container was reduced, and a total amount of 913.7 g of isopropanol, methyl ethyl ketone, and distilled water were distilled off, thereby obtaining an aqueous dispersion of self-dispersing polymer particles P-1 (resin particles) having a concentration of solid contents (concentration of polymer particles) of 28.0% by mass.

The glass transition temperature (Tg) of the self-dispersing polymer particles P-1 was measured according to the following method, and the temperature was 145°C.

-Measurement of glass transition temperature (Tg) -

0.5 g of the aqueous dispersion of self-dispersing polymer particles in solid content was dried at 50°C for 4 hours under reduced pressure, thereby obtaining a polymer solid content. The Tg of the obtained polymer solid content was measured using a differential scanning calorimeter (DSC) EXSTAR6220 (manufactured by Hitachi High-Tech Science Corporation). Specifically, 5 mg of the polymer solid content was sealed by an aluminum pan, the temperature of the polymer solid content was changed according to the following temperature profile in a nitrogen atmosphere, and then the Tg was acquired based on the data obtained by measurement at the time of the second temperature increase. Further, the melting point was not observed within the range of the following temperature profile.

- Temperature profile in measurement of Tg of resin particles -
  30°C → -50°C (cooling at 50°C/min)
- 50°C → 220°C (heating at 20°C/min)
  220°C → -50°C (cooling at 50°C/min)
- 50°C → 220°C (heating at 20°C/min)

<Synthesis of water-soluble polymer compound (water-soluble polymer)>

The water-soluble polymer compound (water-soluble polymer 1) used as a component in the treatment liquid was synthesized.

This synthesis was performed according to the description in paragraphs 0200 to 0204 and 0229 of JP2013-001854A.

The structure of the water-soluble polymer 1 is shown below.

Further, in the water-soluble polymer 1 shown below, the numerical values on the lower right of each structural unit represent the mass ratios (% by mass) and the Mw represents the weight-average molecular weight.

Water-soluble polymer 1

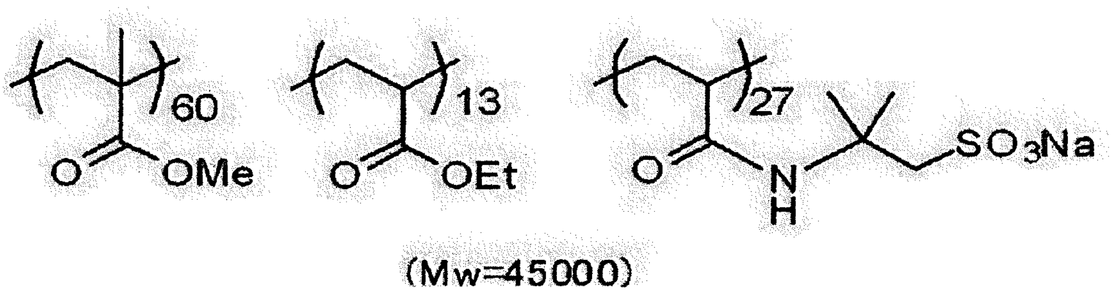

(Mw=45000)

- Composition of magenta ink -

- Magenta pigment dispersion M-1 ··· 40.0% by mass
- SUNNIX (registered trademark) GP250 ··· 6.0% by mass (manufactured by SANYO CHEMICAL INDUSTRIES, LTD., water-soluble solvent)
- PEG-200 ··· 2.5% by mass (manufactured by SANYO CHEMICAL INDUSTRIES, LTD., water-soluble solvent)
- Propylene glycol ··· 7.0% by mass (manufactured by ADEKA CORPORATION, water-soluble solvent)
- MFTG ··· 2.0% by mass (manufactured by Nippon Nyukazai Co., Ltd., water-soluble solvent)
- Olefin (registered trademark) E1010 ··· 0.3% by mass (manufactured by Nissin Chemical Co., Ltd., surfactant)
- Olefin (registered trademark) E1020 ··· 1.0% by mass (manufactured by Nissin Chemical Co., Ltd., surfactant)
- Self-dispersing polymer particles P-1 ··· 5.0% by mass (resin particles)
- PVP K-15 ··· 0.2% by mass (manufactured by ISB CORPORATION)
- Urea ··· 5.0% by mass
- SELOSOL 524 ··· 3.0% by mass (manufactured by CHUKYO YUSHI CO., LTD.)
- SNOWTEX (registered trademark) XS ··· 0.3% by mass (manufactured by Nissan Chemical Industries, Ltd., colloidal silica)
- CAPSTONE (registered trademark) FS-63 ··· 0.01% by mass (manufactured by Dupont, surfactant)
- BYK (registered trademark)-024 ··· 0.01% by mass (manufactured by Big Chemie Japan Co., Ltd., anti-foaming agent)
- Ion exchange water ··· residual amount of 100% by mass in total

- Composition of cyan ink -

- Cyan pigment dispersion C-1 ··· 20.0% by mass

- SUNNIX (registered trademark) GP250 ··· 6.0% by mass (manufactured by SANYO CHEMICAL INDUSTRIES, LTD., water-soluble solvent)
- PEG-200 ··· 3.5% by mass (manufactured by SANYO CHEMICAL INDUSTRIES, LTD., water-soluble solvent)
- Propylene glycol ··· 6.0% by mass (manufactured by ADEKA CORPORATION, water-soluble solvent)
- MFTG ··· 2.0% by mass (manufactured by Nippon Nyukazai Co., Ltd., water-soluble solvent)
- Olefin (registered trademark) E1010 ··· 0.3% by mass (manufactured by Nissin Chemical Co., Ltd., surfactant)
- Olefin (registered trademark) E1020 ··· 1.0% by mass (manufactured by Nissin Chemical Co., Ltd., surfactant)
- Self-dispersing polymer particles P-1 ··· 9.0% by mass (resin particles)
- PVP K-15 ··· 0.2% by mass (manufactured by ISB CORPORATION)
- Urea ··· 5.0% by mass
- SELOSOL 524 ··· 3.0% by mass (manufactured by CHUKYO YUSHI CO., LTD.)
- Potassium nitrate ··· 0.05% by mass (inorganic salt)
- SNOWTEX (registered trademark) XS ··· 0.3% by mass (manufactured by Nissan Chemical Industries, Ltd., colloidal silica)
- CAPSTONE (registered trademark) FS-63 ··· 0.01% by mass (manufactured by Dupont, surfactant)
- BYK (registered trademark)-024 ··· 0.01% by mass (manufactured by Big Chemie Japan Co., Ltd., anti-foaming agent)
- Ion exchange water ··· residual amount of 100% by mass in total

- Composition of yellow ink -

- Yellow pigment dispersion Y-1 ··· 30.0% by mass
- SUNNIX (registered trademark) GP250 ··· 7.0% by mass (manufactured by SANYO CHEMICAL INDUSTRIES, LTD., water-soluble solvent)
- PEG-200 ··· 2.5% by mass (manufactured by SANYO CHEMICAL INDUSTRIES, LTD., water-soluble solvent)
- Propylene glycol ··· 5.0% by mass (manufactured by ADEKA CORPORATION, water-soluble solvent)
- MFTG ··· 2.0% by mass (manufactured by Nippon Nyukazai Co., Ltd., water-soluble solvent)
- Olefin (registered trademark) E1010 ··· 0.3% by mass (manufactured by Nissin Chemical Co., Ltd., surfactant)
- Olefin (registered trademark) E1020 ··· 1.0% by mass (manufactured by Nissin Chemical Co., Ltd., surfactant)
- Self-dispersing polymer particles P-1 ··· 8.0% by mass (resin particles)
- PVP K-15 ··· 0.2% by mass (manufactured by ISB CORPORATION)
- Urea ··· 5.0% by mass
- SELOSOL 524 ··· 3.0% by mass (manufactured by CHUKYO YUSHI CO., LTD.)
- Potassium nitrate ··· 0.05% by mass (inorganic salt)
- SNOWTEX (registered trademark) XS ··· 0.3% by mass (manufactured by Nissan Chemical Industries, Ltd., colloidal silica)
- CAPSTONE (registered trademark) FS-63 ··· 0.01% by mass (manufactured by Dupont, surfactant)
- BYK (registered trademark)-024 ··· 0.01% by mass (manufactured by Big Chemie Japan Co., Ltd., anti-foaming agent)
- Ion exchange water ··· residual amount of 100% by mass in total

- Composition of black ink -

- Black pigment dispersion K-1 ··· 15.0% by mass
- Magenta pigment dispersion M-1 ··· 4.0% by mass
- Cyan pigment dispersion C-1 ··· 4.0% by mass
- SUNNIX (registered trademark) GP250 ··· 8.0% by mass (manufactured by SANYO CHEMICAL INDUSTRIES, LTD., water-soluble solvent)
- PEG-200 ··· 2.5% by mass (manufactured by SANYO CHEMICAL INDUSTRIES, LTD., water-soluble solvent)
- Propylene glycol ··· 1.5% by mass (manufactured by ADEKA CORPORATION, water-soluble solvent)
- MFTG ··· 2.0% by mass (manufactured by Nippon Nyukazai Co., Ltd., water-soluble solvent)
- Olefin (registered trademark) E1010 ··· 0.3% by mass (manufactured by Nissin Chemical Co., Ltd., surfactant)
- Olefin (registered trademark) E1020 ··· 1.0% by mass (manufactured by Nissin Chemical Co., Ltd., surfactant)
- Self-dispersing polymer particles P-1 ··· 8.0% by mass (resin particles)
- PVP K-15 ··· 0.2% by mass (manufactured by ISB CORPORATION)
- Urea ··· 5.0% by mass

- SELOSOL 524 ··· 3.0% by mass (manufactured by CHUKYO YUSHI CO., LTD.)
- lithium chloride ··· 0.01% by mass (inorganic salt)
- SNOWTEX (registered trademark) XS ··· 0.3% by mass (manufactured by Nissan Chemical Industries, Ltd., colloidal silica)
- CAPSTONE (registered trademark) FS-63 ··· 0.01% by mass (manufactured by Dupont, surfactant)
- BYK (registered trademark)-024 ··· 0.01% by mass (manufactured by Big Chemie Japan Co., Ltd., anti-foaming agent)
- Ion exchange water ··· residual amount of 100% by mass in total

<Preparation of treatment liquid>

The components having the following composition were mixed to obtain a treatment liquid.

In regard to the physical properties of the prepared treatment liquid, the viscosity was 2.9 mPa·s (25°C), the surface tension was 41.0 mN/m (25°C), and the pH was 0.78 (25°C).

Here, the viscosity, the surface tension, and the pH were respectively measured using a VISCOMETER TV-22 (manufactured by TOKI SANGYO CO., LTD.), an Automatic Surface Tensiometer CBVP-Z (manufactured by Kyowa Interface Science Co., Ltd.), and a pH meter WM-50EG (manufactured by DDK-TOA CORPORATION).

- Composition of treatment liquid -

- TPGmME ··· 4.8% by mass (tripropylene glycol monomethyl ether)
- DEGmBE ··· 4.8% by mass (diethylene glycol monobutyl ether)
- Malonic acid ··· 9.0% by mass
- Malic acid ··· 8.0% by mass
- propanetricarboxylic acid ··· 2.5% by mass
- Aqueous solution containing 85% by mass of phosphoric acid ··· 6.0% by mass
- Water-soluble polymer 1 described above ··· 0.5% by mass
- Anti-foaming agent ··· 0.01% by mass as amount of silicone oil (manufactured by Momentive Performance Material Inc., TSA-739 (15%): emulsion type silicone anti-foaming agent)
- Benzotriazole ··· 1.0% by mass
- Ion exchange water ··· residual amount of 100% by mass in total

An image (parallax picture) corresponding to changing was printed on page described below by passing the paper through a raster image processor (RIP) (XMF, manufactured by Fujifilm Corporation) of Jet Press (registered trademark) 720 using the above-described device.

Here, the parallax picture means that two or more images are present under a lenticular lens sheet and different images are displayed depending on the viewpoint of an observer when observed through the lens sheet. Further, the lenticular lens sheet includes a lenticular lens layer on one surface side of a transparent resin substrate and a side opposite to the side provided with the lenticular lens layer of the transparent resin substrate is a flat surface. The image printed on the paper is bonded to the flat surface.

<Formation of parallax picture>

As a parallax picture, two images for display with the common background and different characters to be displayed; and an image having the common image formed of only the background common to the two images for display, for the purpose of preventing the two images for display appearing overlapping, are formed so as to match the lens pitch of the lenticular lens (lenticular sheet).

Specifically, as illustrated in Fig. 7, images were formed on a recording medium 500 such that an A image column 502 and a B image column 504 respectively corresponding to two images (images A and B), as images for display, with a common background and different characters; and a common image column 506 corresponding to a common image 506 with only the background common to the images A and B which was provided between the A image column 502 and the B image column 504 were disposed under each lens of a lenticular lens 510. Further, the width of each image column was set by equally dividing the pitch P of the lenticular lens 510 into 24 parts, equally dividing the A image column 502 constituting the A image into 5/12 parts (width a in Fig. 7), equally dividing the B image column 504 constituting the B image into 5/12 parts (width b in Fig. 7), equally dividing the common image column 506 between the A image column 502 and the B image column 504 into 1/12 parts (width c in Fig. 7), and printing was performed such that the common image column 506 divided into 1/12 equal parts was disposed between the A image column 502

and the B image column 504 which were adjacent to each other between lenses.

In a case where paper was made to pass through RIP of Jet Press (registered trademark) 720, small droplets were used on a low density side and the proportion of medium droplets was increased as the density became higher.

The following paper having a half-kikuban size (636 mm x 469 mm) was used as the paper.

1: OK Top Coat + (ream weight of 62.5 kg, manufactured by Oji Paper Co., Ltd.)
OK Top Coat + has a structure in which a coating layer is laminated on both surfaces of the base paper and the coating layer is a layer containing a pigment (calcium carbonate, kaolin clay, titanium oxide, or the like) and a binder (a butadiene resin, starch, or the like). The paper does not include a resin layer between the base paper and the coating layer.
2: VIFW115 (manufactured by YUPO CORPORATION)
3: KASSAI (registered trademark, manufactured by Fuji film Corporation, processed in half-kikuban)

A lenticular printed material was produced by superposing the flat surface of a lenticular sheet, prepared in advance, on paper on which an image was printed and adjusting the position such that the pitch of a lens of the lenticular sheet matched the pitch of the printed image to bond the image and the lens to each other.

[Evaluation]

The obtained lenticular printed material was evaluated based on the following evaluation.

<Image sharpness>

The image sharpness of the lenticular printed material was visually evaluated. The evaluation was based on the detail reproducibility of an image, and the sharpness was high as the details were reproduced. The following numerical value 1 or 2 is in an acceptable level.

1: The image sharpness is high.
2: The image sharpness is slightly inferior.
3: The image sharpness is poor.

<Image switching properties>

The image switching properties of the lenticular printed material were visually evaluated. Specifically, the degree at which two images to be switched depending on an angle seen at the time of image changing appeared to be overlapping was visually evaluated, and the image switching properties were considered to be excellent as the angle at which two images appeared to be overlapping was smaller. The following numerical value 1 or 2 is in an acceptable level.

1: The switching of images was excellent over the entire surface.
2: The switching of images was slightly inferior over the entire surface.
3: The switching of images was partially poor.
4: The switching of images was poor over the entire surface.

The results are listed in Table 1 below.

[Table 1]

| No. | Recording medium | Image sharpness | Image switching properties |
|---|---|---|---|
| Comparative Example 1 | OK Top Coat + | 1 | 3 |
| Example 1 | VIFW115 | 1 | 1 |
| Example 2 | KASSAI | 1 | 1 |

Since OK Top Coat + was deformed due to absorption of an ink in a case where an image was printed on OK Top Coat +, it was considered that, even in a case where the line of the image and the line of the lenticular sheet were adjusted in a certain portion, the image and the lenticular sheet were deviated from each other in other portions.

Meanwhile, in a case where an image was printed in VIFW115 or KASSAI, it was found that excellent image

switching properties were shown over the entire surface.

[Examples 3 and 4]

An image was formed using only medium droplets in Example 1. The results are listed in Table 2 below.

[Table 2]

| No. | Recording medium | Image sharpness | Image switching properties |
|---|---|---|---|
| Example 3 | VIFW115 | 2 | 2 |
| Example 4 | KASSAI | 2 | 2 |

[Comparative Example 2]

Printing was performed directly on the flat surface of the lenticular sheet using Jet Press (registered trademark) 720 in the same manner as in Example 1.

[Comparative Example 3]

Printing was performed on FEB110 (manufactured by YUPO CORPORATION) serving as a recording medium using Jet Press (registered trademark) 720 in the same manner as in Example 1.

[Example 5]

Printing was performed on REAL PROOF (registered trademark) G (manufactured by Fujifilm Corporation) serving as a recording medium using Jet Press (registered trademark) 720 in the same manner as in Example 1. The results are listed in Table 3 below.

[Table 3]

| No. | Recording medium | Image sharpness | Image switching properties | Remarks |
|---|---|---|---|---|
| Comparative Example 2 | Lenticular sheet | - | - | Ink was not able to be fixed |
| Comparative Example 3 | FEB110 | - | - | Ink was not able to be fixed |
| Example 5 | REAL PROOF G | 1 | 1 | |

In a case where an image was printed on the flat surface of the lenticular sheet or FEB110, the ink was not able to be fixed thereto. As the result, the evaluation of the lenticular printed material was not able to be performed.

It was considered that the aqueous ink was not able to be fixed since the surface of FEB 110 did not have a water-absorbing layer.

The disclosure of JP2015-094423 filed on May 1, 2015 is incorporated herein by reference.

All documents, patent applications, and technical standards described in the present specification are incorporated herein by reference to the same extent as a case of being specifically and individually noted that individual documents, patent applications, and technical standards are incorporated by reference.

## Claims

**1.** A method of producing a lenticular printed material comprising:

a step of forming a parallax picture, using a recording medium which includes a resin layer and a water-absorbing layer laminated on the resin layer, by applying aqueous ink which contains water and a colorant to the water-absorbing layer of the recording medium according to an ink jet system; and

a step of bonding a lenticular lens onto a side of the water-absorbing layer of the recording medium where the parallax picture is formed.

**2.** The method of producing a lenticular printed material according to claim 1, further comprising:

applying a treatment liquid which aggregates components in the aqueous ink to the water-absorbing layer of the recording medium before the aqueous ink is applied thereto.

**3.** The method of producing a lenticular printed material according to claim 1 or 2,

wherein the aqueous ink contains particles.

**4.** The method of producing a lenticular printed material according to any one of claims 1 to 3,

wherein the aqueous ink is applied during the step of forming the parallax picture under conditions of a resolution of 1200 dpi or greater and a minimum liquid droplet size of 3 pl or less according to the ink jet system.

**5.** The method of producing a lenticular printed material according to any one of claims 1 to 4,

wherein the water-absorbing layer is a layer having voids.

**6.** The method of producing a lenticular printed material according to any one of claims 1 to 5,

wherein the water-absorbing layer is a layer containing particles.

**7.** The method of producing a lenticular printed material according to any one of claims 1 to 6,

wherein the ink jet system is a single pass system.

**8.** A lenticular printed material which is produced by the method of producing a lenticular printed material according to any one of claims 1 to 7.

**9.** A lenticular printed material comprising:

a recording medium which includes a resin layer and a water-absorbing layer laminated on the resin layer and on which a parallax picture is formed by applying aqueous ink containing water and a colorant to the water-absorbing layer of the recording medium according to an ink jet system; and
a lenticular lens which is bonded onto a side of the water-absorbing layer of the recording medium where the parallax picture is formed.

**10.** The lenticular printed material according to claim 9,

wherein the water-absorbing layer is a layer having voids.

**11.** The lenticular printed material according to claim 9 or 10,

wherein the water-absorbing layer is a layer containing particles.

FIG. 1

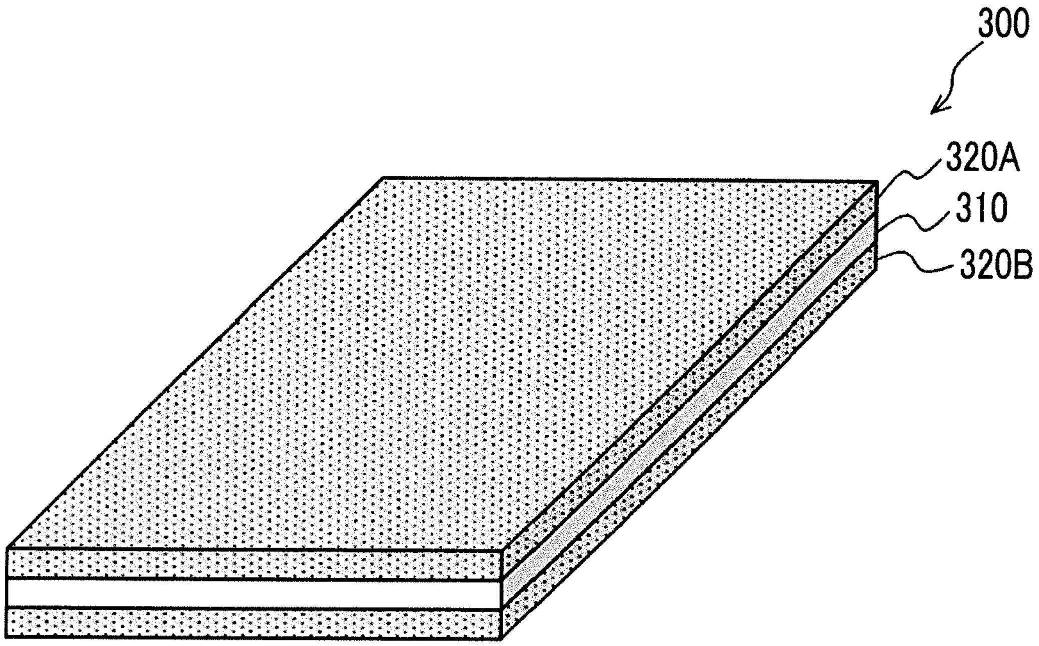


FIG. 2

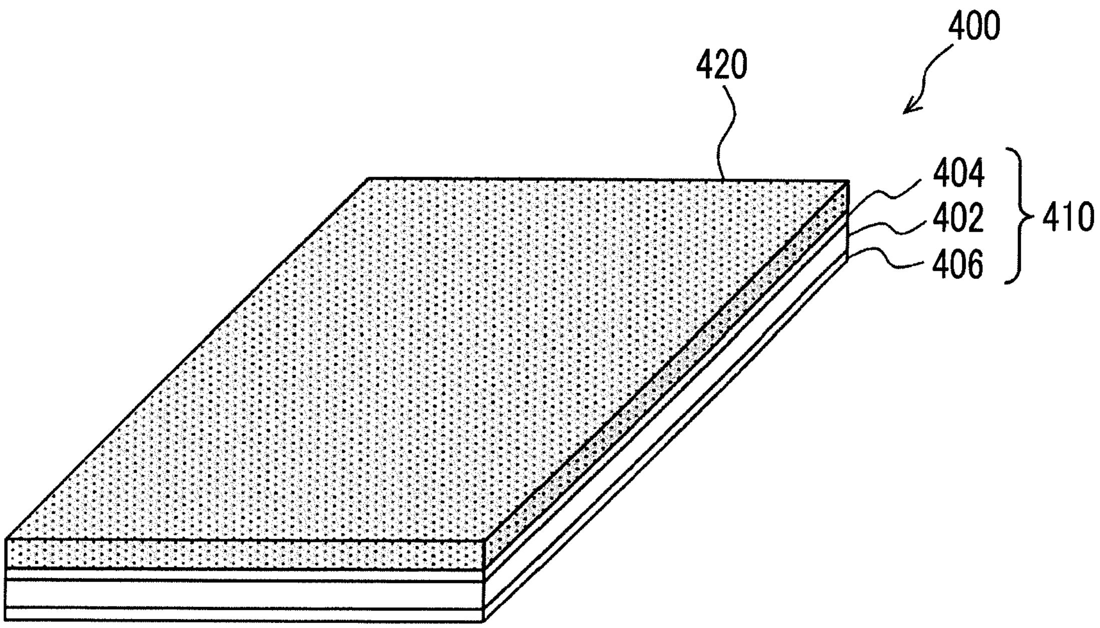

FIG. 3

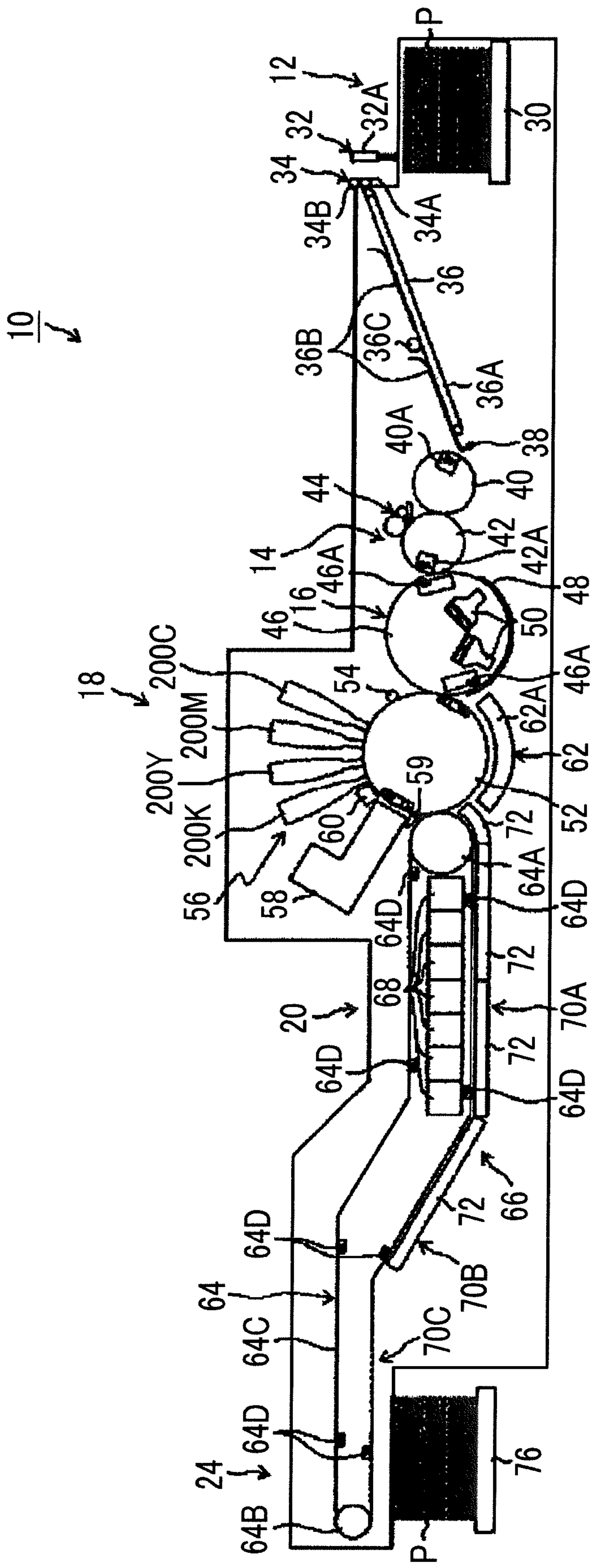
10
12
P
32
32A
30
34
34B
34A
36
36B
36C
36A
38
40A
40
44
42
42A
14
16
46
46A
48
50
18
200C
200M
200Y
200K
54
62A
62
59
60
52
72
56
58
64A
64D
68
20
70A
66
70B
64
64C
70C
24
64B
76

FIG. 4

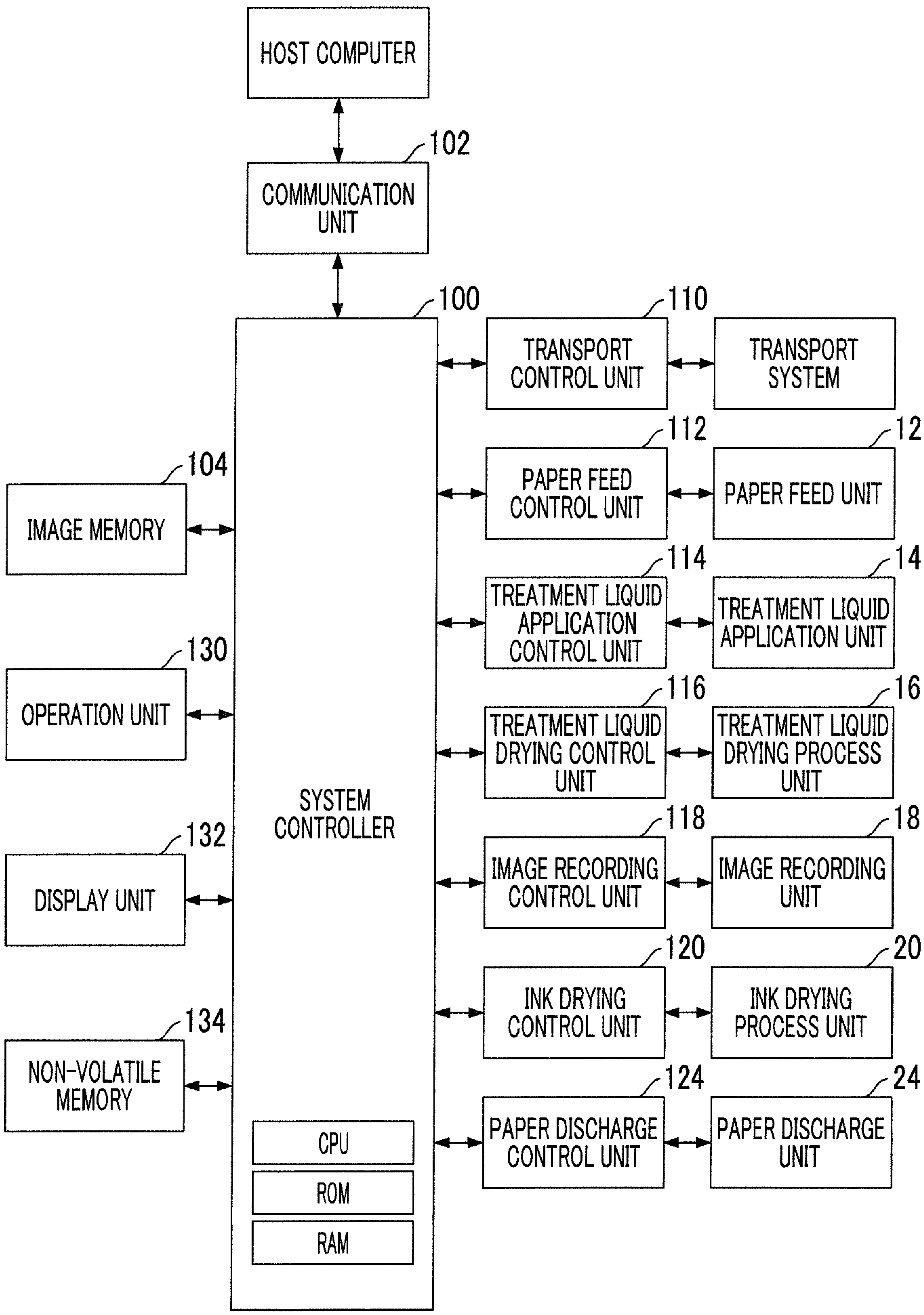
HOST COMPUTER
102
COMMUNICATION UNIT
100
SYSTEM CONTROLLER
CPU
ROM
RAM
104
IMAGE MEMORY
130
OPERATION UNIT
132
DISPLAY UNIT
134
NON-VOLATILE MEMORY
110
TRANSPORT CONTROL UNIT
TRANSPORT SYSTEM
112
PAPER FEED CONTROL UNIT
12
PAPER FEED UNIT
114
TREATMENT LIQUID APPLICATION CONTROL UNIT
14
TREATMENT LIQUID APPLICATION UNIT
116
TREATMENT LIQUID DRYING CONTROL UNIT
16
TREATMENT LIQUID DRYING PROCESS UNIT
118
IMAGE RECORDING CONTROL UNIT
18
IMAGE RECORDING UNIT
120
INK DRYING CONTROL UNIT
20
INK DRYING PROCESS UNIT
124
PAPER DISCHARGE CONTROL UNIT
24
PAPER DISCHARGE UNIT

FIG. 5

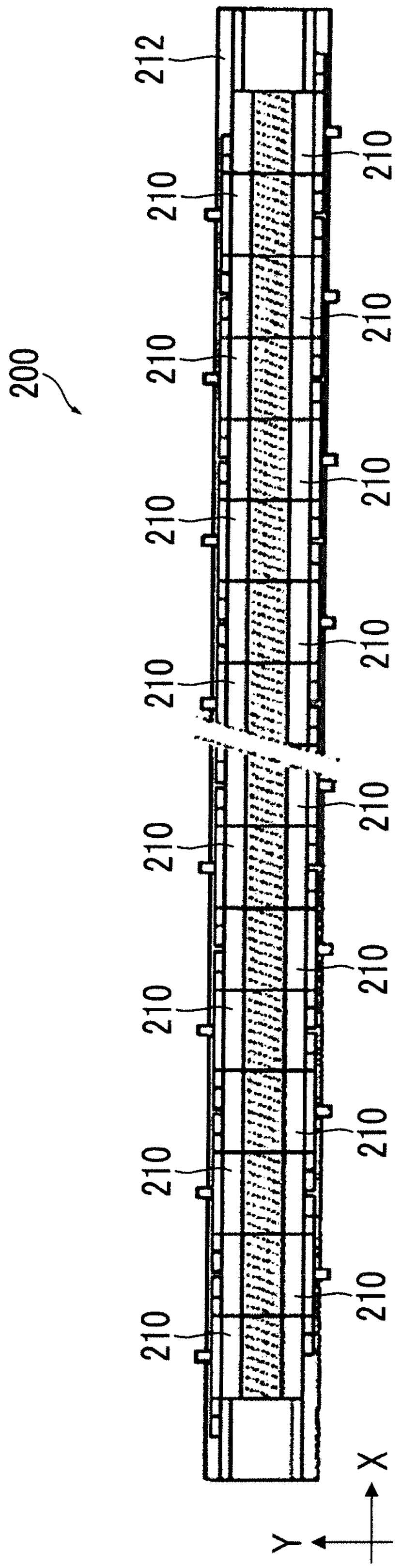

FIG. 6

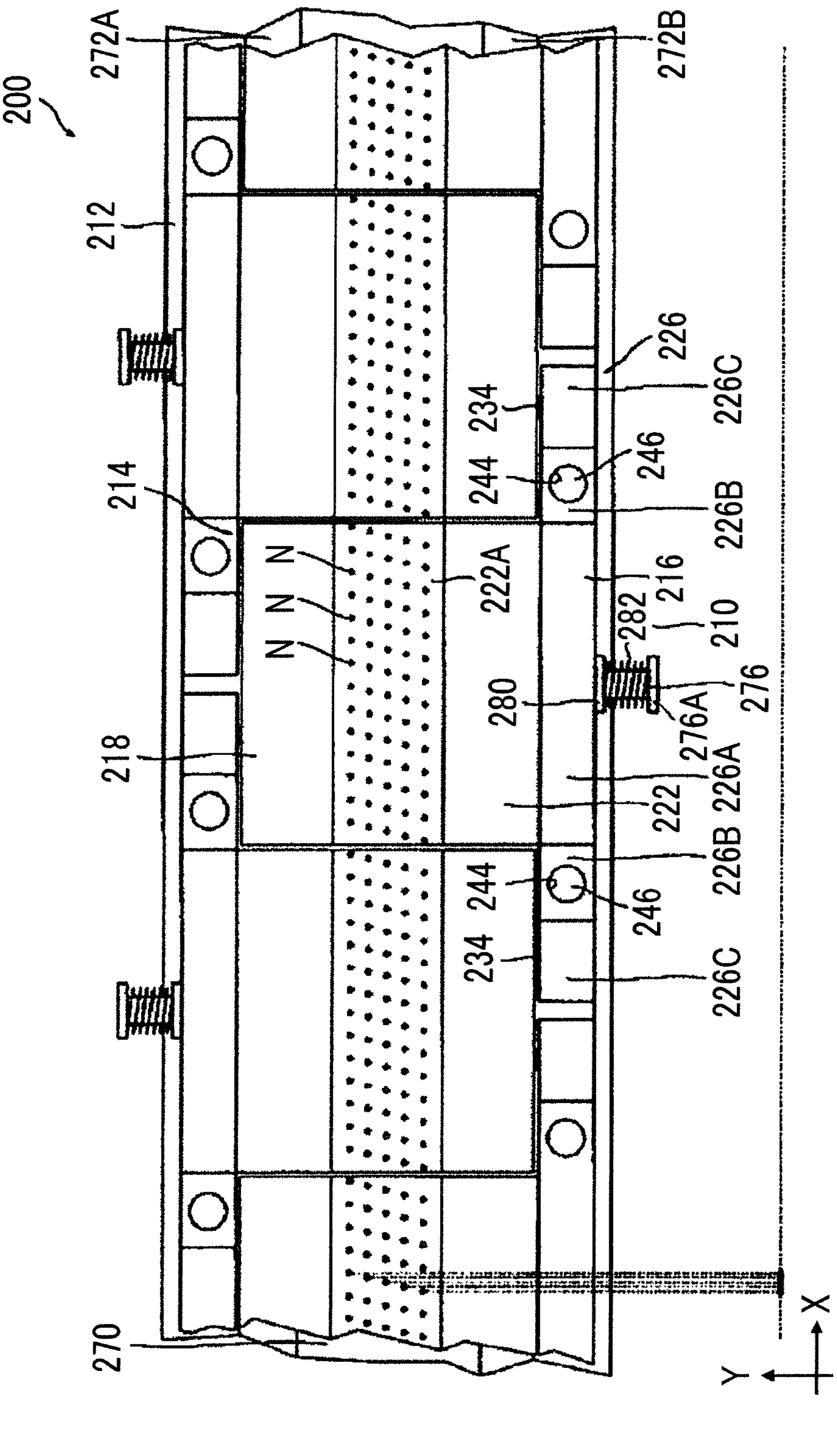
200
272A
212
214
218
270
272B
226
226C
234
246
244
226B
222A
216
282
210
276
280
276A
226A
222
226B
244
246
234
226C
N
N
N
X
Y

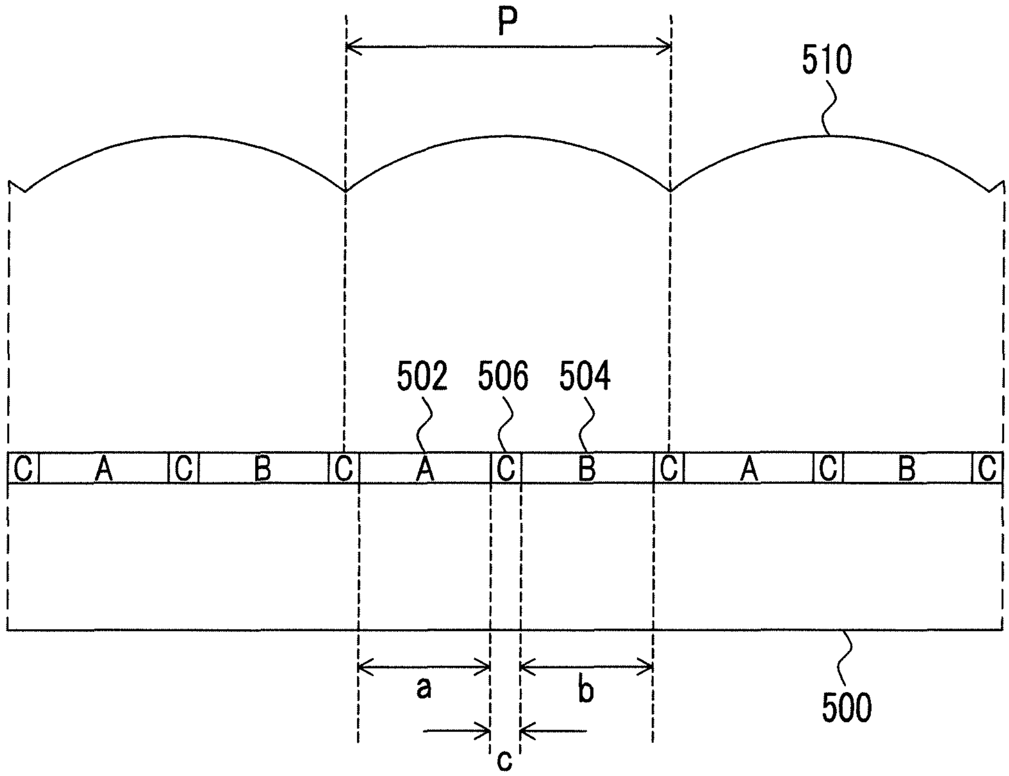
P
510
502
506
504
C
A
C
B
C
A
C
B
C
A
C
B
C
a
b
c
500

## INTERNATIONAL SEARCH REPORT

International application No.
PCT/JP2016/063286

A. CLASSIFICATION OF SUBJECT MATTER
*G03B35/00*(2006.01)i, *B41J2/01*(2006.01)i, *B41M5/00*(2006.01)i, *B41M5/50*(2006.01)i, *B41M5/52*(2006.01)i

According to International Patent Classification (IPC) or to both national classification and IPC

B. FIELDS SEARCHED

Minimum documentation searched (classification system followed by classification symbols)
G03B35/00, B41J2/01, B41M5/00, B41M5/50, B41M5/52

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2009-58967 A (Seiko Epson Corp.), 19 March 2009 (19.03.2009), paragraphs [0001], [0027] to [0043], [0067]; fig. 1 to 2 (Family: none) | 1,9<br>1-11 |
| Y | JP 2009-104154 A (Seiko Epson Corp.), 14 May 2009 (14.05.2009), claim 1; paragraphs [0008], [0143] (Family: none) | 1-11 |
| Y | JP 10-291361 A (Sony Corp.), 04 November 1998 (04.11.1998), paragraphs [0001], [0042] to [0046]; fig. 1 (Family: none) | 1-11 |

[X] Further documents are listed in the continuation of Box C. [ ] See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 July 2016 (08.07.16) | 19 July 2016 (19.07.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.
PCT/JP2016/063286

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2009-127132 A (Fujifilm Corp.), 11 June 2009 (11.06.2009), paragraphs [0013], [0071] to [0075], [0102] to [0105], [0109], [0118]; fig. 1 (Family: none) | 1-11 |
| Y | JP 2002-370347 A (Konica Corp.), 24 December 2002 (24.12.2002), paragraphs [0032] to [0054], [0085] to [0101] (Family: none) | 5-8,10-11 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010237318 A
- JP 2009058967 A
- JP 10081064 A
- JP H1081064 A
- JP 10119423 A
- JP H10119423 A
- JP 10157277 A
- JP H10157277 A
- JP 10217601 A
- JP H10217601 A
- JP 11348409 A
- JP H11348409 A
- JP 2001138621 A
- JP 2000043401 A
- JP 2000211235 A
- JP 2000309157 A
- JP 2001096897 A
- JP 2001138627 A
- JP 11091242 A
- JP H1191242 A
- JP 8002087 A
- JP H082087 A
- JP 8002090 A
- JP H082090 A
- JP 8002091 A
- JP H082091 A
- JP 8002093 A
- JP H082093 A
- JP 8174992 A
- JP H08174992 A
- JP 11192777 A
- JP H11192777 A
- JP 2001301314 A
- JP 4052786 B
- JP H0452786 B
- JP 5067432 B
- JP H0567432 B
- JP 7029479 B
- JP H0729479 B
- JP 2537827 B
- JP 7057553 B
- JP H0757553 A
- JP 2502998 B
- JP 3053231 B
- JP 63176173 A
- JP S63176173 A
- JP 2604367 B
- JP 7276787 A
- JP H07276787 A
- JP 9207425 A
- JP H09207425 A
- JP 11058941 A
- JP H1158941 A
- JP 2000135858 A
- JP 2001205924 A
- JP 2001287444 A
- JP 62278080 A
- JP S62278080 A
- JP 9039373 A
- JP H0939373 A
- JP 2750433 B
- JP 2000158801 A
- JP 2001213045 A
- JP 2001328345 A
- JP 8324105 A
- JP H08324105 A
- JP 11348417 A
- JP H11348417 A
- US 3017280 A
- US 29833611 A
- US 3100704 A
- JP 62245258 A
- JP S62245258 A
- JP 19871316648 A
- JP S621316648 A
- JP 62110066 A
- JP S62110066 A
- JP 2011178029 A
- JP 2005041994 A
- JP 2006273891 A
- JP 2009084494 A
- JP 2009191134 A
- JP 2012162655 A
- JP 2013047311 A
- JP 2011042150 A
- JP 2011046872 A
- JP 2013018846 A
- JP 2011088323 A
- JP 2010064480 A
- JP 2011068085 A
- JP 2001247787 A
- JP 2013227498 A
- JP 2011202117 A
- JP 2013001854 A
- JP 2006091780 A
- JP 2011184628 A
- JP 2011178896 A
- JP 2015025076 A

- JP 59157636 A
- JP S59157636 A
- JP 2003322926 A
- JP 2004325707 A
- JP 2004309806 A
- JP 54059936 A
- JP S5459936 A
- JP 2015094423 A

**Non-patent literature cited in the description**


- **J. BRANDRUP ; E. H. IMMERGUT.** Polymer Handbook. Wiley-Interscience, 1989